(19) Europäisches Patentamt
European Patent Office
Office européen des brevets

(11) **EP 4 004 275 B1**

(12) **FASCICULE DE BREVET EUROPEEN**

(45) Date de publication et mention
de la délivrance du brevet:
**30.08.2023 Bulletin 2023/35**

(21) Numéro de dépôt: **20757632.3**

(22) Date de dépôt: **22.07.2020**

(51) Classification Internationale des Brevets (IPC):
**D07B 3/00** *(2006.01)*    **D07B 7/02** *(2006.01)*
**D07B 1/06** *(2006.01)*

(52) Classification Coopérative des Brevets (CPC):
**D07B 1/0646;** D07B 3/00; D07B 7/025;
D07B 2201/2007; D07B 2201/2021;
D07B 2201/2022; D07B 2207/204;
D07B 2207/4018; D07B 2207/4072;
D07B 2401/201; D07B 2501/2046

(86) Numéro de dépôt international:
**PCT/FR2020/051334**

(87) Numéro de publication internationale:
**WO 2021/014096 (28.01.2021 Gazette 2021/04)**

(54) **CABLE OUVERT RENFORCANT A HAUTE COMPRESSIBILITE**

HOCHKOMPRIMIERBARES OFFENES VERSTÄRKUNGSSEIL

HIGHLY COMPRESSIBLE OPEN REINFORCING CORD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **25.07.2019 FR 1908425**

(43) Date de publication de la demande:
**01.06.2022 Bulletin 2022/22**

(73) Titulaire: **COMPAGNIE GENERALE DES
ETABLISSEMENTS MICHELIN
63000 Clermont-Ferrand (FR)**

(72) Inventeurs:
• **BARGUET, Henri
63040 Clermont-Ferrand Cedex 9 (FR)**

• **REIX, Olivier
63040 Clermont-Ferrand Cedex 9 (FR)**
• **PATAUT, Gaël
63040 Clermont-Ferrand Cedex 9 (FR)**

(74) Mandataire: **Louret, Sylvain
M.F.P. MICHELIN
Service juridique - Propriété Intellectuelle
DCJ/PI - F35 - Site de Ladoux
23, place des Carmes - Déchaux
63040 Clermont-Ferrand Cedex 9 (FR)**

(56) Documents cités:
**EP-A1- 2 845 620       EP-A1- 3 165 670
WO-A1-2016/083265   WO-A1-2016/189073
WO-A1-2020/021006   WO-A1-2020/021007**

EP 4 004 275 B1

**Description**

La présente invention est relative aux câbles métalliques utilisables pour le renforcement d'articles tels que des pneumatiques pour véhicules. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

On connait de l'état de la technique un câble métallique comprenant une unique couche de N=5 éléments filaires métalliques enroulés en hélice. Chaque élément filaire métallique est constitué d'un monofilament en acier et présente un diamètre égal à 0,38 mm. Chaque élément filaire métallique est enroulé à un pas P=6,7 mm et est, préalablement à l'étape d'assemblage final en hélice des éléments filaires métalliques, individuellement préformé. Les éléments filaires métalliques définissent une voûte interne du câble. La préformation et la voûte interne procurent au câble, une fois assemblé, une aération relativement importante, autrement dit, un espace entre chaque paire d'éléments filaires métalliques adjacents relativement grand. Une telle aération engendre un allongement structural As du câble égal à 2,3 %. Un tel câble est notamment destiné à être utilisé dans des pneumatiques, par exemple des pneumatiques pour véhicule de type poids-lourds.

En plus de nécessiter une étape de préformation individuelle des éléments filaires métalliques, ce câble de l'état de la technique présente une compressibilité longitudinale relativement faible, c'est-à-dire que le câble flambe sous une déformation de compression longitudinale relativement faible. Un tel flambement se traduit par une flexion locale du câble, d'une part, faisant chuter la rigidité en compression du câble et, d'autre part, conduisant à un risque d'endommagement des éléments filaires métalliques sous les effets de cyclage que subissent par exemple les pneumatiques.

Un autre exemple de câble métallique comprenant une unique couche d'éléments filaires métalliques enroulés en hélice est décrit dans WO2016/166056. Dans WO2016/166056, un câble 3.26 comprend une unique couche de N=3 éléments filaires métalliques enroulés en hélice, chaque élément filaire métallique étant constitué d'un monofilament en acier et présente un diamètre égal à 0,26 mm. Tout comme le câble 5.38 décrit précédemment, le câble 3.26 de WO2016/166056 présente une compressibilité longitudinale relativement faible.

L'invention a pour but de proposer des câbles comprenant une unique couche de N éléments filaires métalliques enroulés en hélice et présentant une excellente compressibilité longitudinale, un diamètre relativement faible par rapport aux diamètres des éléments filaires métalliques le constituant et une capacité de renforcement la plus élevée possible.

## CABLE SELON L'INVENTION

A cet effet, l'invention a pour objet, un câble comprenant une unique couche constituée de N éléments filaires métalliques enroulés en hélice et présentant un diamètre externe D, chaque élément filaire métallique de la couche décrivant, lorsque le câble s'étend selon une direction sensiblement rectiligne, une trajectoire en forme d'hélice autour d'un axe principal sensiblement parallèle à la direction sensiblement rectiligne, de sorte que, dans un plan de coupe sensiblement perpendiculaire à l'axe principal, la distance entre le centre de chaque élément filaire métallique de la couche et l'axe principal est égale à la moitié du diamètre d'hélice Dh et est sensiblement constante et égale pour tous les éléments filaires métalliques de la couche, les éléments filaires métalliques définissant une voûte interne du câble de diamètre Dv, chaque élément filaire métallique présentant un diamètre Df et un rayon de courbure d'hélice Rf, câble dans lequel Dh, D, Dv, Df et Rf étant exprimés en millimètres :

$$0,10 \leq Jr \leq 0,25$$

$$9 \leq Rf / Df \leq 30,$$

et

$$1,60 \leq Dv / Df \leq 3,20$$

avec Jr=N/($\pi$*(D-Df)) x (Dh x Sin($\pi$/N) - (Df / Cos($\alpha$ x $\pi$/180))) et $\alpha$ étant l'angle d'hélice, exprimé en degrés, de chaque élément filaire métallique.

Le câble selon l'invention présente, comme le démontre les essais comparatifs décrits ci-dessous, une excellente compressibilité longitudinale et, toutes choses étant égales par ailleurs, un diamètre relativement faible pour une capacité de renforcement la plus élevée possible.

D'une part, les inventeurs à l'origine de l'invention émettent l'hypothèse que, du fait d'un rayon de courbure Rf suffisamment élevé par rapport au diamètre Df de chaque élément filaire métallique, le câble est suffisamment aéré, réduisant ainsi le risque de flambement, du fait de l'éloignement relativement important de chaque élément filaire métallique de l'axe longitudinal du câble, éloignement permettant aux éléments filaires métalliques une accommodation, de par leur hélice, des déformations de compression longitudinale relativement élevées. Au contraire, le rayon de courbure Rf de chaque élément filaire métallique du câble de l'état de la technique étant relativement faible par rapport au diamètre Df, les éléments filaires métalliques sont plus proches de l'axe longitudinal du câble et peuvent accommoder, de par leur hélice, des déformations de compression longitudinale bien moindres que le câble selon l'invention.

D'autre part, pour un rayon de courbure Rf de chaque élément filaire métallique trop élevé, le câble selon l'invention présenterait une rigidité longitudinale en compression insuffisante pour assurer un rôle de renforcement, par exemple de pneumatiques.

De plus, pour un diamètre Dv de voûte interne trop élevé, le câble présenterait, relativement au diamètre des éléments filaires métalliques, un diamètre trop élevé. A l'inverse, pour un diamètre Dv de voûte interne trop faible, le câble présenterait trop peu d'espace entre les éléments filaires métalliques pour que ces derniers puissent accommoder des déformations de compression longitudinale relativement élevées sans flamber.

Enfin, le jeu radial relatif Jr est représentatif de la distance séparant chaque paire d'éléments filaires métalliques adjacents ramenée à la longueur disponible pour positionner les éléments filaires métalliques sur la couche. Ainsi, plus Jr est élevé, plus l'espace séparant deux éléments filaires métalliques adjacents est élevé par rapport au nombre maximal d'éléments filaires métalliques que la couche pourrait accueillir. A l'inverse, plus Jr est petit, plus l'espace séparant deux éléments filaires métalliques adjacents est petit par rapport au nombre maximal d'éléments filaires métalliques que la couche pourrait accueillir. Dans l'intervalle selon l'invention, Jr permet de maximiser le nombre d'éléments filaires métalliques présents sur la couche et donc la capacité de renforcement du câble sans toutefois détériorer la capacité d'accommodation des déformations de compression longitudinale.

En outre, on notera que par rapport à des câbles présentant un jeu radial relatif Jr supérieur à 0,25, les câbles selon l'invention permettent d'obtenir des modules élastiques en extension plus importants. En effet, le jeu radial relatif réduit entraine, sous l'effet d'une sollicitation en extension du câble, un rapprochement et un contact rapide des éléments filaires adjacents. Ainsi, les câbles selon l'invention présentent une compressibilité longitudinale comparable voire supérieure à des câbles comprenant une unique couche d'éléments filaires métalliques de l'état de la technique tout en présentant un module élastique en extension comparable à des câbles dits inextensibles, comprenant par exemple deux couches d'éléments filaires enroulés en hélice l'une autour de l'autre.

Les valeurs des caractéristiques Dh, D, Df, Dv, Rf et $\alpha$ ainsi que des autres caractéristiques décrites ci-dessous sont mesurées sur ou déterminées à partir des câbles soit directement après fabrication, c'est-à-dire avant toute étape de noyage dans une matrice élastomérique, soit extrait d'une matrice élastomérique, par exemple d'un pneumatique, et ayant alors subit une étape de nettoyage durant laquelle on retire du câble toute matrice élastomérique, notamment tout matériau présent à l'intérieur du câble. Pour garantir un état d'origine, l'interface adhésive entre chaque élément filaire métallique et la matrice élastomérique doit être supprimée, par exemple par procédé électrochimique dans un bain de carbonate de sodium. Les effets associés à l'étape de conformation du procédé de fabrication du pneumatique décrits ci-dessous, notamment l'allongement des câbles, sont annulés par l'extraction de la nappe et du câble qui reprennent, lors de l'extraction, sensiblement leurs caractéristiques d'avant l'étape de conformation.

Le câble selon l'invention comprend une unique couche d'éléments filaires métalliques enroulés en hélice. En d'autres termes, le câble selon l'invention comprend une seule, pas deux, ni plus de deux couches d'éléments filaires métalliques enroulés en hélice. La couche est constituée d'éléments filaires métalliques, c'est-à-dire plusieurs éléments filaires métalliques, pas d'un seul élément filaire métallique. Dans un mode de réalisation du câble, par exemple lorsque le câble est issu de son procédé de fabrication, le câble selon l'invention est constitué de la couche d'éléments filaires métalliques enroulés, autrement dit le câble ne comprend pas d'autre élément filaire métallique que ceux de la couche.

Le câble selon l'invention est à simple hélice. Par définition, un câble à simple hélice est un câble dans lequel l'axe de chaque élément filaire métallique de la couche décrit une unique hélice, contrairement à un câble à double hélice dans lequel l'axe de chaque élément filaire métallique décrit une première hélice autour de l'axe du câble et une deuxième hélice autour d'une hélice décrite par l'axe du câble. En d'autres termes, lorsque le câble s'étend selon une direction sensiblement rectiligne, le câble comprend une unique couche d'éléments filaires métallique enroulés ensemble en hélice, chaque élément filaire métallique de la couche décrivant une trajectoire en forme d'hélice autour d'un axe principal sensiblement parallèle à la direction sensiblement rectiligne de sorte que, dans un plan de coupe sensiblement perpendiculaire à l'axe principal, la distance entre le centre de chaque élément filaire métallique de la couche et l'axe principal soit sensiblement constante et égale pour tous les éléments filaires métalliques de la couche. Au contraire, lorsqu'un câble à double hélice s'étend selon une direction sensiblement rectiligne, la distance entre le centre de chaque élément filaire métallique de la couche et la direction sensiblement rectiligne est différente pour tous les éléments filaires métalliques de la couche.

Le câble selon l'invention est dépourvu d'âme centrale métallique. On parle également de câble de structure 1xN ou bien encore de câble à structure ouverte (« open-cord » en anglais). Dans le câble selon l'invention défini ci-dessus, la voûte interne est vide et donc dépourvue de tout matériau de remplissage, notamment dépourvue de toute composition élastomérique. On parle alors d'un câble dépourvu de matériau de remplissage.

La voûte du câble selon l'invention est délimitée par les éléments filaires métalliques et correspond au volume délimité par un cercle théorique, d'une part, radialement intérieur à chaque élément filaire métallique et, d'autre part, tangent à chaque élément filaire métallique. Le diamètre de ce cercle théorique est égal au diamètre de voûte Dv.

Par élément filaire, on entend un élément s'étendant longitudinalement selon un axe principal et présentant une section perpendiculaire à l'axe principal dont la plus grande dimension G est relativement faible par rapport à la dimension L selon l'axe principal. Par relativement faible, on entend que L/G est supérieur ou égal à 100, de préférence supérieur ou égal à 1000. Cette définition couvre aussi bien les éléments filaires de section circulaire que les éléments filaires de section non circulaire, par exemple de section polygonale ou oblongue. De façon très préférée, chaque élément filaire métallique présente une section circulaire.

Par métallique, on entend par définition un élément filaire constitué majoritairement (c'est-à-dire pour plus de 50% de sa masse) ou intégralement (pour 100% de sa masse) d'un matériau métallique. Chaque élément filaire métallique est préférentiellement en acier, plus préférentiellement en acier perlitique ou ferrito-perlitique au carbone, appelé couramment par l'homme du métier acier au carbone, ou encore en acier inoxydable (par définition, acier comportant au moins 10,5% de chrome).

L'allongement structural As, grandeur bien connue de l'homme du métier, est déterminé par exemple en appliquant la norme ASTM D2969-04 de 2014 à un câble testé de façon à obtenir une courbe force-allongement. On déduit l'As sur la courbe obtenue comme l'allongement, en %, correspondant à la projection sur l'axe des allongement de l'intersection entre la tangente à la partie structurale de la courbe force-allongement et la tangente à la partie élastique de la courbe force-allongement. Pour rappel, une courbe force allongement comprend, en se déplaçant vers les allongements croissants, une partie structurale, une partie élastique et une partie plastique. La partie structurale correspond à un allongement structural du câble résultant du rapprochement des différents éléments filaires métalliques constituants le câble. Dans certains modes de réalisation, la couche des N éléments filaires métalliques se déstructure à l'issue de la partie structurale, du fait du jeu radial relatif Jr relativement faible, occasionnant une hausse ponctuelle du module du câble. La partie élastique correspond à un allongement élastique résultant de la construction du câble, notamment des angles des différentes couches et des diamètres des fils. La partie plastique correspond à l'allongement plastique résultant de la plasticité (déformation irréversible au-delà de la limite d'élasticité) d'un ou plusieurs éléments filaires métalliques.

L'angle d'hélice $\alpha$ est une grandeur bien connue de l'homme du métier et peut être déterminé par le calcul itératif suivant comprenant 3 itérations et dans lequel l'indice i indique le numéro de l'itération 1, 2 ou 3. Connaissant l'allongement structural As exprimé en %, l'angle d'hélice $\alpha(i)$ est tel que $\alpha(i)=\text{Arcos}[(100/(100+As) \times \text{Cos}[\text{Arctan}((\pi \times Df)/(P \times \text{Cos}(\alpha(i-1)) \times \text{Sin}(\pi/N))]]$, formule dans laquelle P est le pas exprimé en millimètres auquel chaque élément filaire métallique est enroulé, N est le nombre d'éléments filaires métalliques de la couche, Df est le diamètre de chaque élément filaire métallique exprimé en millimètres, Arcos, Cos et Arctan et Sin désignant respectivement les fonctions arcosinus, cosinus, arctangente et sinus. Pour la première itération, c'est-à-dire pour le calcul de $\alpha(1)$, on prend $\alpha(0)=0$. A la troisième itération, on obtient $\alpha(3)=\alpha$ avec au moins un chiffre significatif après la virgule quand $\alpha$ est exprimé en degrés.

Le diamètre d'hélice Dh, exprimé en millimètres, est calculé selon la relation $Dh=P \times \text{Tan}(\alpha)/\pi$ dans laquelle P est le pas exprimé en millimètres auquel chaque élément filaire métallique est enroulé, $\alpha$ est l'angle d'hélice de chaque élément filaire métallique déterminé ci-dessus et Tan la fonction tangente. Le diamètre d'hélice Dh correspond au diamètre du cercle théorique passant par les centres des éléments filaires métalliques de la couche dans un plan perpendiculaire à l'axe du câble.

Le diamètre de voûte Dv, exprimé en millimètres, est calculé selon la relation $Dv=Dh-Df$ dans laquelle Df est le diamètre de chaque élément filaire métallique et Dh le diamètre d'hélice, tous deux exprimés en millimètres.

Le rayon de courbure Rf, exprimé en millimètres, est calculé selon la relation $Rf=P/(\pi \times \text{Sin}(2\alpha))$ dans laquelle P est le pas exprimé en millimètres de chaque élément filaire métallique, $\alpha$ est l'angle d'hélice de chaque élément filaire métallique et Sin la fonction sinus.

Le diamètre ou diamètre apparent, noté D, est mesuré au moyen d'un comparateur d'épaisseur dont le diamètre des touches est au moins égal à 1,5 fois le pas P d'enroulage des éléments filaires (on peut citer par exemple le modèle JD50 de la marque KAEFER permettant d'atteindre une précision de 1/100 de millimètre, équipé de touche type a, et ayant une pression de contact proche de 0,6N). Le protocole de mesure consiste en trois répétitions d'une série de trois mesures (effectuées perpendiculairement à l'axe du câble et sous tension nulle) dont la seconde et la troisième de ces mesures sont réalisées selon une direction décalée angulairement de la précédente d'un tiers de tour, par la rotation de la direction de mesure autour de l'axe du câble.

On rappelle que le pas auquel chaque élément filaire métallique est enroulé est la longueur parcourue par cet élément filaire, mesurée parallèlement à l'axe du câble dans lequel il se trouve, au bout de laquelle l'élément filaire ayant ce pas effectue un tour complet autour dudit axe du câble.

Les caractéristiques optionnelles décrites ci-dessous pourront être combinées les unes avec les autres dans la mesure où de telles combinaisons sont techniquement compatibles.

Dans un mode de réalisation avantageux, tous les éléments filaires métalliques présentent le même diamètre Df.

Tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Par coupe radiale ou section radiale on entend ici une coupe ou une section selon un plan qui comporte l'axe de rotation du pneumatique.

Par direction axiale, on entend la direction sensiblement parallèle à l'axe de rotation du pneumatique.

Par direction circonférentielle, on entend la direction qui est sensiblement perpendiculaire à la fois à la direction axiale et à un rayon du pneumatique (en d'autres termes, tangente à un cercle dont le centre est sur l'axe de rotation du pneumatique).

Par direction radiale, on entend la direction selon un rayon du pneumatique, c'est-à-dire une direction quelconque intersectant l'axe de rotation du pneumatique et sensiblement perpendiculairement à cet axe.

Le plan médian (noté M) est le plan perpendiculaire à l'axe de rotation du pneumatique qui est situé à mi-distance des deux bourrelets et passe par le milieu de l'armature de sommet.

Le plan circonférentiel équatorial (noté E) du pneumatique est le plan théorique passant par l'équateur du pneumatique, perpendiculaire au plan médian et à la direction radiale. L'équateur du pneumatique est, dans un plan de coupe circonférentielle (plan perpendiculaire à la direction circonférentielle et parallèle aux directions radiale et axiales), l'axe parallèle à l'axe de rotation du pneumatique et situé à équidistance entre le point radialement le plus externe de la bande de roulement destiné à être au contact avec le sol et le point radialement le plus interne du pneumatique destiné à être en contact avec un support, par exemple une jante, la distance entre ces deux points étant égale à H.

Par orientation d'un angle, on entend le sens, horaire ou anti-horaire, dans lequel il faut tourner à partir d'une droite de référence, ici la direction circonférentielle du pneumatique, définissant l'angle pour atteindre l'autre droite définissant l'angle.

Dans des modes de réalisation préférés, $0{,}14 \leq Jr \leq 0{,}25$.

Dans des modes de réalisation préférés, $9 \leq Rf / Df \leq 25$, de préférence $9 \leq Rf / Df \leq 22$.

Dans un mode de réalisation d'un câble destiné au renforcement d'un pneumatique pour véhicules de tourisme, mais également pour des véhicules deux-roues tels que des motos, et préférentiellement pour véhicules de tourisme, on a $12 \leq Rf/Df \leq 30$, de préférence $12 \leq Rf/Df \leq 25$ et plus préférentiellement $12 \leq Rf/Df \leq 22$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $9 \leq Rf/Df \leq 15$.

Dans des modes de réalisation préférés, $1{,}70 \leq Dv/Df \leq 3{,}20$, de préférence $1{,}70 \leq Dv/Df \leq 3{,}05$.

Dans un mode de réalisation d'un câble destiné au renforcement d'un pneumatique pour véhicules de tourisme, mais également pour des véhicules deux-roues tels que des motos, et préférentiellement pour véhicules de tourisme, on a $1{,}70 \leq Dv/Df \leq 3{,}20$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $1{,}70 \leq Dv/Df \leq 2{,}50$.

Avantageusement, le rayon de courbure d'hélice Rf est tel que $4{,}10 \text{ mm} \leq Rf \leq 5{,}30 \text{ mm}$.

Dans un mode de réalisation d'un câble destiné au renforcement d'un pneumatique pour véhicules de tourisme, mais également pour des véhicules deux-roues tels que des motos, et préférentiellement pour véhicules de tourisme, on a $4{,}10 \text{ mm} \leq Rf \leq 4{,}25 \text{ mm}$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a $4{,}10 \text{ mm} \leq Rf \leq 5{,}30 \text{ mm}$.

Avantageusement, le diamètre d'hélice Dh de chaque élément filaire métallique est tel que $0{,}70 \text{ mm} \leq Dh \leq 1{,}60 \text{ mm}$, de préférence $0{,}75 \text{ mm} \leq Dh \leq 1{,}60 \text{ mm}$ et plus préférentiellement $0{,}80 \text{ mm} \leq Dh \leq 1{,}60 \text{ mm}$.

Dans un mode de réalisation d'un câble destiné au renforcement d'un pneumatique pour véhicules de tourisme, mais également pour des véhicules deux-roues tels que des motos, et préférentiellement pour véhicules de tourisme, on a $0{,}70 \text{ mm} \leq Dh \leq 0{,}90 \text{ mm}$, de préférence $0{,}75 \text{ mm} \leq Dh \leq 0{,}90 \text{ mm}$ et plus préférentiellement $0{,}80 \text{ mm} \leq Dh \leq 0{,}90 \text{ mm}$.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a on a $0{,}85 \text{ mm} \leq Dh \leq 1{,}60 \text{ mm}$, de préférence $1{,}15 \text{ mm} \leq Dh \leq 1{,}60 \text{ mm}$ et plus préférentiellement $1{,}20 \text{ mm} \leq Dh \leq 1{,}60 \text{ mm}$.

Avantageusement, Df est tel que $0{,}10 \text{ mm} \leq Df \leq 0{,}50 \text{ mm}$, de préférence $0{,}15 \text{ mm} \leq Df \leq 0{,}50 \text{ mm}$ et plus

préférentiellement 0,15 mm $\leq$ Df $\leq$ 0,45 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,15 mm $\leq$ Df $\leq$ 0,35 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,22 mm $\leq$ Df $\leq$ 0,50 mm, de préférence 0,22 mm $\leq$ Df $\leq$ 0,45 mm et plus préférentiellement 0,30 mm $\leq$ Df $\leq$ 0,45 mm.

Avantageusement, Dv est tel que Dv $\geq$ 0,50 mm et plus préférentiellement 0,50 mm $\leq$ Dv $\leq$ 1,20 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,50 mm $\leq$ Dv $\leq$ 0,70 mm et de préférence 0,50 mm $\leq$ Dv $\leq$ 0,65 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 0,50 mm $\leq$ Dv $\leq$ 1,20 mm et plus préférentiellement 0,65 mm $\leq$ Dv $\leq$ 1,20 mm.

Avantageusement, chaque élément filaire métallique est enroulé à un pas P tel que 3 mm $\leq$ P $\leq$ 15 mm, de préférence 5 mm $\leq$ P $\leq$ 13 mm et plus préférentiellement 7 mm $\leq$ P $\leq$ 11 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 7 mm $\leq$ P $\leq$ 8,5 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 7,5 mm $\leq$ P $\leq$ 11 mm.

Avantageusement, D est tel que D $\leq$ 2,10 mm, de préférence 0,90 mm $\leq$ D $\leq$ 2,10 mm, 0,95 mm $\leq$ D $\leq$ 2,05 mm.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 0,95 mm $\leq$ D $\leq$ 1,20 mm.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 1,15 mm $\leq$ D $\leq$ 2,10 mm, de préférence 1,15 mm $\leq$ D $\leq$ 2,05 mm.

Dans un mode de réalisation, chaque élément filaire métallique comprend un unique monofilament métallique. Ici, chaque élément filaire métallique est avantageusement constitué d'un monofilament métallique. Dans une variante de ce mode de réalisation, le monofilament métallique est directement revêtu d'une couche d'un revêtement métallique comprenant du cuivre, du zinc, de l'étain, du cobalt ou un alliage de ces métaux, par exemple le laiton ou le bronze. Dans cette variante, chaque élément filaire métallique est alors constitué du monofilament métallique, par exemple en acier, formant une âme, directement revêtu de la couche de revêtement métallique.

Dans ce mode de réalisation, chaque monofilament élémentaire métallique est, comme décrit ci-dessus, de préférence en acier, et présente une résistance mécanique allant de 1000 MPa à 5000 MPa. De telles résistances mécaniques correspondent aux grades d'acier couramment rencontrés dans le domaine du pneumatique, à savoir, les grades NT (Normal Tensile), HT (High Tensile), ST (Super Tensile), SHT (Super High Tensile), UT (Ultra Tensile), UHT (Ultra High Tensile) et MT (Mega Tensile), l'utilisation de résistances mécaniques élevées permettant éventuellement un renforcement amélioré de la matrice dans laquelle le câble est destiné à être noyé et un allègement de la matrice ainsi renforcée.

Avantageusement, la couche étant constituée de N éléments filaire métalliques enroulés en hélice, N va de 3 à 18, de préférence de 5 à 12 et plus préférentiellement de 6 à 9.

Avantageusement, le rapport K du pas P sur le diamètre Df de chaque élément filaire métallique, P et Df étant exprimés en millimètres, est tel que 19 $\leq$ K $\leq$ 44, de préférence 20 $\leq$ K $\leq$ 40 et plus préférentiellement 23 $\leq$ K $\leq$ 39.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 23 $\leq$ K $\leq$ 40 et de préférence 25 $\leq$ K $\leq$ 39.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 19 $\leq$ K $\leq$ 35 et de préférence 23 $\leq$ K $\leq$ 30.

Avantageusement, l'angle d'hélice $\alpha$ de chaque élément filaire métallique est tel que 13° $\leq \alpha \leq$ 30°, de préférence 17° $\leq \alpha \leq$ 26°.

Pour des valeurs trop élevées du rapport K ou pour des valeurs d'angle d'hélice trop faibles, la compressibilité longitudinale du câble est réduite. Pour des valeurs trop faibles du rapport K ou pour des valeurs d'angle d'hélice trop élevées, la rigidité longitudinale du câble et donc sa capacité de renforcement sont réduites. Grâce à l'invention, on peut néanmoins utiliser des valeurs de l'angle α relativement élevées grâce au jeu radial relatif Jr relativement faible et donc à la présence d'un nombre relativement élevé d'éléments filaires métalliques sur la couche.

Dans un mode de réalisation d'un câble destiné au renforcement d'un pneumatique pour véhicules de tourisme, mais également pour des véhicules deux-roues tels que des motos, et préférentiellement pour véhicules de tourisme, on a 13° ≤ α ≤ 19,5° et de préférence 17° ≤ α ≤ 19,5°.

Dans un mode de réalisation d'un câble destiné au renforcement d'un pneumatique pour véhicules industriels choisis parmi camionnettes, "Poids-lourd", par exemple métro, bus, engins de transport routier (camions, tracteurs, remorques), on a 18,5° ≤ α ≤ 30° et de préférence 18,5° ≤ α ≤ 26°.

Avantageusement, le câble présente un allongement structural As tel que As ≥ 1,5%, de préférence tel que 1,5% ≤ As ≤ 5,0% et plus préférentiellement tel que 1,9% ≤ As ≤ 4,5%, l'allongement structural As étant déterminé en appliquant la norme ASTM D2969-04 de 2014 au câble de façon à obtenir une courbe force-allongement, l'allongement structural As étant égal à l'allongement, en %, correspondant à la projection sur l'axe des allongement de l'intersection entre la tangente à la partie structurale de la courbe force-allongement et la tangente à la partie élastique de la courbe force-allongement.

Dépourvu de matériau de remplissage, le câble selon l'invention présente une courbe force-allongement bi-module. Ainsi, comme décrit précédemment, la courbe force-allongement présente d'une part une partie structurale caractérisée notamment par un module élastique en extension de cette partie structurale et, d'autre part, une partie élastique caractérisée notamment par un module élastique en extension de cette partie élastique.

Très avantageusement, le câble présente un module élastique en extension de la partie structurale inférieur ou égal à 15 GPa, de préférence allant de 2 GPa à 15 GPa. Ainsi, le câble présente un module relativement faible qui est équivalent à celui de câbles dits extensibles ou élastiques de l'état de la technique présentant un allongement structural modéré allant de 1 % à 2,5%.

Très avantageusement, le câble présente un module élastique en extension de la partie élastique supérieur ou égal à 50 GPa, de préférence allant de 50 à 180 GPa. Ainsi, le câble présente un module relativement élevé qui est équivalent à des câbles dits inextensibles de l'état de la technique présentant, au contraire des câbles avantageux de l'invention, un As relativement faible inférieur à 1%.

Dans un mode de réalisation dans lequel on recherche par exemple une rigidité en flexion modérée, les câbles présentent des modules relativement bas, le module élastique en extension de la partie élastique allant alors de 80 à 130 GPa. Dans un autre mode de réalisation dans lequel les câbles présentent des modules plus élevés, le module élastique en extension de la partie élastique va de 130 à 180 GPa..

Le module élastique en extension de la partie structurale du câble est mesuré en appliquant la norme ASTM D2969-04 de 2014 à un câble testé de façon à obtenir une courbe contrainte-allongement. On déduit le module élastique en extension de la partie structurale sur la courbe obtenue comme la pente de la partie structurale de la courbe contrainte-allongement.

Le module élastique en extension de la partie élastique du câble est mesuré en appliquant la norme ASTM D2969-04 de 2014 à un câble testé de façon à obtenir une courbe contrainte-allongement. On déduit le module élastique en extension sur la courbe obtenue comme la pente de la partie élastique de la courbe contrainte-allongement.

Très avantageusement, le câble, une fois noyé dans une matrice élastomérique standard réticulée présentant un module en extension à 10% d'allongement allant de 5 MPa à 10 MPa, présente un module élastique en extension supérieur ou égal à 100 GPa, de préférence allant de 100 GPa à 180 GPa, plus préférentiellement de 110 GPa à 180 GPa et encore plus préférentiellement de 120 GPa à 180 GPa, le module élastique en extension à 10 % d'allongement étant déterminé selon la norme ASTM D2969-04 de 2014.

Dans un mode de réalisation dans lequel les câbles présentent des modules relativement bas, le module élastique en extension va de 100 GPa à 130 GPa. Dans un autre mode de réalisation dans lequel les câbles présentent des modules plus élevés, le module élastique en extension va de 130 GPa à 180 GPa.

Le module élastique en extension du câble noyé dans la matrice élastomérique standard réticulée est mesuré en appliquant la norme ASTM D2969-04 de 2014 à ce câble noyé dans la matrice élastomérique standard réticulée testé de façon à obtenir une courbe contrainte-allongement. On déduit le module élastique en extension sur la courbe obtenue comme la pente de la partie élastique de la courbe contrainte-allongement.

Le module sécant nominal en extension à 10% d'allongement ou module en extension à 10% d'allongement est mesuré en seconde élongation (i.e., après un cycle d'accommodation au taux d'extension prévu pour la mesure elle-même). Ces essais de traction permettent de déterminer les contraintes d'élasticité et les propriétés à la rupture. Ils sont effectués conformément à la norme française NF T 46-002 de septembre 1988. On mesure en seconde élongation (i.e., après un cycle d'accommodation au taux d'extension prévu pour la mesure elle-même) le module sécant nominal en extension (ou contrainte apparente, en MPa) à 10% d'allongement (notés MA 10) à 23°C ± 2°C, et dans les conditions normales d'hygrométrie. La matrice élastomérique standard est obtenue par cuisson à 160°C pendant 15 minutes d'une composition élastomérique à base de caoutchouc naturel, noir de carbone et des additifs usuels. En l'espèce, la composition élastomérique comprend 100 pce de caoutchouc naturel, 50 pce de noir de carbone série 300, 1,5 de N-1,3-diméthylbutyl-N-phényl-para-phénylènediamine, 1 pce d'un sel de cobalt, et un système de réticulation comprenant 0,9 pce d'acide stéarique, 6 pce de soufre moléculaire insoluble, 0,8 pce de N,N'-dicyclohexyl-2-benzothiazole-sulfenamide et de 7,5 pce de ZnO et présentant à l'issue de l'étape de cuisson un module sécant nominal en extension à 10% d'allongement égal à 6 MPa.

Avantageusement, en raison du procédé utilisé chaque élément filaire métallique est dépourvu de marques de préformation. De telles marques de préformation comprennent notamment des méplats. Les marques de préformations comprennent également des fissures s'étendant dans des plans de coupe sensiblement perpendiculaires à l'axe principal selon lequel s'étend chaque élément filaire métallique. De telles fissures s'étendent, dans un plan de coupe sensiblement perpendiculaire à l'axe principal, depuis une surface radialement externe de chaque élément filaire métallique radialement vers l'intérieur de chaque élément filaire métallique. Comme décrits ci-dessus, de telles fissures sont initiées par les outils mécaniques de préformation en raison des efforts en flexion, c'est-à-dire perpendiculairement à l'axe principal de chaque élément filaire métallique, ce qui les rend très néfastes pour l'endurance. A l'inverse, dans le procédé utilisé, les éléments filaires métalliques sont préformés collectivement et simultanément sur le noyau transitoire et les efforts de préformations sont exercés en torsion et donc non perpendiculairement à l'axe principal de chaque élément filaire métallique. Les éventuelles fissures créées s'étendent non pas radialement depuis la surface radialement externe de chaque élément filaire métallique radialement vers l'intérieur de chaque élément filaire métallique mais le long de la surface radialement externe de chaque élément filaire métallique ce qui les rend peu néfastes pour l'endurance.

## PROCEDE DE FABRICATION DU CABLE SELON L'INVENTION

Un procédé permettant de fabriquer le câble tel que défini ci-dessus comprend:

- une étape de fourniture d'un assemblage transitoire comprenant au moins une couche constituée de M'>1 éléments filaires métalliques enroulés en hélice autour d'un noyau transitoire,
- une étape de séparation de l'assemblage transitoire entre au moins:

  ◦ un premier assemblage fractionné comprenant au moins une couche constituée de M1'≥1 élément(s) filaire(s) métallique(s) enroulé(s) en hélice, le ou les M1' élément(s) filaire(s) métallique(s) étant issu(s) de la couche constituée de M'>1 éléments filaires métalliques de l'assemblage transitoire,
  ◦ un deuxième assemblage fractionné comprenant au moins une couche constituée de M2'>1 éléments filaires métalliques enroulés en hélice, les M2' éléments filaires métalliques étant issus de la couche constituée de M'>1 éléments filaires métalliques de l'assemblage transitoire,
  ◦ le noyau transitoire ou un ou plusieurs ensembles comprenant le noyau transitoire,

le procédé comprenant une étape de réassemblage d'au moins le premier assemblage fractionné avec le deuxième assemblage fractionné pour former la couche constituée de N éléments filaires métalliques enroulés en hélice.

A l'issue l'étape de séparation de l'assemblage transitoire, on obtient, dans une variante, le premier assemblage, le deuxième assemblage et le noyau transitoire, le noyau transitoire étant isolé de tout autre élément filaire métallique issu de la couche constituée de M'>1 éléments filaires métalliques. En d'autres termes, à l'issue l'étape de séparation de l'assemblage transitoire, on obtient, dans cette variante, le premier assemblage, le deuxième assemblage et un ensemble constitué par le noyau transitoire.

Dans une autre variante, à l'issue l'étape de séparation de l'assemblage transitoire, on obtient le premier assemblage, le deuxième assemblage et un ensemble comprenant le noyau transitoire, l'ensemble comprenant le noyau transitoire comprenant également un ou plusieurs éléments filaires métalliques issus de la couche constituée de M'>1 éléments filaires métalliques de l'assemblage transitoire. En d'autres termes, dans cette variante, à l'issue l'étape de séparation de l'assemblage transitoire, on obtient, dans cette variante, le premier assemblage, le deuxième assemblage et un ensemble constitué par le noyau transitoire et un ou plusieurs éléments filaires métalliques issus de la couche constituée de M'>1 éléments filaires métalliques.

Dans encore une autre variante, à l'issue l'étape de séparation de l'assemblage transitoire, on obtient le premier assemblage, le deuxième assemblage et plusieurs ensembles comprenant chacun une partie du noyau transitoire, chaque ensemble comprenant une partie du noyau transitoire comprenant également un ou plusieurs éléments filaires métalliques issus de la couche constituée de M'>1 éléments filaires métalliques de l'assemblage transitoire. Ainsi, les ensembles comprennent l'intégralité du noyau transitoire et les parties du noyau transitoire des ensembles forment le noyau transitoire dans son intégralité. En d'autres termes, on obtient, dans cette variante, le premier assemblage, le deuxième assemblage et plusieurs ensembles constitué chacun par une partie du noyau transitoire et un ou plusieurs éléments filaires métalliques issus de la couche constituée de M'>1 éléments filaires métalliques de l'assemblage transitoire, les parties du noyau transitoire constituant le noyau transitoire.

Grâce à l'étape de réassemblage du procédé, il est possible, pour des caractéristiques géométriques données, d'augmenter la masse linéique du câble selon l'invention par rapport au procédé de l'état de la technique dans lequel le nombre d'éléments filaires métalliques est nécessairement limité, cela tout en permettant la sortie du noyau transitoire. A l'inverse, pour une masse linéique donnée, il est possible d'obtenir une plus grande plage de caractéristiques géométriques qu'avec le procédé de l'état de la technique.

L'étape de réassemblage est telle que N=M1'+M2'. Lors de cette étape de réassemblage, on réassemble le ou les M1' élément(s) filaire(s) métallique(s) enroulé(s) en hélice formant la couche du premier assemblage fractionné avec les M2' éléments filaires métalliques enroulés en hélice formant la couche du deuxième assemblage fractionné. Le réassemblage des éléments filaires métalliques ces deux couches permet d'obtenir la couche du câble selon l'invention.

Dans le procédé permettant de fabriquer le câble selon l'invention, chaque M1' et M2' éléments filaires métalliques étant issu de la même couche de l'assemblage transitoire, l'étape de réassemblage permet de former le câble selon l'invention dans lequel les N éléments filaires métalliques présentent les mêmes propriétés géométriques et forment donc une couche homogène d'éléments filaires métalliques. Ainsi, afin de permettre l'obtention d'un câble dans lequel les éléments filaires métalliques présentant des caractéristiques géométriques identiques, l'étape de fourniture, l'étape de séparation et l'étape de réassemblage sont réalisées de sorte que tous les N éléments filaires métalliques présentent un même diamètre Df, sont enroulés en hélice selon un même pas P et présentent un même diamètre d'hélice Dh.

En outre, comme décrit ci-dessus, suivant les différents modes de réalisation, l'étape de séparation et l'étape de réassemblage sont réalisées de sorte que M'≥M1'+M2'=N.

L'assemblage transitoire du procédé permettant de fabriquer le câble selon l'invention est constitué de la couche constituée par les M' éléments filaires métalliques et du noyau transitoire, les M' éléments filaires métalliques étant enroulés en hélice autour du noyau transitoire.

Le procédé permettant de fabriquer le câble selon l'invention est avantageusement un procédé continu ou en ligne. Ainsi, il n'y a pas d'étape de stockage intermédiaire des différents assemblages et ensembles générés lors du procédé entre l'étape de fourniture de l'assemblage transitoire et l'étape de réassemblage du câble selon l'invention.

Dans le procédé, une étape de fractionnement d'un objet initial en plusieurs objets finaux signifie que, durant cette étape de fractionnement, l'objet initial est divisé en les objets finaux et seulement ces objets finaux de sorte que l'objet initial se retrouve intégralement dans les objets finaux. De plus, dans une étape de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, lors d'une étape de fractionnement, séparés simultanément les uns des autres et en un même point.

Dans le procédé, une étape de séparation d'un objet initial entre plusieurs objets finaux signifie que, pour obtenir ces objets finaux, au moins une étape de fractionnement est nécessaire. Ainsi, pour obtenir les objets finaux, l'étape de séparation comprend une étape de fractionnement de l'objet initial en les objets finaux ou bien comprend une étape de fractionnement de l'objet initial en des objets intermédiaires suivie par une ou plusieurs étapes successives de fractionnement des objets intermédiaires en les objets finaux. Par ailleurs, dans une étape de séparation, l'objet initial ne se retrouve pas nécessairement intégralement dans les objets finaux, des ensembles ou assemblages ayant pu être extraits du procédé lors d'une ou plusieurs étapes de fractionnement et non utilisés lors des étapes de fractionnement ultérieures. Enfin, une étape de séparation peut comprendre une ou plusieurs étapes de réassemblage entre plusieurs objets intermédiaires issus d'une étape de fractionnement de l'étape de séparation pour obtenir d'autres objets intermédiaires ou bien les objets finaux.

Que ce soit dans une étape de séparation ou une étape de fractionnement, les objets finaux sont physiquement séparés les uns des autres, c'est-à-dire non en contact les uns avec les uns en aval de l'étape et en amont de toute étape de réassemblage de deux ou de plusieurs de ces objets finaux.

Le câble selon l'invention est à simple hélice. Par définition, un assemblage à simple hélice est un assemblage dans lequel l'axe de chaque élément filaire métallique décrit une unique hélice, contrairement à un assemblage à double hélice dans lequel l'axe de chaque élément filaire métallique décrit une première hélice autour de l'axe de l'assemblage et une deuxième hélice autour d'une hélice décrite par l'axe de l'assemblage.

En d'autres termes, lorsque l'assemblage s'étend selon une direction sensiblement rectiligne, l'assemblage comprenant une ou plusieurs couches d'éléments filaires enroulés en hélice, chaque élément filaire métallique de la ou chaque couche décrit une trajectoire en forme d'hélice autour de la direction sensiblement rectiligne de sorte que la distance entre le centre de chaque élément filaire métallique d'une couche donnée et l'axe de la direction sensiblement rectiligne soit sensiblement constante et égale pour tous les éléments filaires métallique de chaque couche donnée. Au contraire, lorsqu'un assemblage à double hélice s'étend selon une direction sensiblement rectiligne, la distance entre le centre de chaque élément filaire métallique d'une couche donnée et la direction sensiblement rectiligne est différente pour tous les éléments filaires métalliques de la couche donnée.

Dans une première forme de réalisation permettant un réassemblage partiel des M' éléments filaires métalliques, l'étape de séparation et l'étape de réassemblage sont réalisées de sorte que M1'+M2'<M'.

Dans des première et deuxième variantes de la première forme de réalisation, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage :

- une étape de séparation de l'assemblage transitoire entre :

◦ un ensemble précurseur comprenant au moins une couche constituée de M1">1 éléments filaires métalliques enroulés en hélice, les M1" éléments filaires métalliques étant issus de la couche constituée de M'>1 éléments filaires métalliques de l'assemblage transitoire,
◦ le deuxième assemblage fractionné, et
◦ le noyau transitoire ou un ou plusieurs ensembles comprenant le noyau transitoire, de préférence le noyau transitoire

- une étape de séparation de l'ensemble précurseur entre:

◦ un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M1">1 éléments filaires métalliques de l'ensemble précurseur, l'ensemble principal formant le premier assemblage fractionné et
◦ un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M1">1 éléments filaires métalliques de l'ensemble précurseur.

Dans ces première et deuxième variantes de la première forme de réalisation, on a M'>M1"+M2', M1"≥M3+M3' et M1'=M3.

Dans un mode de réalisation permettant de fabriquer un câble selon l'invention, l'ensemble précurseur est constitué d'une couche constituée des M1" éléments filaires métalliques enroulés en hélice, l'ensemble principal est constitué d'une couche constituée du ou des M3 élément(s) filaire(s) métallique(s) enroulé(s) en hélice et l'ensemble complémentaire est constitué d'une couche constituée du ou des M3' élément(s) filaire(s) métallique(s) enroulé(s) en hélice.

Dans ces première et deuxième variantes de réalisation, l'étape de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, a lieu en amont de l'étape de séparation de l'ensemble précurseur entre les ensembles principal et complémentaire.

Avantageusement, l'étape de séparation de l'ensemble précurseur entre l'ensemble principal formant le premier assemblage fractionné et l'ensemble complémentaire comprend une étape de fractionnement de l'ensemble précurseur en :

- l'ensemble principal formant le premier assemblage fractionné, et
- l'ensemble complémentaire.

Ainsi, on a avantageusement, M1"=M3+M3' et M3=M1'.

Dans une première variante de la première forme de réalisation dans laquelle le noyau transitoire est séparé avec le premier assemblage fractionné, l'étape de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprend :

- une étape de séparation de l'assemblage transitoire entre:

◦ un ensemble fractionné comprenant au moins une couche constituée de M4'>1 éléments filaires métalliques enroulés en hélice autour du noyau transitoire, les M4' éléments filaires métalliques étant issus de la couche constituée de M' éléments filaires métalliques de l'assemblage transitoire, et
◦ le deuxième assemblage fractionné,

- une étape de séparation de l'ensemble fractionné entre:

◦ l'ensemble précurseur, et
◦ le noyau transitoire ou un ou plusieurs ensembles comprenant le noyau transitoire, de préférence le noyau transitoire.

Dans la première variante de la première forme de réalisation, on a ainsi avantageusement M'≥M4'+M2' et M4'>M1".

Dans cette première variante, l'ensemble fractionné est constitué de la couche constituée par les M4' éléments filaires métalliques et du noyau transitoire, les M4' éléments filaires métalliques étant enroulés en hélice autour du noyau transitoire.

Dans cette première variante, l'étape de séparation de l'ensemble fractionné entre l'ensemble précurseur et le noyau transitoire ou un ou plusieurs ensembles comprenant le noyau transitoire, de préférence le noyau transitoire, a lieu en amont de l'étape de séparation de l'ensemble précurseur entre les ensembles principal et complémentaire.

Avantageusement, dans cette première variante, l'étape de séparation de l'assemblage transitoire entre l'ensemble fractionné et le deuxième assemblage fractionné comprend une étape de fractionnement de l'assemblage transitoire en :

- l'ensemble fractionné, et
- le deuxième assemblage fractionné.

Ainsi, on a avantageusement M'=M4'+M2'.

Avantageusement, dans cette première variante, l'étape de séparation de l'ensemble fractionné entre l'ensemble précurseur et le noyau transitoire ou un ou plusieurs ensembles comprenant le noyau transitoire, de préférence le noyau transitoire comprend une étape de fractionnement de l'ensemble fractionné en :

- l'ensemble précurseur, et
- le noyau transitoire ou un ou plusieurs ensembles comprenant le noyau transitoire, de préférence le noyau transitoire.

Ainsi, on a avantageusement, M4'=M1" dans le cas d'une étape de fractionnement de l'ensemble fractionné entre l'ensemble précurseur et le noyau transitoire.

Dans une deuxième variante de la première forme de réalisation dans laquelle le noyau transitoire est séparé avec le deuxième assemblage fractionné, l'étape de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprend :

- une étape de séparation de l'assemblage transitoire entre:

  ◦ un ensemble fractionné comprenant au moins une couche constituée de M4'>1 éléments filaires métalliques enroulés en hélice autour du noyau transitoire, les M4' éléments filaires métalliques étant issus de la couche constituée de M'>1 éléments filaires métalliques de l'assemblage transitoire, et
  ◦ l'ensemble précurseur, et

- une étape de séparation de l'ensemble fractionné entre:

  ◦ le deuxième assemblage fractionné, et
  ◦ le noyau transitoire ou un ou plusieurs ensembles comprenant le noyau transitoire, de préférence le noyau transitoire.

Dans la deuxième variante de la première forme de réalisation, on a ainsi avantageusement M'≥M4'+M1" et M4'≥M2'.

Tout comme dans la première variante, dans cette deuxième variante, l'ensemble fractionné est constitué de la couche constituée par les M4' éléments filaires métalliques et du noyau transitoire, les M4' éléments filaires métalliques étant enroulés en hélice autour du noyau transitoire.

Dans cette deuxième variante, l'étape de séparation de l'assemblage transitoire entre l'ensemble fractionné et l'ensemble précurseur a lieu en amont de l'étape de séparation de l'ensemble fractionné entre le deuxième assemblage fractionné et le noyau transitoire ou un ou plusieurs ensembles comprenant le noyau transitoire, de préférence le noyau transitoire.

Avantageusement, dans cette deuxième variante, l'étape de séparation de l'assemblage transitoire entre l'ensemble fractionné et l'ensemble précurseur comprend une étape de fractionnement de l'assemblage transitoire en :

- l'ensemble fractionné, et

- l'ensemble précurseur.

Ainsi, on a avantageusement M'=M4'+M1".

Avantageusement, dans cette deuxième variante, l'étape de séparation de l'ensemble fractionné entre le deuxième assemblage fractionné et le noyau transitoire ou un ou plusieurs ensembles comprenant le noyau transitoire, de préférence le noyau transitoire, comprend une étape de fractionnement de l'ensemble fractionné en :

- le deuxième assemblage fractionné, et
- le noyau transitoire ou un ou plusieurs ensembles comprenant le noyau transitoire, de préférence le noyau transitoire.

Ainsi, on a avantageusement et M4'=M2' dans le cas d'une étape de fractionnement de l'ensemble fractionné en le deuxième assemblage fractionné et le noyau transitoire.

Dans une troisième variante de la première forme de réalisation dans laquelle le noyau transitoire est séparé avec le premier assemblage fractionné, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage :

- une étape de séparation de l'assemblage transitoire entre:

  ◦ un ensemble fractionné comprenant au moins une couche constituée de M4'>1 éléments filaires métalliques enroulés en hélice autour du noyau transitoire, les M4' éléments filaires métalliques étant issus de la couche constituée de M' éléments filaires métalliques de l'assemblage transitoire, et
  ◦ le deuxième assemblage fractionné.

- une étape de séparation de l'ensemble fractionné entre:

  ◦ le premier assemblage fractionné, et
  ◦ le noyau transitoire ou un ou plusieurs ensembles comprenant le noyau transitoire, de préférence le noyau transitoire.

Dans cette troisième variante de la première forme de réalisation, on a M'≥M4'+M2' et M4'>M1'.

Tout comme dans les première et deuxième variantes, dans cette troisième variante, l'ensemble fractionné est constitué de la couche constituée par les M4' éléments filaires métalliques et du noyau transitoire, les M4' éléments filaires métalliques étant enroulés en hélice autour du noyau transitoire.

Dans cette troisième variante, l'étape de séparation de l'assemblage transitoire entre l'ensemble fractionné et le deuxième assemblage fractionné a lieu en amont de l'étape de séparation de l'ensemble fractionné entre le premier assemblage fractionné et le noyau transitoire ou un ou plusieurs ensembles comprenant le noyau transitoire, de préférence le noyau transitoire.

Avantageusement, dans cette troisième variante, l'étape de séparation de l'assemblage transitoire entre l'ensemble fractionné et le deuxième assemblage fractionné comprend une étape de fractionnement de l'assemblage transitoire en :

- l'ensemble fractionné, et
- le deuxième assemblage fractionné.

Ainsi, on a avantageusement, M'=M4'+M2'.

Avantageusement, l'étape de séparation de l'ensemble fractionné entre le premier assemblage fractionné et le noyau transitoire ou un ou plusieurs ensembles comprenant le noyau transitoire, de préférence le noyau transitoire, comprend une étape de séparation de l'ensemble fractionné entre:

◦ un ensemble principal comprenant au moins une couche constituée de M3≥1 élément(s) filaire(s) métallique(s) enroulé(s) en hélice, le ou les M3≥1 élément(s) filaire(s) métallique(s) étant issu(s) de la couche constituée des M4'>1 éléments filaires métalliques de l'ensemble fractionné, l'ensemble principal formant le premier assemblage fractionné,
◦ un ensemble complémentaire comprenant au moins une couche constituée de M3'≥1 élément(s) filaire(s) métallique(s) enroulé(s) en hélice, le ou les M3'≥1 élément(s) filaire(s) métallique(s) étant issu(s) de la couche constituée des M4'>1 éléments filaires métalliques de l'ensemble fractionné, et
◦ le noyau transitoire ou un ou plusieurs ensembles comprenant le noyau transitoire, de préférence le noyau transitoire.

Dans la troisième variante de la première forme de réalisation, on a ainsi avantageusement M4'≥M3+M3' et M3=M1'.

Dans un mode de réalisation, l'ensemble principal est constitué d'une couche constituée du ou des M3 élément(s) filaire(s) métallique(s) enroulé(s) en hélice et l'ensemble complémentaire est constitué d'une couche constituée du ou des M3' élément(s) filaire(s) métallique(s) enroulé(s) en hélice.

Avantageusement, l'étape de séparation de l'ensemble fractionné entre l'ensemble principal formant le premier assemblage fractionné, l'ensemble complémentaire et le noyau transitoire ou un ou plusieurs ensembles comprenant le noyau transitoire, de préférence le noyau transitoire, comprend:

- une étape de séparation de l'ensemble fractionné entre:

   ◦ l'ensemble principal formant le premier assemblage fractionné,
   ◦ un ensemble dérivé comprenant au moins une couche constituée de M5'≥1 élément(s) filaire(s) métallique(s) enroulé(s) en hélice autour du noyau transitoire, le ou les M5'≥1 élément(s) filaire(s) métallique(s) étant issu(s) de la couche constituée des M4'>1 éléments filaires métalliques de l'ensemble fractionné,

- une étape de séparation de l'ensemble dérivé entre:

   ◦ l'ensemble complémentaire,
   ◦ le noyau transitoire ou un ou plusieurs ensembles comprenant le noyau transitoire, de préférence le noyau transitoire.

Dans la troisième variante de la première forme de réalisation, on a ainsi avantageusement M4'≥M3+M5', M3=M1' et M5'≥M3'.

De préférence, l'ensemble dérivé est constitué de la couche constituée du ou des M5'≥1 élément(s) filaire(s) métallique(s) enroulé(s) et du noyau transitoire, le ou les M5' élément(s) filaire(s) métallique(s) étant enroulé(s) en hélice autour du noyau transitoire.

Dans cette troisième variante, l'étape de séparation de l'ensemble fractionné entre l'ensemble principal et l'ensemble dérivé a lieu en amont de l'étape de séparation de l'ensemble dérivé entre l'ensemble complémentaire et le noyau transitoire ou un ou plusieurs ensembles comprenant le noyau transitoire, de préférence le noyau transitoire.

Avantageusement, dans cette troisième variante, l'étape de séparation de l'ensemble fractionné entre l'ensemble principal formant le premier assemblage fractionné et l'ensemble dérivé comprend une étape de fractionnement de l'ensemble fractionné en :

- l'ensemble principal formant le premier assemblage fractionné, et
- l'ensemble dérivé.

Ainsi, on a avantageusement M4'=M3+M5' et M3=M1'.

Avantageusement, dans cette troisième variante, l'étape de séparation de l'ensemble dérivé entre l'ensemble complémentaire et le noyau transitoire ou un ou plusieurs ensembles comprenant le noyau transitoire, de préférence le noyau transitoire, comprend une étape de fractionnement de l'ensemble dérivé en :

- l'ensemble complémentaire, et
- le noyau transitoire ou un ou plusieurs ensembles comprenant le noyau transitoire, de préférence le noyau transitoire.

Ainsi, on a avantageusement M5'=M3' dans le cas d'une étape de fractionnement de l'ensemble dérivé en l'ensemble complémentaire et le noyau transitoire.

Dans une quatrième variante de la première forme de réalisation dans laquelle le premier assemblage fractionné, le deuxième assemblage fractionné, le noyau transitoire sont séparés simultanément, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage, une étape de fractionnement de l'assemblage transitoire entre :

- le premier assemblage fractionné,
- le deuxième assemblage fractionné,
- le noyau transitoire ou un ou plusieurs ensembles comprenant le noyau transitoire, de préférence le noyau transitoire, et

- un ensemble fractionné comprenant au moins une couche constituée de M4'≥1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

De préférence, dans un mode de réalisation permettant de fabriquer un assemblage final constitué d'une couche d'éléments filaires métalliques, l'ensemble fractionné est constitué de la couche constituée par le ou les M4' élément(s) filaire(s) métallique(s).

Dans une configuration de la première forme de réalisation dans laquelle le noyau transitoire est séparé en deux parties allant chacune avec les premier et deuxième assemblages fractionnés, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage :

- une étape de séparation de l'assemblage transitoire entre:

  ◦ un premier ensemble fractionné comprenant au moins une couche constituée par M6'>1 éléments filaires métalliques enroulés en hélice autour d'une première partie du noyau transitoire, les M6'>1 éléments filaires métalliques étant issus de la couche constituée des M' éléments filaires métalliques de l'assemblage transitoire, et
  ◦ un deuxième ensemble fractionné comprenant au moins une couche constituée par M7'>1 éléments filaires métalliques enroulés en hélice autour d'une deuxième partie du noyau transitoire, les M7'>1 éléments filaires métalliques étant issus de la couche constituée des M' éléments filaires métalliques de l'assemblage transitoire,

la première partie du noyau transitoire et la deuxième partie du noyau transitoire constituant, préalablement à l'étape de séparation de l'assemblage transitoire, le noyau transitoire,

- une étape de séparation du premier ensemble fractionné entre :

  ◦ le premier assemblage fractionné,
  ◦ la première partie du noyau transitoire ou un ou plusieurs ensembles comprenant la première partie du noyau transitoire, de préférence la première partie du noyau transitoire

- une étape de séparation du deuxième ensemble fractionné entre:

  ◦ le deuxième assemblage fractionné, et
  ◦ la deuxième partie du noyau transitoire ou un ou plusieurs ensembles comprenant la deuxième partie du noyau transitoire, de préférence la deuxième partie du noyau transitoire.

Dans cette configuration de la première forme de réalisation, M'≥M6'+M7', M6'>M1' et M7'≥M2'.

Dans cette configuration de la première forme de réalisation, le premier ensemble fractionné est constitué de la couche constituée par les M6' éléments filaires métalliques et de la première partie du noyau transitoire, les M6' éléments filaires métalliques étant enroulés en hélice autour de la première partie du noyau transitoire.

De façon analogue, dans cette configuration de la première forme de réalisation, le deuxième ensemble fractionné est constitué de la couche constituée par les M7' éléments filaires métalliques et de la deuxième partie du noyau transitoire, les M7' éléments filaires métalliques étant enroulés en hélice autour de la deuxième partie du noyau transitoire.

Dans cette configuration de la première forme de réalisation, l'étape de séparation de l'assemblage transitoire entre le premier ensemble fractionné et le deuxième ensemble fractionné a lieu en amont de l'étape de séparation du premier ensemble fractionné entre le premier assemblage fractionné et la première partie du noyau transitoire ou un ou plusieurs ensembles comprenant la première partie du noyau transitoire, de préférence la première partie du noyau transitoire.

Dans cette configuration de la première forme de réalisation, l'étape de séparation de l'assemblage transitoire entre le premier ensemble fractionné et le deuxième ensemble fractionné a lieu en amont de l'étape de séparation du deuxième ensemble fractionné entre le deuxième assemblage fractionné, et la deuxième partie du noyau transitoire ou un ou plusieurs ensembles comprenant la deuxième partie du noyau transitoire, de préférence la deuxième partie du noyau transitoire.

Avantageusement, dans cette configuration de la première forme de réalisation, l'étape de séparation de l'assemblage transitoire entre le premier ensemble fractionné et le deuxième ensemble fractionné comprend une étape de fractionnement de l'assemblage transitoire en :

- le premier ensemble fractionné, et
- le deuxième ensemble fractionné.

Ainsi, on a avantageusement, M'=M6'+M7'.

Avantageusement, dans cette configuration de la première forme de réalisation, l'étape de séparation du deuxième ensemble fractionné entre le deuxième assemblage fractionné et la deuxième partie du noyau transitoire ou un ou plusieurs ensembles comprenant la deuxième partie du noyau transitoire, de préférence la deuxième partie du noyau transitoire comprend une étape de fractionnement du deuxième ensemble fractionné en :

- le deuxième assemblage fractionné, et
- la deuxième partie du noyau transitoire ou un ou plusieurs ensembles comprenant la deuxième partie du noyau transitoire, de préférence la deuxième partie du noyau transitoire.

Ainsi, on a avantageusement, M7'=M2'.

Avantageusement, dans cette configuration de la première forme de réalisation dans laquelle le noyau transitoire est séparé en deux parties allant chacune avec les premier et deuxième assemblages fractionnés, l'étape de séparation du premier ensemble fractionné entre le premier assemblage fractionné et la première partie du noyau transitoire ou un ou plusieurs ensembles comprenant la première partie du noyau transitoire, de préférence la première partie du noyau transitoire, comprend une étape de séparation du premier ensemble fractionné entre :

- un ensemble principal comprenant au moins une couche constituée de $M3 \geq 1$ élément(s) filaire(s) métallique(s) enroulé(s) en hélice, le ou les $M3 \geq 1$ élément(s) filaire(s) métallique(s) étant issu(s) de la couche constituée des $M6' > 1$ éléments filaires métalliques du premier ensemble fractionné, l'ensemble principal formant le premier assemblage fractionné,
- un ensemble complémentaire comprenant au moins une couche constituée de $M3' \geq 1$ élément(s) filaire(s) métallique(s) enroulé(s) en hélice, le ou les $M3' \geq 1$ élément(s) filaire(s) métallique(s) étant issu(s) de la couche constituée des $M6' > 1$ éléments filaires métalliques du premier ensemble fractionné, et
- la première partie du noyau transitoire ou un ou plusieurs ensembles comprenant la première partie du noyau transitoire, de préférence la première partie du noyau transitoire.

Dans cette configuration de la première forme de réalisation, dans laquelle le noyau transitoire est séparé en deux parties allant chacune avec les premier et deuxième assemblages fractionnés, on a ainsi avantageusement, $M6' \geq M3+M3'$ et $M3=M1'$.

Dans un mode de réalisation, l'ensemble principal est constitué d'une couche constituée du ou des $M3$ élément(s) filaire(s) métallique(s) enroulé(s) en hélice et l'ensemble complémentaire est constitué d'une couche constituée du ou des $M3'$ élément(s) filaire(s) métallique(s) enroulé(s) en hélice.

Dans une première variante de cette configuration de la première forme de réalisation dans laquelle le noyau transitoire est séparé en deux parties allant chacune avec les premier et deuxième assemblages fractionnés, l'étape de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprend:

- une étape de séparation du premier ensemble fractionné entre:

  ◦ un ensemble précurseur comprenant au moins une couche constituée de $M1" > 1$ éléments filaires métalliques enroulés en hélice, les $M1"$ éléments filaires métalliques étant issus de la couche constituée de $M6' > 1$ éléments filaires métalliques du premier ensemble fractionné,
  ◦ la première partie du noyau transitoire ou un ou plusieurs ensembles comprenant la première partie du noyau transitoire, de préférence la première partie du noyau transitoire,

- une étape de séparation de l'ensemble précurseur entre:

  ◦ l'ensemble principal formant le premier assemblage fractionné et
  ◦ l'ensemble complémentaire.

Dans cette première variante de la configuration de la première forme de réalisation dans laquelle le noyau transitoire est séparé en deux parties allant chacune avec les premier et deuxième assemblages fractionnés, M6'≥M1 ", M1"≥M3+M3' et M3=M1'.

Dans un mode de réalisation, l'ensemble précurseur est constitué d'une couche constituée des M1" éléments filaires métalliques enroulés en hélice.

Dans cette première variante de cette configuration de la première forme de réalisation, l'étape de séparation du premier ensemble fractionné entre l'ensemble précurseur et la première partie du noyau transitoire ou un ou plusieurs ensembles comprenant la première partie du noyau transitoire, de préférence la première partie du noyau transitoire, a lieu en amont de l'étape de séparation de l'ensemble précurseur entre l'ensemble principal formant le premier assemblage fractionné et l'ensemble complémentaire.

Avantageusement, dans cette première variante de cette configuration de la première forme de réalisation, l'étape de séparation du premier ensemble fractionné entre l'ensemble précurseur et la première partie du noyau transitoire ou un ou plusieurs ensembles comprenant la première partie du noyau transitoire, de préférence la première partie du noyau transitoire comprend une étape de fractionnement du premier ensemble fractionné en :

- l'ensemble précurseur, et
- la première partie du noyau transitoire ou un ou plusieurs ensembles comprenant la première partie du noyau transitoire, de préférence la première partie du noyau transitoire.

Ainsi, on a avantageusement M6'=M1" dans le cas d'une étape de fractionnement du premier ensemble fractionné en l'ensemble précurseur et la première partie du noyau transitoire.

Avantageusement, dans cette première variante de cette configuration de la première forme de réalisation, l'étape de séparation de l'ensemble précurseur entre l'ensemble principal formant le premier assemblage fractionné et l'ensemble complémentaire comprend une étape de fractionnement de l'ensemble précurseur en :

- l'ensemble principal formant le premier assemblage fractionné, et
- l'ensemble complémentaire.

Ainsi, on a avantageusement M1"=M3+M3' et M3=M1'.

Dans une deuxième variante de cette configuration de la première forme de réalisation dans laquelle le noyau transitoire est séparé en deux parties allant chacune avec les premier et deuxième assemblages fractionnés, l'étape de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprend:

- une étape de séparation du premier ensemble fractionné entre:

  ∘ l'ensemble principal formant le premier assemblage fractionné,
  ∘ un ensemble dérivé comprenant au moins une couche constituée de M5'≥1 élément(s) filaire(s) métallique(s) enroulé(s) en hélice autour de la première partie du noyau transitoire, le ou les M5'≥1 élément(s) filaire(s) métallique(s) étant issu(s) de la couche constituée des M6'>1 éléments filaires métalliques du premier ensemble fractionné,

- une étape de séparation de l'ensemble dérivé entre:

  ∘ l'ensemble complémentaire,
  ∘ la première partie du noyau transitoire ou un ou plusieurs ensembles comprenant le noyau transitoire, de préférence la première partie du noyau transitoire.

Dans cette deuxième variante de la configuration de la première forme de réalisation dans laquelle le noyau transitoire est séparé en deux parties allant chacune avec les premier et deuxième assemblages fractionnés, M6'≥M3+M5', M5'≥M3' et M3=M1'.

Dans cette deuxième variante de cette configuration de la première forme de réalisation, l'ensemble dérivé est constitué de la couche constituée du ou des M5'≥1 élément(s) filaire(s) métallique(s) et de la première partie du noyau transitoire, le ou les M5'≥1 élément(s) filaire(s) métallique(s) étant enroulé(s) en hélice autour de la première partie du noyau transitoire.

Dans cette deuxième variante de cette configuration de la première forme de réalisation, l'étape de séparation du premier ensemble fractionné entre l'ensemble principal et l'ensemble dérivé a lieu en amont de l'étape de séparation de l'ensemble dérivé entre l'ensemble complémentaire et la première partie du noyau transitoire ou un ou plusieurs ensembles comprenant la première partie du noyau transitoire, de préférence la première partie du noyau transitoire.

Avantageusement, dans cette deuxième variante de cette configuration de la première forme de réalisation, l'étape de séparation du premier ensemble fractionné entre l'ensemble principal formant le premier assemblage fractionné et l'ensemble dérivé comprend une étape de fractionnement du premier ensemble fractionné en :

- l'ensemble principal formant le premier assemblage fractionné, et
- l'ensemble dérivé.

Ainsi, on a avantageusement M6'=M3+M5' et M3=M1'.

Avantageusement, dans cette deuxième variante de cette configuration de la première forme de réalisation, l'étape de séparation de l'ensemble dérivé entre l'ensemble complémentaire et la première partie du noyau transitoire ou un ou plusieurs ensembles comprenant le noyau transitoire, de préférence la première partie du noyau transitoire comprend une étape de fractionnement de l'ensemble dérivé en :

- l'ensemble complémentaire, et
- la première partie du noyau transitoire ou un ou plusieurs ensembles comprenant le noyau transitoire, de préférence la première partie du noyau transitoire.

Ainsi, on a avantageusement M5'=M3' dans le cas d'une étape de fractionnement de l'ensemble dérivé en l'ensemble complémentaire et la première partie du noyau transitoire.

Dans une autre configuration de la première forme de réalisation dans laquelle le noyau transitoire est séparé en deux parties, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage, une étape de fractionnement de l'assemblage transitoire entre :

- le premier assemblage fractionné,
- le deuxième assemblage fractionné,
- une première partie du noyau transitoire,
- une deuxième partie du noyau transitoire,

la première partie du noyau transitoire et la deuxième partie du noyau transitoire constituant, préalablement à l'étape de séparation de l'assemblage transitoire, le noyau transitoire,

- un ensemble fractionné comprenant au moins une couche constituée de M4'≥1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

De préférence, dans un mode de réalisation permettant de fabriquer un assemblage final constitué d'une couche d'éléments filaires métalliques, l'ensemble fractionné est constitué de la couche constituée par le ou les M4' élément(s) filaire(s) métallique(s).

Dans une deuxième forme de réalisation permettant un réassemblage total des M' éléments filaires métalliques, l'étape de séparation et l'étape de réassemblage sont réalisées de sorte que M1'+M2'=M'.

Dans une première variante de la deuxième forme de réalisation dans laquelle le noyau transitoire est séparé avec le premier assemblage fractionné, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage :

- une étape de séparation de l'assemblage transitoire entre:

  ◦ un ensemble fractionné comprenant au moins une couche constituée par M4'≥1 élément(s) filaire(s) métallique(s) enroulé(s) en hélice autour du noyau transitoire, le ou les M4'≥1 élément(s) filaire(s) métallique(s) étant issu(s) de la couche constituée des M'>1 éléments filaires métalliques de l'assemblage transitoire et
  ◦ le deuxième assemblage fractionné,

- une étape de séparation de l'ensemble fractionné entre:

  ◦ le premier assemblage fractionné, et
  ◦ le noyau transitoire.

Dans cette première variante de la deuxième forme de réalisation, M'=M4'+M2' et M4'=M 1'.

Dans cette première variante de la deuxième forme de réalisation, l'ensemble fractionné est constitué de la couche constituée par le ou les M4' élément(s) filaire(s) métallique(s) et du noyau transitoire, le ou les M4' élément(s) filaire(s) métallique(s) étant enroulés en hélice autour du noyau transitoire.

Dans cette première variante de la deuxième forme de réalisation, l'étape de séparation de l'assemblage transitoire entre l'ensemble fractionné et le deuxième assemblage fractionné a lieu en amont de l'étape de séparation de l'ensemble fractionné entre le premier assemblage fractionné et le noyau transitoire ou un ou plusieurs ensembles comprenant le noyau transitoire, de préférence le noyau transitoire.

Avantageusement, dans cette première variante de la deuxième forme de réalisation, l'étape de séparation de l'assemblage transitoire entre l'ensemble fractionné et le deuxième assemblage fractionné comprend une étape de fractionnement de l'assemblage transitoire en :

- l'ensemble fractionné et
- le deuxième assemblage fractionné.

Avantageusement, dans cette première variante de la deuxième forme de réalisation, l'étape de séparation de l'ensemble fractionné entre le premier assemblage fractionné et le noyau transitoire ou un ou plusieurs ensembles comprenant le noyau transitoire, de préférence le noyau transitoire comprend une étape de fractionnement de l'ensemble fractionné en :

- le premier assemblage fractionné, et
- le noyau transitoire.

Dans une deuxième variante de la deuxième forme de réalisation dans laquelle le noyau transitoire est séparé avec le deuxième assemblage fractionné, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage:

- une étape de séparation de l'assemblage transitoire entre:

  ◦ un ensemble fractionné comprenant au moins une couche constituée de M4'>1 éléments filaires métalliques enroulés en hélice autour du noyau transitoire, les M4'>1 éléments filaires métalliques étant issus de la couche constituée des M'>1 éléments filaires métalliques de l'assemblage transitoire, et
  ◦ le premier assemblage fractionné

- une étape de séparation de l'ensemble fractionné entre:

  ◦ le deuxième assemblage fractionné, et
  ◦ le noyau transitoire.

Dans cette deuxième variante de la deuxième forme de réalisation, M'=M4'+M1' et M4'=M2'.

Tout comme dans la première variante, dans cette deuxième variante de la deuxième forme de réalisation, l'ensemble fractionné est constitué de la couche constituée par les M4' éléments filaires métalliques et du noyau transitoire, les éléments filaires métalliques étant enroulés en hélice autour du noyau transitoire.

Dans cette deuxième variante de la deuxième forme de réalisation, l'étape de séparation de l'assemblage transitoire entre l'ensemble fractionné et le premier assemblage fractionné a lieu en amont de l'étape de séparation de l'ensemble fractionné entre le deuxième assemblage fractionné et le noyau transitoire ou un ou plusieurs ensembles comprenant le noyau transitoire, de préférence le noyau transitoire.

Avantageusement, dans cette deuxième variante de la deuxième forme de réalisation, l'étape de séparation de l'assemblage transitoire entre l'ensemble fractionné et le premier assemblage fractionné comprend une étape de fractionnement de l'assemblage transitoire en :

- l'ensemble fractionné, et
- le premier assemblage fractionné.

Avantageusement, dans cette deuxième variante de la deuxième forme de réalisation, l'étape de séparation de l'ensemble fractionné entre le deuxième assemblage fractionné et le noyau transitoire ou un ou plusieurs ensembles comprenant le noyau transitoire, de préférence le noyau transitoire, comprend une étape de fractionnement de l'ensemble fractionné en :

- le deuxième assemblage fractionné, et
- le noyau transitoire ou un ou plusieurs ensembles comprenant le noyau transitoire, de préférence le noyau transitoire.

Dans une troisième variante de la deuxième forme de réalisation dans laquelle le noyau transitoire est séparé en deux parties allant chacune avec les premier et deuxième assemblages fractionnés, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage:

- une étape de séparation de l'assemblage transitoire entre:

  ◦ un premier ensemble fractionné comprenant au moins une couche constituée par $M6'\geq1$ élément(s) filaire(s) métallique(s) enroulé(s) en hélice autour d'une première partie du noyau transitoire, le ou les $M6'\geq1$ élément(s) filaire(s) métallique(s) étant issu(s) de la couche constituée des M' éléments filaires métalliques de l'assemblage transitoire, et
  ◦ un deuxième ensemble fractionné comprenant au moins une couche constituée par $M7'>1$ éléments filaires métalliques enroulés en hélice autour d'une deuxième partie du noyau transitoire, les $M7'>1$ éléments filaires métalliques étant issus de la couche constituée des M' éléments filaires métalliques de l'assemblage transitoire,

  la première partie du noyau transitoire et la deuxième partie du noyau transitoire constituant, préalablement à l'étape de séparation de l'assemblage transitoire, le noyau transitoire

- une étape de séparation du premier ensemble fractionné entre:

  ◦ le premier assemblage fractionné, et
  ◦ la première partie du noyau transitoire,

- une étape de séparation du deuxième ensemble fractionné entre:

  ◦ le deuxième assemblage fractionné, et
  ◦ la deuxième partie du noyau transitoire.

Dans cette troisième variante de la deuxième forme de réalisation, M'=M6'+M7', M6'=M1' et M7'=M2'.
Dans cette troisième variante de la deuxième forme de réalisation, le premier ensemble fractionné est constitué de la couche constituée du ou des M6' élément(s) filaire(s) métallique(s) et de la première partie du noyau transitoire, le ou les M6' élément(s) filaire(s) métallique(s) étant enroulé(s) en hélice autour de la première partie du noyau transitoire.
De façon analogue, dans cette troisième variante, le deuxième ensemble fractionné est constitué de la couche constituée des M7' éléments filaires métalliques et de la deuxième partie du noyau transitoire, les M7' éléments filaires métalliques étant enroulés en hélice autour de la deuxième partie du noyau transitoire.
Dans cette troisième variante de la deuxième forme de réalisation, l'étape de séparation de l'assemblage transitoire entre le premier ensemble fractionné et le deuxième ensemble fractionné a lieu en amont de l'étape de séparation du premier ensemble fractionné entre le premier assemblage fractionné et la première partie du noyau transitoire.
Dans cette configuration de la deuxième forme de réalisation, l'étape de séparation de l'assemblage transitoire entre le premier ensemble fractionné et le deuxième ensemble fractionné a lieu en amont de l'étape de séparation du deuxième ensemble fractionné entre le deuxième assemblage fractionné et la deuxième partie du noyau transitoire.
Avantageusement, dans cette troisième variante de la deuxième forme de réalisation, l'étape de séparation de l'assemblage transitoire entre le premier ensemble fractionné et le deuxième ensemble fractionné comprend une étape de fractionnement de l'assemblage transitoire en :

- le premier ensemble fractionné, et
- le deuxième ensemble fractionné.

Avantageusement, dans cette troisième variante de la deuxième forme de réalisation, l'étape de séparation du premier ensemble fractionné entre le premier assemblage fractionné et la première partie du noyau transitoire comprend une étape de fractionnement du premier ensemble fractionné en :

- le premier assemblage fractionné, et
- la première partie du noyau transitoire.

Avantageusement, dans cette troisième variante de la deuxième forme de réalisation, l'étape de séparation du deuxième ensemble fractionné entre le deuxième assemblage fractionné et la deuxième partie du noyau transitoire comprend une étape de fractionnement du deuxième ensemble fractionné en :

- le deuxième assemblage fractionné, et
- la deuxième partie du noyau transitoire.

Dans une quatrième variante de la deuxième forme de réalisation dans laquelle le premier assemblage fractionné, le deuxième assemblage fractionné, le noyau transitoire sont séparés simultanément, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage, une étape de fractionnement de l'assemblage transitoire entre :

- le premier assemblage fractionné,
- le deuxième assemblage fractionné, et
- le noyau transitoire.

Dans une cinquième variante de la deuxième forme de réalisation dans laquelle le noyau transitoire est séparé en deux parties, l'étape de séparation de l'assemblage transitoire entre au moins le premier assemblage fractionné, le deuxième assemblage fractionné et le noyau transitoire ou un ou plusieurs ensembles comprenant le noyau transitoire comprend, en amont de l'étape de réassemblage, une étape de fractionnement de l'assemblage transitoire entre :

- le premier assemblage fractionné,
- le deuxième assemblage fractionné,
- une première partie du noyau transitoire,
- une deuxième partie du noyau transitoire,

la première partie du noyau transitoire et la deuxième partie du noyau transitoire constituant, préalablement à l'étape de séparation de l'assemblage transitoire, le noyau transitoire.

Avantageusement, M' va de 4 à 18 et de préférence de 6 à 9.

Avantageusement, afin de faciliter la sortie du noyau transitoire dans les modes de réalisation dans lesquels le noyau transitoire est séparé avec le premier assemblage fractionné:

- M1'=1 ou 2 dans les cas où M'=4 ou M'=5 et
- $M1' \leq 0,75 \times M'$ et de préférence $M1' \leq 0,70 \times M'$ dans les cas où M'≥6.

Avantageusement, de façon analogue, afin de faciliter la sortie du noyau transitoire dans les modes de réalisation dans lesquels le noyau transitoire est séparé avec le deuxième assemblage fractionné:

- M2'=1 ou 2 dans les cas où M'=4 ou M'=5 et
- $M2' \leq 0,75 \times M'$ et de préférence $M2' \leq 0,70 \times M'$ dans les cas où M'≥6.

Avantageusement, de façon analogue, afin de faciliter la sortie du noyau transitoire dans les modes de réalisation dans lesquels le noyau transitoire est séparé en deux parties allant chacune avec les premier et deuxième assemblages fractionnés:

- M1'=1, 2 ou 3 et M2'=1 ,2 ou 3 dans les cas où M'=4 ou M'=5 et
- $M1' \leq 0,75 \times M'$ dans les cas où M'≥6.
- $M2' \leq 0,75 \times M'$ dans les cas où M'≥6.

Afin de faciliter encore davantage la sortie du noyau transitoire dans les modes de réalisation dans lesquels le noyau transitoire est séparé en deux parties allant chacune avec les premier et deuxième assemblages dans les cas où M'≥6, $M1' \leq 0,70 \times M'$ et $M2' \leq 0,70 \times M'$.

De façon très préférentielle, l'étape de fourniture de l'assemblage transitoire comprend une étape d'assemblage par retordage des M'>1 éléments filaires métalliques enroulés en hélice autour du noyau transitoire.

Avantageusement, l'étape de fourniture de l'assemblage transitoire comprend une étape d'équilibrage de l'assemblage transitoire. Ainsi, l'étape d'équilibrage étant réalisée sur l'assemblage transitoire comprenant les M' éléments filaires métalliques et le noyau transitoire, l'étape d'équilibrage est implicitement réalisée en amont de l'étape de séparation entre les premier et deuxième assemblages fractionnés. On évite d'avoir à gérer la torsion résiduelle imposée lors de l'étape d'assemblage de l'assemblage transitoire lors du trajet des différents assemblages en aval de l'étape d'assemblage, notamment dans les moyens de guidage, par exemple les poulies.

Avantageusement, le procédé comprend une étape d'équilibrage du câble selon l'invention en aval de l'étape de réassemblage.

Avantageusement, le procédé comprend une étape d'entretien de la rotation du câble selon l'invention autour de sa direction de défilement respective. On réalise cette étape d'entretien de la rotation en aval de l'étape de séparation de l'assemblage transitoire et en amont de l'étape d'équilibrage du câble selon l'invention.

De préférence, le procédé est dépourvu d'étapes de préformation individuelle de chacun des éléments filaires métalliques. Dans les procédés de l'état de la technique utilisant une étape de préformation individuelle de chacun des éléments filaires métalliques, ces derniers se voient imposés une forme par des outils de préformation, par exemple des galets, ces outils créant des défauts à la surface des éléments filaires métalliques. Ces défauts réduisent notablement l'endurance des éléments filaires métalliques et donc du câble selon l'invention.

Une installation permettant de fabriquer un câble selon l'invention comprend:

- des moyens de fourniture d'un assemblage transitoire comprenant au moins une couche constituée de M'>1 éléments filaires métalliques enroulés en hélice autour d'un noyau transitoire,
- des moyens de séparation de l'assemblage transitoire entre au moins:

  ◦ un premier assemblage fractionné comprenant au moins une couche constituée de M1'≥1 élément(s) filaire(s) métallique(s) enroulé(s) en hélice, le ou les M1' élément(s) filaire(s) métallique(s) étant issu(s) de la couche constituée de M'>1 éléments filaires métalliques de l'assemblage transitoire,
  ◦ un deuxième assemblage fractionné comprenant au moins une couche constituée de M2'>1 éléments filaires métalliques enroulés en hélice, les M2' éléments filaires métalliques étant issus de la couche constituée de M'>1 éléments filaires métalliques de l'assemblage transitoire,
  ◦ le noyau transitoire ou un ou plusieurs ensembles comprenant le noyau transitoire,

l'installation comprenant des moyens de réassemblage d'au moins le premier assemblage fractionné avec le deuxième assemblage fractionné pour former la couche constituée de N éléments filaires métalliques enroulés en hélice.

Afin de permettre l'obtention d'un assemblage dans lequel les éléments filaires métalliques présentent des caractéristiques géométriques identiques, les moyens de fourniture, les moyens de séparation et les moyens de réassemblage sont agencés de sorte que tous les N éléments filaires métalliques présentent un même diamètre Df, sont enroulés en hélice selon un même pas P et présentent un même diamètre d'hélice Dh.

En outre, comme décrit ci-dessus, suivant les différents modes de réalisation, les moyens de séparation et les moyens de réassemblage sont agencés de sorte que M'≥M1'+M2'=N.

Dans l'installation, des moyens de fractionnement d'un objet initial en plusieurs objets finaux signifient que, en mettant en oeuvre ces moyens de fractionnement, l'objet initial est divisé en les objets finaux et seulement ces objets finaux de sorte que l'objet initial se retrouve intégralement dans les objets finaux. De plus, en utilisant des moyens de fractionnement, l'objet initial est divisé en les objets finaux de façon simultanée, c'est-à-dire que les objets finaux sont séparés en un même point de fractionnement. En particulier, dans le cas d'un objet initial fractionné en au moins trois objets finaux, les trois objets finaux sont, en utilisant des moyens de fractionnement, séparés simultanément les uns des autres et en un même point.

Dans l'installation, des moyens de séparation d'un objet initial entre plusieurs objets finaux signifient que, pour obtenir ces objets finaux, au moins des moyens de fractionnement sont nécessaires. Ainsi, pour obtenir les objets finaux, les moyens de séparation comprennent des moyens de fractionnement de l'objet initial en les objets finaux ou bien comprennent des moyens de fractionnement de l'objet initial en des objets intermédiaires et des moyens de fractionnement des objets intermédiaires en les objets finaux. En utilisant les moyens de séparation, l'objet initial ne se retrouve pas nécessairement intégralement dans les objets finaux, des ensembles ou assemblages ayant pu être extraits du procédé lors de leur passage dans des moyens de fractionnement et non utilisés lors de leur passage dans des moyens de fractionnement ultérieurs. Enfin, des moyens de séparation peuvent comprendre des moyens de réassemblage entre plusieurs objets intermédiaires issus de moyens de fractionnement des moyens de séparation pour obtenir d'autres objets intermédiaires ou bien les objets finaux.

Dans une première forme de réalisation permettant un réassemblage partiel des M' éléments filaires métalliques, les moyens de séparation et les moyens de réassemblage sont agencés de sorte que M1'+M2'<M'.

Dans des première et deuxième variantes de la première forme de réalisation, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage :

- des moyens de séparation de l'assemblage transitoire entre :

   ◦ un ensemble précurseur comprenant au moins une couche constituée de M1">1 éléments filaires métalliques enroulés en hélice, les M1" éléments filaires métalliques étant issus de la couche constituée de M'>1 éléments filaires métalliques de l'assemblage transitoire,
   ◦ le deuxième assemblage fractionné, et
   ◦ le noyau transitoire ou un ou plusieurs ensembles comprenant le noyau transitoire, de préférence le noyau transitoire

- des moyens de séparation de l'ensemble précurseur entre:

   ◦ un ensemble principal comprenant au moins une couche constituée de $M3 \geq 1$ élément(s) filaire(s) métallique(s) enroulé(s) en hélice, le ou les $M3 \geq 1$ élément(s) filaire(s) métallique(s) étant issu(s) de la couche constituée des M1">1 éléments filaires métalliques de l'ensemble précurseur, l'ensemble principal formant le premier assemblage fractionné et
   ◦ un ensemble complémentaire comprenant au moins une couche constituée de $M3' \geq 1$ élément(s) filaire(s) métallique(s) enroulé(s) en hélice, le ou les $M3' \geq 1$ élément(s) filaire(s) métallique(s) étant issu(s) de la couche constituée des M1">1 éléments filaires métalliques de l'ensemble précurseur.

Dans ce premier mode de réalisation, les moyens de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, sont agencés en amont des moyens de séparation de l'ensemble précurseur entre les ensembles principal et complémentaire.

Avantageusement, les moyens de séparation de l'ensemble précurseur entre l'ensemble principal formant le premier assemblage fractionné et l'ensemble complémentaire comprennent des moyens de fractionnement de l'ensemble précurseur en :

- l'ensemble principal formant le premier assemblage fractionné, et
- l'ensemble complémentaire.

Dans une première variante de la première forme de réalisation dans laquelle le noyau transitoire est séparé avec le premier assemblage fractionné, les moyens de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprennent :

- des moyens de séparation de l'assemblage transitoire entre:

   ◦ un ensemble fractionné comprenant au moins une couche constituée de M4'>1 éléments filaires métalliques enroulés en hélice autour du noyau transitoire, les M4' éléments filaires métalliques étant issus de la couche constituée de M' éléments filaires métalliques de l'assemblage transitoire, et
   ◦ le deuxième assemblage fractionné,

- des moyens de séparation de l'ensemble fractionné entre:

   ◦ l'ensemble précurseur, et
   ◦ le noyau transitoire ou un ou plusieurs ensembles comprenant le noyau transitoire, de préférence le noyau transitoire.

Dans cette première variante, les moyens de séparation de l'ensemble fractionné entre l'ensemble précurseur et le noyau transitoire ou un ou plusieurs ensembles comprenant le noyau transitoire, de préférence le noyau transitoire, sont agencés en amont des moyens de séparation de l'ensemble précurseur entre les ensembles principal et complémentaire.

Avantageusement, dans cette première variante, les moyens de séparation de l'assemblage transitoire entre l'ensemble fractionné et le deuxième assemblage fractionné comprennent des moyens de fractionnement de l'assemblage transitoire en :

- l'ensemble fractionné, et
- le deuxième assemblage fractionné.

Avantageusement, dans cette première variante, les moyens de séparation de l'ensemble fractionné entre l'ensemble précurseur et le noyau transitoire ou un ou plusieurs ensembles comprenant le noyau transitoire, de préférence le noyau transitoire comprennent des moyens de fractionnement de l'ensemble fractionné en :

- l'ensemble précurseur, et
- le noyau transitoire ou un ou plusieurs ensembles comprenant le noyau transitoire, de préférence le noyau transitoire.

Dans une deuxième variante de la première forme de réalisation dans laquelle le noyau transitoire est séparé avec le deuxième assemblage fractionné, les moyens de séparation de l'assemblage transitoire entre l'ensemble précurseur, le deuxième assemblage fractionné et le noyau transitoire ou un ou plusieurs ensembles comprenant le noyau transitoire, de préférence le noyau transitoire, comprennent :

- des moyens de séparation de l'assemblage transitoire entre:

  ○ un ensemble fractionné comprenant au moins une couche constituée de $M4'>1$ éléments filaires métalliques enroulés en hélice autour du noyau transitoire, les $M4'$ éléments filaires métalliques étant issus de la couche constituée de $M'>1$ éléments filaires métalliques de l'assemblage transitoire, et
  ○ l'ensemble précurseur, et

- des moyens de séparation de l'ensemble fractionné entre:

  ○ le deuxième assemblage fractionné, et
  ○ le noyau transitoire ou un ou plusieurs ensembles comprenant le noyau transitoire, de préférence le noyau transitoire.

Dans cette deuxième variante, les moyens de séparation de l'assemblage transitoire entre l'ensemble fractionné et l'ensemble précurseur sont agencés en amont des moyens de séparation de l'ensemble fractionné entre le deuxième assemblage fractionné et le noyau transitoire ou un ou plusieurs ensembles comprenant le noyau transitoire, de préférence le noyau transitoire.

Avantageusement, dans cette deuxième variante, les moyens de séparation de l'assemblage transitoire entre l'ensemble fractionné et l'ensemble précurseur comprennent des moyens de fractionnement de l'assemblage transitoire en :

- l'ensemble fractionné, et
- l'ensemble précurseur.

Avantageusement, dans cette deuxième variante, les moyens de séparation de l'ensemble fractionné entre le deuxième assemblage fractionné et le noyau transitoire ou un ou plusieurs ensembles comprenant le noyau transitoire, de préférence le noyau transitoire, comprennent des moyens de fractionnement de l'ensemble fractionné en :

- le deuxième assemblage fractionné, et
- le noyau transitoire ou un ou plusieurs ensembles comprenant le noyau transitoire, de préférence le noyau transitoire.

Dans une troisième variante de la première forme de réalisation dans laquelle le noyau transitoire est séparé avec le premier assemblage fractionné, les moyens de séparation de l'assemblage transitoire entre au moins le premier assemblage fractionné, le deuxième assemblage fractionné et le noyau transitoire ou un ou plusieurs ensembles comprenant le noyau transitoire, de préférence le noyau transitoire, comprennent, en amont des moyens de réassemblage:

- des moyens de séparation de l'assemblage transitoire entre:

  ○ un ensemble fractionné comprenant au moins une couche constituée de $M4'>1$ éléments filaires métalliques enroulés en hélice autour du noyau transitoire, les $M4'$ éléments filaires métalliques étant issus de la couche constituée de $M'$ éléments filaires métalliques de l'assemblage transitoire, et

◦ le deuxième assemblage fractionné,

- des moyens de séparation de l'ensemble fractionné entre:

◦ le premier assemblage fractionné, et
◦ le noyau transitoire ou un ou plusieurs ensembles comprenant le noyau transitoire, de préférence le noyau transitoire.

Dans cette troisième variante, les moyens de séparation de l'assemblage transitoire entre l'ensemble fractionné et le deuxième assemblage fractionné sont agencés en amont des moyens de séparation de l'ensemble fractionné entre le premier assemblage fractionné et le noyau transitoire ou un ou plusieurs ensembles comprenant le noyau transitoire, de préférence le noyau transitoire.

Avantageusement, dans cette troisième variante, les moyens de séparation de l'assemblage transitoire entre l'ensemble fractionné et le deuxième assemblage fractionné comprennent des moyens de fractionnement de l'assemblage transitoire en :

- l'ensemble fractionné, et
- le deuxième assemblage fractionné.

Avantageusement, les moyens de séparation de l'ensemble fractionné entre le premier assemblage fractionné et le noyau transitoire ou un ou plusieurs ensembles comprenant le noyau transitoire, de préférence le noyau transitoire, comprennent des moyens de séparation de l'ensemble fractionné entre:

◦ un ensemble principal comprenant au moins une couche constituée de $M3 \geq 1$ élément(s) filaire(s) métallique(s) enroulé(s) en hélice, le ou les $M3 \geq 1$ élément(s) filaire(s) métallique(s) étant issu(s) de la couche constituée des $M4'>1$ éléments filaires métalliques de l'ensemble fractionné, l'ensemble principal formant le premier assemblage fractionné,
◦ un ensemble complémentaire comprenant au moins une couche constituée de $M3' \geq 1$ élément(s) filaire(s) métallique(s) enroulé(s) en hélice, le ou les $M3' \geq 1$ élément(s) filaire(s) métallique(s) étant issu(s) de la couche constituée des $M4'>1$ éléments filaires métalliques de l'ensemble fractionné, et
◦ le noyau transitoire ou un ou plusieurs ensembles comprenant le noyau transitoire, de préférence le noyau transitoire.

Avantageusement, les moyens de séparation de l'ensemble fractionné entre l'ensemble principal formant le premier assemblage fractionné, l'ensemble complémentaire et le noyau transitoire ou un ou plusieurs ensembles comprenant le noyau transitoire, de préférence le noyau transitoire, comprennent:

- des moyens de séparation de l'ensemble fractionné entre:

◦ l'ensemble principal formant le premier assemblage fractionné,
◦ un ensemble dérivé comprenant au moins une couche constituée de $M5' \geq 1$ élément(s) filaire(s) métallique(s) enroulé(s) en hélice autour d'un noyau transitoire, le ou les $M5' \geq 1$ élément(s) filaire(s) métallique(s) étant issu(s) de la couche constituée des $M4'>1$ éléments filaires métalliques de l'ensemble fractionné,

- des moyens de séparation de l'ensemble dérivé entre:

◦ l'ensemble complémentaire,
◦ le noyau transitoire ou un ou plusieurs ensembles comprenant le noyau transitoire, de préférence le noyau transitoire.

Dans cette troisième variante, les moyens de séparation l'ensemble fractionné entre l'ensemble principal et l'ensemble dérivé sont agencés en amont des moyens de séparation de l'ensemble dérivé entre l'ensemble complémentaire et le noyau transitoire ou un ou plusieurs ensembles comprenant le noyau transitoire, de préférence le noyau transitoire.

Avantageusement, dans cette troisième variante, les moyens de séparation de l'ensemble fractionné entre l'ensemble principal formant le premier assemblage fractionné et l'ensemble dérivé comprennent des moyens de fractionnement de l'ensemble fractionné en :

- l'ensemble principal formant le premier assemblage fractionné, et
- l'ensemble dérivé.

Avantageusement, dans cette troisième variante, les moyens de séparation de l'ensemble dérivé entre l'ensemble complémentaire et le noyau transitoire ou un ou plusieurs ensembles comprenant le noyau transitoire, de préférence le noyau transitoire comprennent des moyens de fractionnement de l'ensemble dérivé en :

- l'ensemble complémentaire, et
- le noyau transitoire ou un ou plusieurs ensembles comprenant le noyau transitoire, de préférence le noyau transitoire.

Dans une quatrième variante de la première forme de réalisation dans laquelle le premier assemblage fractionné, le deuxième assemblage fractionné, le noyau transitoire sont séparés simultanément, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage, des moyens de fractionnement de l'assemblage transitoire entre :

- le premier assemblage fractionné,
- le deuxième assemblage fractionné,
- le noyau transitoire ou un ou plusieurs ensembles comprenant le noyau transitoire, de préférence le noyau transitoire, et
- un ensemble fractionné comprenant au moins une couche constituée de M4'$\geq$1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

Dans une configuration de la première forme de réalisation dans laquelle le noyau transitoire est séparé en deux parties allant chacune avec les premier et deuxième assemblages fractionnés, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage :

- des moyens de séparation de l'assemblage transitoire entre:

  ◦ un premier ensemble fractionné comprenant au moins une couche constituée par M6'>1 éléments filaires métalliques enroulés en hélice autour d'une première partie du noyau transitoire, les M6'>1 éléments filaires métalliques étant issus de la couche constituée des M' éléments filaires métalliques de l'assemblage transitoire, et
  ◦ un deuxième ensemble fractionné comprenant au moins une couche constituée par M7'>1 éléments filaires métalliques enroulés en hélice autour d'une deuxième partie du noyau transitoire, les M7'>1 éléments filaires métalliques étant issus de la couche constituée des M' éléments filaires métalliques de l'assemblage transitoire,

la première partie du noyau transitoire et la deuxième partie du noyau transitoire constituant, en amont des moyens de séparation de l'assemblage transitoire, le noyau transitoire

- des moyens de séparation du premier ensemble fractionné entre :

  ◦ le premier assemblage fractionné,
  ◦ la première partie du noyau transitoire ou un ou plusieurs ensembles comprenant la première partie du noyau transitoire, de préférence la première partie du noyau transitoire

- des moyens de séparation du deuxième ensemble fractionné entre:

  ◦ le deuxième assemblage fractionné, et
  ◦ la deuxième partie du noyau transitoire ou un ou plusieurs ensembles comprenant la deuxième partie du noyau transitoire, de préférence la deuxième partie du noyau transitoire.

Dans cette configuration de la première forme de réalisation, les moyens de séparation de l'assemblage transitoire entre le premier ensemble fractionné et le deuxième ensemble fractionné sont agencés en amont des moyens de séparation du premier ensemble fractionné entre le premier assemblage fractionné et la première partie du noyau transitoire ou un ou plusieurs ensembles comprenant la première partie du noyau transitoire, de préférence la première partie du noyau transitoire,.

Dans cette configuration de la première forme de réalisation, les moyens de séparation de l'assemblage transitoire entre le premier ensemble fractionné et le deuxième ensemble fractionné sont agencés en amont des moyens de séparation du deuxième ensemble fractionné entre le deuxième assemblage fractionné, et la deuxième partie du noyau transitoire ou un ou plusieurs ensembles comprenant la deuxième partie du noyau transitoire, de préférence la deuxième partie du noyau transitoire.

Avantageusement, dans cette configuration de la première forme de réalisation, les moyens de séparation de l'assemblage transitoire entre le premier ensemble fractionné et le deuxième ensemble fractionné comprennent des moyens de fractionnement de l'assemblage transitoire en :

- le premier ensemble fractionné, et
- le deuxième ensemble fractionné.

Avantageusement, dans cette configuration de la première forme de réalisation, les moyens de séparation du deuxième ensemble fractionné entre le deuxième assemblage fractionné et la deuxième partie du noyau transitoire ou un ou plusieurs ensembles comprenant la deuxième partie du noyau transitoire, de préférence la deuxième partie du noyau transitoire comprennent des moyens de fractionnement du deuxième ensemble fractionné en :

- le deuxième assemblage fractionné, et
- la deuxième partie du noyau transitoire ou un ou plusieurs ensembles comprenant la deuxième partie du noyau transitoire, de préférence la deuxième partie du noyau transitoire.

Avantageusement, dans cette configuration de la première forme de réalisation dans laquelle le noyau transitoire est séparé en deux parties allant chacune avec les premier et deuxième assemblages fractionnés, les moyens de séparation du premier ensemble fractionné entre le premier assemblage fractionné et la première partie du noyau transitoire ou un ou plusieurs ensembles comprenant la première partie du noyau transitoire, de préférence la première partie du noyau transitoire, comprennent des moyens de séparation du premier ensemble fractionné entre :

- un ensemble principal comprenant au moins une couche constituée de $M3 \geq 1$ élément(s) filaire(s) métallique(s) enroulé(s) en hélice, le ou les $M3 \geq 1$ élément(s) filaire(s) métallique(s) étant issu(s) de la couche constituée des $M6' > 1$ éléments filaires métalliques du premier ensemble fractionné, l'ensemble principal formant le premier assemblage fractionné,
- un ensemble complémentaire comprenant au moins une couche constituée de $M3' \geq 1$ élément(s) filaire(s) métallique(s) enroulé(s) en hélice, le ou les $M3' \geq 1$ élément(s) filaire(s) métallique(s) étant issu(s) de la couche constituée des $M6' > 1$ éléments filaires métalliques du premier ensemble fractionné, et
- la première partie du noyau transitoire ou un ou plusieurs ensembles comprenant la première partie du noyau transitoire, de préférence la première partie du noyau transitoire.

Dans une première variante de cette configuration de la première forme de réalisation dans laquelle le noyau transitoire est séparé en deux parties allant chacune avec les premier et deuxième assemblages fractionnés, les moyens de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprennent:

- des moyens de séparation du premier ensemble fractionné entre:

  ◦ un ensemble précurseur comprenant au moins une couche constituée de $M1'' > 1$ éléments filaires métalliques enroulés en hélice, les $M1''$ éléments filaires métalliques étant issus de la couche constituée de $M6' > 1$ éléments filaires métalliques du premier ensemble fractionné,
  ◦ la première partie du noyau transitoire ou un ou plusieurs ensembles comprenant la première partie du noyau transitoire, de préférence la première partie du noyau transitoire,

  - des moyens de séparation de l'ensemble précurseur entre:

    ◦ l'ensemble principal formant le premier assemblage fractionné et
    ◦ l'ensemble complémentaire.

Dans cette première variante de cette configuration de la première forme de réalisation, les moyens de séparation du premier ensemble fractionné entre l'ensemble précurseur et la première partie du noyau transitoire ou un ou plusieurs ensembles comprenant la première partie du noyau transitoire, de préférence la première partie du noyau transitoire, sont agencés en amont des moyens de séparation de l'ensemble précurseur entre l'ensemble principal formant le premier assemblage fractionné et l'ensemble complémentaire.

Avantageusement, dans cette première variante de cette configuration de la première forme de réalisation, les moyens de séparation du premier ensemble fractionné entre l'ensemble précurseur et la première partie du noyau transitoire ou un ou plusieurs ensembles comprenant la première partie du noyau transitoire, de préférence la première partie du noyau transitoire, comprennent des moyens de fractionnement du premier ensemble fractionné en :

- l'ensemble précurseur, et
- la première partie du noyau transitoire ou un ou plusieurs ensembles comprenant la première partie du noyau transitoire, de préférence la première partie du noyau transitoire.

Avantageusement, dans cette première variante de cette configuration de la première forme de réalisation, les moyens de séparation de l'ensemble précurseur entre l'ensemble principal formant le premier assemblage fractionné et l'ensemble complémentaire comprennent des moyens de fractionnement de l'ensemble précurseur en :

- l'ensemble principal formant le premier assemblage fractionné, et
- l'ensemble complémentaire.

Dans une deuxième variante de cette configuration de la première forme de réalisation dans laquelle le noyau transitoire est séparé en deux parties allant chacune avec les premier et deuxième assemblages fractionnés, les moyens de séparation du premier ensemble fractionné entre l'ensemble principal formant le premier assemblage fractionné, l'ensemble complémentaire et la première partie du noyau transitoire ou un ou plusieurs ensembles comprenant la première partie du noyau transitoire, de préférence la première partie du noyau transitoire, comprennent:

- des moyens de séparation du premier ensemble fractionné entre:

  ◦ l'ensemble principal formant le premier assemblage fractionné,
  ◦ un ensemble dérivé comprenant au moins une couche constituée de $M5' \geq 1$ élément(s) filaire(s) métallique(s) enroulé(s) en hélice autour de la première partie du noyau transitoire, le ou les $M5' \geq 1$ élément(s) filaire(s) métallique(s) étant issu(s) de la couche constituée des $M6' > 1$ éléments filaires métalliques du premier ensemble fractionné,

- des moyens de séparation de l'ensemble dérivé entre:

  ◦ l'ensemble complémentaire,
  ◦ la première partie du noyau transitoire ou un ou plusieurs ensembles comprenant le noyau transitoire, de préférence la première partie du noyau transitoire.

Dans cette deuxième variante de cette configuration de la première forme de réalisation, les moyens de séparation du premier ensemble fractionné entre l'ensemble principal et l'ensemble dérivé sont agencés en amont des moyens de séparation de l'ensemble dérivé entre l'ensemble complémentaire et la première partie du noyau transitoire ou un ou plusieurs ensembles comprenant la première partie du noyau transitoire, de préférence la première partie du noyau transitoire.

Avantageusement, dans cette deuxième variante de cette configuration de la première forme de réalisation, les moyens de séparation du premier ensemble fractionné entre l'ensemble principal formant le premier assemblage fractionné et l'ensemble dérivé comprennent des moyens de fractionnement du premier ensemble fractionné en :

- l'ensemble principal formant le premier assemblage fractionné, et
- l'ensemble dérivé.

Avantageusement, dans cette deuxième variante de cette configuration de la première forme de réalisation, les moyens de séparation de l'ensemble dérivé entre l'ensemble complémentaire et la première partie du noyau transitoire ou un ou plusieurs ensembles comprenant le noyau transitoire, de préférence la première partie du noyau transitoire comprennent des moyens de fractionnement de l'ensemble dérivé en :

- l'ensemble complémentaire, et
- la première partie du noyau transitoire ou un ou plusieurs ensembles comprenant le noyau transitoire, de préférence la première partie du noyau transitoire.

Dans une autre configuration de la première forme de réalisation dans laquelle le noyau transitoire est séparé en deux parties, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage, des moyens de fractionnement de l'assemblage transitoire entre :

- le premier assemblage fractionné,
- le deuxième assemblage fractionné,
- une première partie du noyau transitoire,
- une deuxième partie du noyau transitoire,

la première partie du noyau transitoire et la deuxième partie du noyau transitoire constituant, préalablement à l'étape de séparation de l'assemblage transitoire, le noyau transitoire,

- un ensemble fractionné comprenant au moins une couche constituée de M4'≥1 élément(s) filaire(s) métallique(s) enroulé(s) en hélice, le ou les M4' élément(s) filaire(s) métallique(s) étant issu(s) de la couche constituée de M' éléments filaires métalliques de l'assemblage transitoire.

Dans une deuxième forme de réalisation permettant un réassemblage total des M' éléments filaires métalliques, les moyens de séparation et les moyens de réassemblage sont agencés de sorte que M1'+M2'=M'.

Dans une première variante de la deuxième forme de réalisation dans laquelle le noyau transitoire est séparé avec le premier assemblage fractionné, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage:

- des moyens de séparation de l'assemblage transitoire entre:

    ◦ un ensemble fractionné comprenant au moins une couche constituée par M4'≥1 élément(s) filaire(s) métallique(s) enroulé(s) en hélice autour du noyau transitoire, le ou les M4'≥1 élément(s) filaire(s) métallique(s) étant issu(s) de la couche constituée des M'>1 éléments filaires métalliques de l'assemblage transitoire et
    ◦ le deuxième assemblage fractionné,

- des moyens de séparation de l'ensemble fractionné entre:

    ◦ le premier assemblage fractionné, et
    ◦ le noyau transitoire.

Dans cette première variante de la deuxième forme de réalisation, les moyens de séparation de l'assemblage transitoire entre l'ensemble fractionné et le deuxième assemblage fractionné sont agencés en amont des moyens de séparation de l'ensemble fractionné entre le premier assemblage fractionné et le noyau transitoire.

Avantageusement, dans cette première variante de la deuxième forme de réalisation, les moyens de séparation de l'assemblage transitoire entre l'ensemble fractionné et le deuxième assemblage fractionné comprennent des moyens de fractionnement de l'assemblage transitoire entre l'ensemble fractionné et le deuxième assemblage fractionné.

Avantageusement, dans cette première variante de la deuxième forme de réalisation, les moyens de séparation de l'ensemble fractionné entre le premier assemblage fractionné et le noyau transitoire comprennent des moyens de fractionnement de l'ensemble fractionné en :

- le premier assemblage fractionné, et
- le noyau transitoire.

Dans une deuxième variante de la deuxième forme de réalisation dans laquelle le noyau transitoire est séparé avec le deuxième assemblage fractionné, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage:

- des moyens de séparation de l'assemblage transitoire entre:

  ◦ un ensemble fractionné comprenant au moins une couche constituée de M4'>1 éléments filaires métalliques enroulés en hélice autour du noyau transitoire, les M4'>1 éléments filaires métalliques étant issus de la couche constituée des M'>1 éléments filaires métalliques de l'assemblage transitoire et
  ◦ le premier assemblage fractionné

- des moyens de séparation de l'ensemble fractionné entre:

  ◦ le deuxième assemblage fractionné, et
  ◦ le noyau transitoire.

Dans cette deuxième variante de la deuxième forme de réalisation, les moyens de séparation de l'assemblage transitoire entre l'ensemble fractionné et le premier assemblage fractionné sont agencés en amont des moyens de séparation de l'ensemble fractionné entre le deuxième assemblage fractionné et le noyau transitoire.

Avantageusement, dans cette deuxième variante de la deuxième forme de réalisation, les moyens de séparation de l'assemblage transitoire entre l'ensemble fractionné et le premier assemblage fractionné comprennent des moyens de fractionnement de l'assemblage transitoire en :

- l'ensemble fractionné, et
- le premier assemblage fractionné.

Avantageusement, dans cette deuxième variante de la deuxième forme de réalisation, les moyens de séparation de l'ensemble fractionné entre le deuxième assemblage fractionné et le noyau transitoire comprennent des moyens de fractionnement de l'ensemble fractionné en :

- le deuxième assemblage fractionné, et
- le noyau transitoire.

Dans une troisième variante de la deuxième forme de réalisation dans laquelle le noyau transitoire est séparé en deux parties allant chacune avec les premier et deuxième assemblages fractionnés, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage:

- des moyens de séparation de l'assemblage transitoire entre:

  ◦ un premier ensemble fractionné comprenant au moins une couche constituée par M6'≥1 élément(s) filaire(s) métallique(s) enroulé(s) en hélice autour d'une première partie du noyau transitoire, le ou les M6'≥1 élément(s) filaire(s) métallique(s) étant issu(s) de la couche constituée des M' éléments filaires métalliques de l'assemblage transitoire, et
  ◦ un deuxième ensemble fractionné comprenant au moins une couche constituée par M7'>1 éléments filaires métalliques enroulés en hélice autour d'une deuxième partie du noyau transitoire, les M7'>1 éléments filaires métalliques étant issus de la couche constituée des M' éléments filaires métalliques de l'assemblage transitoire,

  la première partie du noyau transitoire et la deuxième partie du noyau transitoire constituant, en amont des moyens de séparation de l'assemblage transitoire, le noyau transitoire

- des moyens de séparation du premier ensemble fractionné entre:

  ◦ le premier assemblage fractionné, et
  ◦ la première partie du noyau transitoire,

- des moyens de séparation du deuxième ensemble fractionné entre:

  ◦ le deuxième assemblage fractionné, et
  ◦ la deuxième partie du noyau transitoire.

Dans cette troisième variante de la deuxième forme de réalisation, les moyens de séparation de l'assemblage transitoire entre le premier ensemble fractionné et le deuxième ensemble fractionné sont agencés en amont des moyens de séparation du premier ensemble fractionné entre le premier assemblage fractionné et la première partie du noyau transitoire.

Dans cette configuration de la deuxième forme de réalisation, les moyens de séparation de l'assemblage transitoire entre le premier ensemble fractionné et le deuxième ensemble fractionné sont agencés en amont des moyens de séparation du deuxième ensemble fractionné entre le deuxième assemblage fractionné et la deuxième partie du noyau transitoire.

Avantageusement, dans cette troisième variante de la deuxième forme de réalisation, les moyens de séparation de l'assemblage transitoire entre le premier ensemble fractionné et le deuxième ensemble fractionné comprennent des moyens de fractionnement de l'assemblage transitoire en le premier ensemble fractionné et le deuxième ensemble fractionné.

Avantageusement, dans cette troisième variante de la deuxième forme de réalisation, les moyens de séparation du premier ensemble fractionné entre le premier assemblage fractionné et la première partie du noyau transitoire comprennent des moyens de fractionnement du premier ensemble fractionné en :

- le premier assemblage fractionné, et
- la première partie du noyau transitoire.

Avantageusement, dans cette troisième variante de la deuxième forme de réalisation, les moyens de séparation du deuxième ensemble fractionné entre le deuxième assemblage fractionné et la deuxième partie du noyau transitoire comprennent des moyens de fractionnement du deuxième ensemble fractionné en :

- le deuxième assemblage fractionné, et
- la deuxième partie du noyau transitoire.

Dans une quatrième variante de la deuxième forme de réalisation dans laquelle le premier assemblage fractionné, le deuxième assemblage fractionné, le noyau transitoire sont séparés simultanément, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage, des moyens de fractionnement de l'assemblage transitoire entre :

- le premier assemblage fractionné,
- le deuxième assemblage fractionné, et
- le noyau transitoire.

Dans une cinquième variante de la deuxième forme de réalisation dans laquelle le noyau transitoire est séparé en deux parties, les moyens de séparation de l'assemblage transitoire entre au moins le premier assemblage fractionné, le deuxième assemblage fractionné et le noyau transitoire ou un ou plusieurs ensembles comprenant le noyau transitoire comprennent, en amont des moyens de réassemblage, des moyens de fractionnement de l'assemblage transitoire entre :

- le premier assemblage fractionné,
- le deuxième assemblage fractionné,
- une première partie du noyau transitoire,
- une deuxième partie du noyau transitoire,

la première partie du noyau transitoire et la deuxième partie du noyau transitoire constituant, préalablement à l'étape de séparation de l'assemblage transitoire, le noyau transitoire.

De façon très préférentielle, les moyens de fourniture de l'assemblage transitoire comprennent des moyens d'assemblage par retordage des M'>1 éléments filaires métalliques enroulés en hélice autour du noyau transitoire.

Avantageusement, les moyens de fourniture de l'assemblage transitoire comprennent des moyens d'équilibrage de l'assemblage transitoire.

On pourra également envisager une étape de séparation, respectivement des moyens de séparation de l'assemblage transitoire en plus que les premier et deuxième assemblages fractionnés par exemple trois voire quatre assemblages fractionnés. Dans ces modes de réalisation, l'étape de réassemblage, respectivement les moyens de réassemblage pourront permettre le réassemblage de plus que les premier et deuxième assemblages fractionnés, par exemple le réassemblage de trois voire quatre assemblages fractionnés.

## AUTRES OBJETS DE L'INVENTION

L'invention a également pour objet l'utilisation d'un tel câble pour le renforcement d'articles ou produits semi-finis comprenant une matrice élastomérique dans laquelle est noyé le câble.

De tels articles ou produits semi-finis sont des tuyaux, des courroies, des bandes transporteuses, des chenilles, des pneumatiques pour véhicules, tant à l'état cru (c'est-à-dire avant réticulation ou vulcanisation) qu'à l'état cuit (après réticulation ou vulcanisation). De tels articles ou produits semi-finis prennent, dans des modes préférés, la forme d'une nappe.

L'invention a également pour objet un article ou produit semi-fini comprenant une matrice élastomérique dans laquelle est noyé au moins un câble tel que défini ci-dessus.

Un autre objet de l'invention est l'utilisation d'un câble tel que défini ci-dessus pour le renforcement d'un pneumatique comprenant le câble.

Enfin, l'invention a également pour objet un pneumatique comprenant un câble tel que défini précédemment noyé dans une matrice élastomérique, en d'autres termes un pneumatique comprenant un élément filaire de renfort obtenu par noyage d'un câble tel que défini ci-dessus dans une matrice élastomérique. Par pneumatique, on entend un bandage destiné à former une cavité en coopérant avec un élément support, par exemple une jante, cette cavité étant apte à être pressurisée à une pression supérieure à la pression atmosphérique. Un pneumatique selon l'invention présente une structure de forme sensiblement toroïdale.

Au sein du pneumatique selon l'invention, le câble est noyé dans la matrice élastomérique. Ainsi, au sein du pneumatique, le câble comprend un matériau de remplissage de la voûte interne à base d'une composition élastomérique et située dans la voûte interne du câble rempli. Le matériau de remplissage est ici à base de la même composition élastomérique que celle à base de de la matrice élastomérique dans laquelle est noyé le câble.

Les valeurs des caractéristiques D, Df, Dv, Rf et α ainsi que des autres caractéristiques décrites ci-dessus sont mesurées sur ou déterminées à partir de nappes et de câbles extraits d'un pneumatique. Les caractéristiques du câble décrites ci-dessus assurent, qu'à l'issue du procédé de fabrication du pneumatique, compte tenu de l'étape de conformation, le pneumatique présentera les avantages décrits ci-dessus.

Par matrice élastomérique, on entend une matrice à comportement élastomérique issue de la réticulation d'une composition élastomérique. La matrice élastomérique est ainsi à base de la composition élastomérique. Tout comme la matrice élastomérique, le matériau de remplissage est à base d'une composition élastomérique, ici la même composition que celle de la matrice dans laquelle est noyé le câble.

Par l'expression "à base de", il faut entendre que la composition comporte le mélange et/ou le produit de réaction in situ des différents constituants utilisés, certains de ces constituants pouvant réagir et/ou étant destinés à réagir entre eux, au moins partiellement, lors des différentes phases de fabrication de la composition ; la composition pouvant ainsi être à l'état totalement ou partiellement réticulé ou à l'état non-réticulé.

Par composition élastomérique, on entend que la composition comprend au moins un élastomère et au moins un autre composant. De préférence, la composition comprenant au moins un élastomère et au moins un autre composant comprend un élastomère, un système de réticulation et une charge. Les compositions utilisées pour ces nappes sont des compositions conventionnelles pour calandrage d'éléments filaires de renfort, comprennent un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs. L'adhésion entre les éléments filaires de renfort et la matrice dans laquelle ils sont noyés est assurée par exemple par une composition adhésive usuelle, par exemple une colle du type RFL ou colle équivalente.

Le module sécant en traction d'une nappe pour une force égale à 15% de la force à rupture est notée $MA_{15}$ est exprimé en daN/mm. On calcule le module $MA_{15}$ à partir d'une courbe force-allongement obtenue en appliquant la norme ASTM D2969-04 de 2014 à un câble de la nappe. On calcule le module sécant en traction du câble en déterminant la pente de la droite tracée entre les points (0,0) et le point de la courbe présentant une ordonnée égale à 15% de la force à rupture. On détermine le module $MA_{15}$ en multipliant le module sécant en traction du câble par la densité de câbles par mm de nappe. On rappelle que la densité d d'éléments filaires de renfort dans une nappe est le nombre d'éléments filaires de renfort présents dans la nappe selon une direction perpendiculaire à la direction selon laquelle les éléments filaires de renfort s'étendent dans la nappe. La densité d peut également être déterminée à partir du pas de pose p exprimée en mm, le pas de pose étant égal à la distance axe à axe entre deux éléments filaires de renfort consécutifs selon la direction perpendiculaire à la direction selon laquelle les éléments de renfort s'étendent dans la nappe. La relation entre d et p est d=100/p.

La force à rupture d'un câble est mesurée selon la norme ASTM D2969-04 de 2014. On calcule la force à rupture d'une nappe à partir d'une courbe force-allongement obtenue en appliquant la norme ASTM D2969-04 de 2014 à un câble de la nappe. On détermine la force à rupture de la nappe en multipliant la force à rupture du câble par la densité de câbles par unité de largeur de la nappe, cette densité étant telle que définie précédemment.

Les caractéristiques optionnelles décrites ci-dessous pourront être combinées les unes avec les autres dans la mesure où de telles combinaisons sont techniquement compatibles.

Les pneumatiques de l'invention peuvent être destinés à des véhicules à moteur de tourisme (comprenant notamment les véhicules 4x4 et les "SUV" (Sport Utility Vehicles)), mais également à des véhicules deux-roues tels que motos, ou à des véhicules industriels choisis parmi camionnettes, "Poids-lourd" - i.e., métro, bus, engins de transport routier (camions, tracteurs, remorques). De façon très préférentielle, les pneumatiques de l'invention sont destinés à des véhicules de tourisme.

Avantageusement, le pneumatique comprend un sommet comprenant une bande de roulement et une armature de sommet, deux flancs, deux bourrelets, chaque flanc reliant chaque bourrelet au sommet, l'armature de sommet s'étendant dans le sommet selon une direction circonférentielle du pneumatique, le pneumatique comprenant une armature de carcasse ancrée dans chacun des bourrelets et s'étendant dans les flancs et dans le sommet, l'armature de sommet étant radialement intercalée entre l'armature de carcasse et la bande de roulement, l'armature de sommet comprenant un élément filaire de renfort obtenu par noyage d'un câble tel que défini ci-dessus dans une matrice élastomérique.

De préférence, l'armature de sommet comprend une armature de frettage comprenant au moins une nappe de frettage et préférentiellement une unique nappe de frettage. L'armature de frettage est constituée préférentiellement par une nappe de frettage. Ce mode de réalisation est particulièrement approprié à un pneumatique pour véhicules de tourisme, véhicules deux-roues, véhicules industriels choisis parmi camionnettes, "Poids-lourd", par exemple métro, bus, engins de transport routier (camions, tracteurs, remorques), et préférentiellement pour véhicules de tourisme.

De préférence, l'armature de sommet comprend une armature de travail comprenant au moins une nappe de travail.

Dans un mode de réalisation, l'armature de frettage est radialement intercalée entre l'armature de travail et la bande de roulement. Ainsi, grâce à l'utilisation de câbles métalliques, l'armature de frettage exerce, en plus de sa fonction de frettage, une fonction de protection contre les perforations et les chocs bien plus efficace qu'une armature de frettage comprenant des éléments filaires de renfort de frettage textiles.

Avantageusement, la nappe de frettage comprend au moins un élément filaire de renfort de frettage obtenu par noyage d'un câble tel que défini ci-dessus dans une matrice élastomérique.

Grâce à son diamètre réduit, le câble permet de réduire les épaisseurs de la nappe de frettage, la masse de celle-ci, l'hystérèse du pneumatique et donc la résistance au roulement du pneumatique. En effet, toute chose étant égale par ailleurs, plus l'épaisseur de la nappe de frettage est importante, plus l'hystérèse de celle-ci est élevée. En réduisant le diamètre, on réduit l'épaisseur totale de la nappe tout en maintenant l'épaisseur présente au dos de chaque câble ce qui permet de maintenir les épaisseurs de découplage entre, d'une part, la bande de roulement et la nappe de frettage, et d'autre part, les nappes radialement intérieures à la nappe de frettage et la nappe de frettage. En outre, en maintenant l'épaisseur au dos de chaque câble constante, on conserve la résistance au passage des agents corrosifs au travers de la nappe de frettage ce qui permet de protéger l'armature de travail, protection d'autant plus intéressante dans le cas où l'armature de travail ne comprend qu'une unique nappe de travail.

De plus, grâce à son excellente compressibilité longitudinale, le câble permet de conférer au pneumatique une excellente endurance en compression, et ce de façon d'autant plus avantageuse dans le cas de la suppression d'une nappe de travail par rapport à un pneumatique de l'état de la technique décrit dans US2007006957. En outre, par rapport aux éléments filaires textiles de renfort de frettage de l'état de la technique décrit dans WO2016/166056, l'armature de frettage est, du fait de l'utilisation d'éléments filaires métalliques, moins chère, plus stable thermiquement et confère une protection mécanique au pneumatique. De plus, l'utilisation d'éléments filaires métalliques permet de faciliter le contrôle de l'armature de frettage par radiographie après sa fabrication. Enfin, par rapport au câble 3.26 de l'état de la technique décrit dans WO2016/166056, le câble du pneumatique selon l'invention présente une excellente compressibilité longitudinale et donc une endurance en compression largement supérieure.

Enfin, grâce à l'utilisation de câbles métalliques, l'armature de frettage exerce, en plus de sa fonction de frettage, une fonction de protection contre les perforations et les chocs bien plus efficace qu'une armature de frettage comprenant des éléments filaires de renfort de frettage textiles.

Avantageusement, le ou chaque élément filaire de renfort de frettage fait un angle strictement inférieur à 10°, de préférence inférieur ou égal à 7°, et plus préférentiellement inférieur ou égal à 5° avec la direction circonférentielle du pneumatique.

Avantageusement, la ou chaque nappe de travail comprend plusieurs éléments filaires de renfort de travail. De préférence, chaque élément filaire de renfort de travail est un élément filaire métallique.

De préférence, les éléments filaires de renfort de travail de chaque nappe sont agencés côte à côte sensiblement parallèlement les uns aux autres. Plus préférentiellement, chaque élément filaire de renfort de travail s'étend axialement d'une extrémité axiale de l'armature de travail du pneumatique à l'autre extrémité axiale de l'armature de travail du pneumatique.

De préférence, l'armature de carcasse comprend au moins une nappe de carcasse et plus préférentiellement une unique nappe de carcasse. Ainsi, l'armature de carcasse est plus préférentiellement, à l'exception de la nappe de carcasse, dépourvue de toute nappe renforcée par des éléments de renfort filaires. Les éléments de renfort filaires de telles nappes renforcées exclues de l'armature de carcasse du pneumatique comprennent les éléments de renfort filaires métalliques et les éléments de renfort filaires textiles. De façon très préférentielle, l'armature de carcasse est constituée par une nappe de carcasse. Ce mode de réalisation est particulièrement approprié à un pneumatique pour véhicules de tourisme, véhicules deux-roues, véhicules industriels choisis parmi camionnettes, "Poids-lourd", par exemple métro, bus, engins de transport routier (camions, tracteurs, remorques), et préférentiellement pour véhicules de tourisme.

Avantageusement, la nappe de carcasse comprend des éléments filaires de renfort de carcasse.

De préférence, chaque élément filaire de renfort de carcasse est un élément filaire textile. Par textile, on entend par définition un élément filaire non métallique constitué d'un ou plusieurs monofilament élémentaire textile éventuellement revêtu d'une ou plusieurs couches d'un revêtement à base d'une composition adhésive. Chaque monofilament élémentaire textile est obtenu, par exemple, par filage au fondu, filage en solution ou filage de gel. Chaque monofilament élémentaire textile est réalisé dans un matériau organique, notamment polymérique, ou inorganique, comme par exemple le verre ou le carbone. Les matériaux polymériques peuvent être du type thermoplastique, comme par exemple les polyamides aliphatiques, notamment les polyamides 6-6, et les polyesters, notamment le polyéthylène téréphthalate. Les matériaux polymériques peuvent être du type non thermoplastique, comme par exemple les polyamides aromatiques, notamment l'aramide, et la cellulose, naturelle comme artificielle, notamment la rayonne.

De préférence, chaque élément filaire de renfort de carcasse s'étend axialement d'un bourrelet du pneumatique à l'autre bourrelet du pneumatique.

Avantageusement, au moins les éléments filaires de renfort de travail et les éléments filaires de renfort de carcasse sont agencés de façon à définir, en projection sur un plan circonférentiel équatorial selon la direction radiale du pneumatique, un maillage triangulaire.

Dans un mode de réalisation avantageux, l'armature de sommet est constituée par l'armature de travail et l'armature de frettage. Ainsi, l'armature de sommet est, à l'exception de l'armature de travail et de l'armature frettage, dépourvue de toute nappe renforcée par des éléments de renfort filaires agencés sensiblement parallèlement les uns aux autres et noyés dans une matrice de composition de caoutchouc. Les éléments de renfort filaires de telles nappes renforcées exclues de l'armature de sommet du pneumatique comprennent les éléments de renfort filaires métalliques et les éléments de renfort filaires textiles.

Par nappe, on entend l'assemblage, d'une part, d'un ou de plusieurs éléments filaires de renfort et, d'autre part, d'une matrice élastomérique, le ou les éléments filaires de renfort étant noyés dans la matrice élastomérique.

Avantageusement, les éléments filaires de renfort de chaque nappe sont noyés dans une matrice élastomérique. Les différentes nappes peuvent comprendre la même matrice élastomérique ou bien des matrices élastomériques distinctes.

Dans le pneumatique décrit, le sommet comprend la bande de roulement et l'armature de sommet. On entend par bande de roulement une bande de matériau polymérique, de préférence élastomérique, délimitée :

- radialement vers l'extérieur, par une surface destinée à être au contact d'un sol et
- radialement vers l'intérieur, par l'armature de sommet.

La bande de matériau polymérique est constituée d'une nappe d'un matériau matériau polymérique, de préférence élastomérique ou bien constituée d'un empilement de plusieurs nappes, chaque nappe étant constituée d'un matériau matériau polymérique, de préférence élastomérique.

De façon très préférée, l'armature de sommet comprend une unique armature de frettage et une unique armature de travail. Ainsi, l'armature de sommet est, à l'exception de l'armature de frettage et de l'armature de travail, dépourvue de toute armature renforcée par des éléments de renfort. Les éléments de renfort de telles armatures exclues de l'armature de sommet du pneumatique comprennent les éléments de renfort filaires, les tricots ou bien encore les tissus. Ainsi, comme déjà décrit, de façon très préférentielle, l'armature de sommet est constituée de l'armature de frettage et de l'armature de travail.

Dans un mode de réalisation très préférentiel, le sommet est, à l'exception, de l'armature de sommet, dépourvue de toute armature renforcée par des éléments de renfort. Les éléments de renfort de telles armatures exclues du sommet du pneumatique comprennent les éléments de renfort filaires, les tricots ou bien encore les tissus. De façon très préférentielle, le sommet est constitué par la bande de roulement et l'armature de sommet.

Dans un mode de réalisation très préférentiel, l'armature de carcasse est agencée directement radialement au contact de l'armature de sommet et l'armature de sommet est agencée directement radialement au contact de la bande de roulement. Dans ce mode de réalisation très préférentiel, dans le cas où l'armature de travail comprend une unique nappe de travail, l'unique nappe de frettage et l'unique nappe de travail sont avantageusement agencées directement radialement au contact l'une de l'autre.

Par directement radialement au contact, on comprend que les objets considérés directement radialement au contact l'un de l'autre, ici les nappes, armatures ou la bande de roulement, ne sont séparés radialement par aucun objet, par exemple par aucune nappe, armature ni bande qui serait interposé radialement entre les objets considérés directement radialement au contact l'un de l'autre.

Dans un premier mode de réalisation du pneumatique selon l'invention, l'armature de travail comprend deux nappes de travail et préférentiellement l'armature de travail est constituée de deux nappes de travail.

Dans ce premier mode de réalisation, les éléments filaires de renfort de travail et les éléments filaires de renfort de carcasse sont agencés de façon à définir, en projection sur un plan circonférentiel équatorial selon la direction radiale du pneumatique, un maillage triangulaire. Dans ce premier mode de réalisation, les éléments filaires de renfort de frettage ne sont pas nécessaires pour définir le maillage triangulaire.

Avantageusement, dans ce premier mode de réalisation, chaque élément filaire de renfort de travail de chaque nappe de travail forme un angle allant de 10° à 40°, de préférence allant de 20° à 30° avec la direction circonférentielle du pneumatique.

Avantageusement, l'orientation de l'angle fait par les éléments filaires de renfort de travail avec la direction circonférentielle du pneumatique dans une nappe de travail est opposée à l'orientation de l'angle fait par les éléments filaires de renfort de travail avec la direction circonférentielle du pneumatique dans l'autre nappe de travail. En d'autres termes, les éléments filaires de renfort de travail d'une nappe de travail sont croisés avec les éléments filaires de renfort de travail de l'autre nappe de travail.

Avantageusement, chaque élément filaire de renfort de carcasse fait un angle supérieur ou égal à 80°, de préférence allant de 80° à 90° avec la direction circonférentielle du pneumatique dans le plan médian du pneumatique, autrement dit dans le sommet du pneumatique.

Avantageusement, chaque élément filaire de renfort de carcasse fait un angle supérieur ou égal à 80°, de préférence allant de 80° à 90° avec la direction circonférentielle du pneumatique dans le plan circonférentiel équatorial du pneumatique, autrement dit dans chaque flanc.

Dans un deuxième mode de réalisation de l'invention, l'armature de travail comprend une unique nappe de travail. Ainsi, l'armature de travail est, à l'exception de la nappe de travail, dépourvue de toute nappe renforcée par des éléments de renfort filaires. Les éléments de renfort filaires de telles nappes renforcées exclues de l'armature de travail du pneumatique comprennent les éléments de renfort filaires métalliques et les éléments de renfort filaires textiles.

L'armature de travail est préférentiellement constituée par une nappe de travail. Ce mode de réalisation est particulièrement avantageux lorsque le ou chaque élément filaire de renfort de frettage est constitué par câble tel que défini ci-dessus. Les propriétés de résistance mécanique et d'endurance de l'armature de frettage précédemment décrites permettent alors de supprimer une nappe de travail de l'armature de travail. On obtient un pneumatique significativement allégé.

Dans ce deuxième mode de réalisation, le ou les éléments filaires de renfort de frettage, les éléments filaires de renfort de travail et les éléments filaires de renfort de carcasse sont agencés de façon à définir, en projection sur un plan circonférentiel équatorial selon la direction radiale du pneumatique, un maillage triangulaire. Dans ce deuxième mode de réalisation, contrairement au premier mode de réalisation, les éléments filaires de renfort de frettage sont nécessaires pour définir le maillage triangulaire.

Avantageusement, chaque élément filaire de renfort de carcasse fait un angle $A_{C1}$ supérieur ou égal à 55°, de préférence allant de 55° à 80° et plus préférentiellement allant de 60° à 70°, avec la direction circonférentielle du pneumatique dans le plan médian du pneumatique, autrement dit dans le sommet du pneumatique. Ainsi, les éléments filaires de renfort de carcasse, de par l'angle formé avec la direction circonférentielle, participe à la formation du maillage triangulaire dans le sommet du pneumatique.

Dans un mode de réalisation, chaque élément filaire de renfort de carcasse fait un angle $A_{C2}$ supérieur ou égal à 85° avec la direction circonférentielle du pneumatique dans le plan circonférentiel équatorial du pneumatique, autrement dit dans chaque flanc du pneumatique. Les éléments filaires de renfort de carcasse sont sensiblement radiaux dans chaque flanc, c'est-à-dire sensiblement perpendiculaires à la direction circonférentielle, ce qui permet de conserver tous les avantages d'un pneumatique à carcasse radiale.

Dans un mode de réalisation, chaque élément filaire de renfort de travail fait un angle $A_T$ supérieur ou égal à 10°, de préférence allant de 30° à 50° et plus préférentiellement de 35° à 45° avec la direction circonférentielle du pneumatique dans le plan médian du pneumatique. Ainsi, les éléments filaires de renfort de travail, de par l'angle formé avec la direction circonférentielle, participent à la formation du maillage triangulaire dans le sommet du pneumatique.

Afin de former un maillage triangulaire le plus efficace possible, l'orientation de l'angle $A_T$ et l'orientation de l'angle $A_{C1}$ sont préférentiellement opposées par rapport à la direction circonférentielle du pneumatique.

## PROCEDE DE FABRICATION DU PNEUMATIQUE SELON L'INVENTION

On fabrique le pneumatique selon l'invention selon le procédé décrit ci-dessous.

Tout d'abord, on fabrique chaque nappe de carcasse, chaque nappe de travail et chaque nappe de frettage.

On fabrique chaque nappe en noyant les éléments filaires de renfort de chaque nappe dans une composition élastomérique non réticulée.

Puis, on agence l'armature de carcasse, l'armature de travail, l'armature de frettage et la bande de roulement de façon à former une ébauche de pneumatique.

Ensuite, on conforme l'ébauche de pneumatique de façon à agrandir au moins radialement l'ébauche de pneumatique. Cette étape a pour effet d'allonger circonférentiellement chaque nappe de l'ébauche de pneumatique. Cette étape a pour effet d'allonger le ou chaque élément filaire de renfort de frettage selon la direction circonférentielle du pneumatique. Ainsi, le ou chaque élément filaire de renfort de frettage présente, avant l'étape de conformation, des caractéristiques différentes de celles après l'étape de conformation.

Comme déjà décrit, les caractéristiques du câble dépourvu de matériau de remplissage décrites ci-dessus assurent, qu'à l'issue du procédé de fabrication du pneumatique, compte tenu de l'étape de conformation, le pneumatique présentera les avantages décrits ci-dessus.

Enfin, on réticule les compositions de l'ébauche de pneumatique conformée, par exemple par cuisson ou vulcanisation, afin d'obtenir le pneumatique dans lequel chaque composition présente un état réticulé et forme une matrice élastomérique à base de la composition.

L'invention sera mieux comprise à la lecture de la description qui va suivre, donnée uniquement à titre d'exemple non limitatif et faite en se référant aux dessins dans lesquels:

- la figure 1 est une vue en coupe radiale d'un pneumatique selon un premier mode de réalisation de l'invention ;
- la figure 2 est une vue en arraché du pneumatique de la figure 1 illustrant la projection sur le plan circonférentiel équatorial E des éléments filaires de renfort de frettage, des éléments filaires de renfort de travail et des éléments filaires de renfort de carcasse ;
- la figure 3 est une vue des éléments filaires de renfort de carcasse agencés dans le flanc du pneumatique de la figure 1 en projection sur le plan médian M du pneumatique ;
- la figure 4 est une vue en coupe perpendiculaire à son axe d'un câble selon un premier mode de réalisation de l'invention (supposé rectiligne et au repos) ;
- la figure 5 illustre une courbe contrainte-allongement du câble de la figure 4;
- la figure 6 illustre une courbe contrainte-allongement du câble de la figure 4, noyé dans une matrice élastomérique standard réticulée ;
- les figures 7 à 14 illustrent une installation et un procédé de fabrication du câble de la figure 4,
- la figure 15 est une figure analogue à la figure 4 d'un câble selon un deuxième mode de réalisation ;
- les figures 16 et 17 sont des courbes analogues à celles des figures 5 et 6 du câble selon le deuxième mode de réalisation ;
- la figure 18 est une vue analogue à celle de la figure 1 d'un pneumatique selon un deuxième mode de réalisation de l'invention ;
- les figures 19 et 20 sont des vues analogues à celles des vues des figures 2 et 3 du pneumatique de la figure 18 selon le deuxième mode de réalisation de l'invention.

## PNEUMATIQUE SELON UN PREMIER MODE DE REALISATION DE L'INVENTION

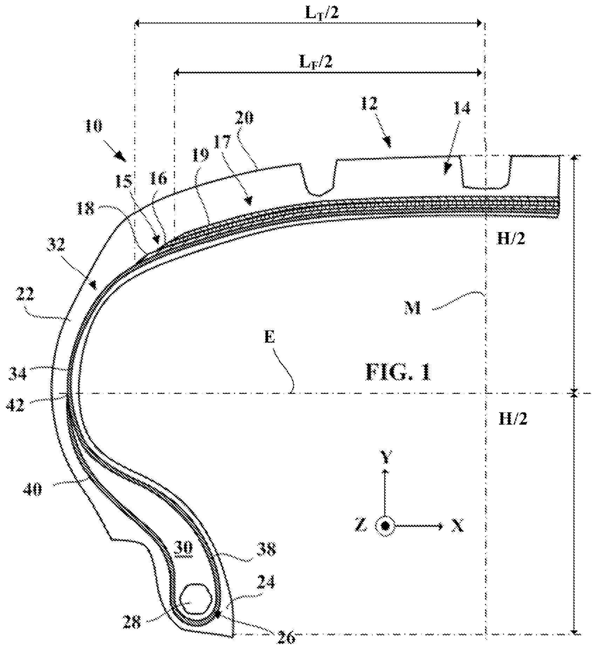

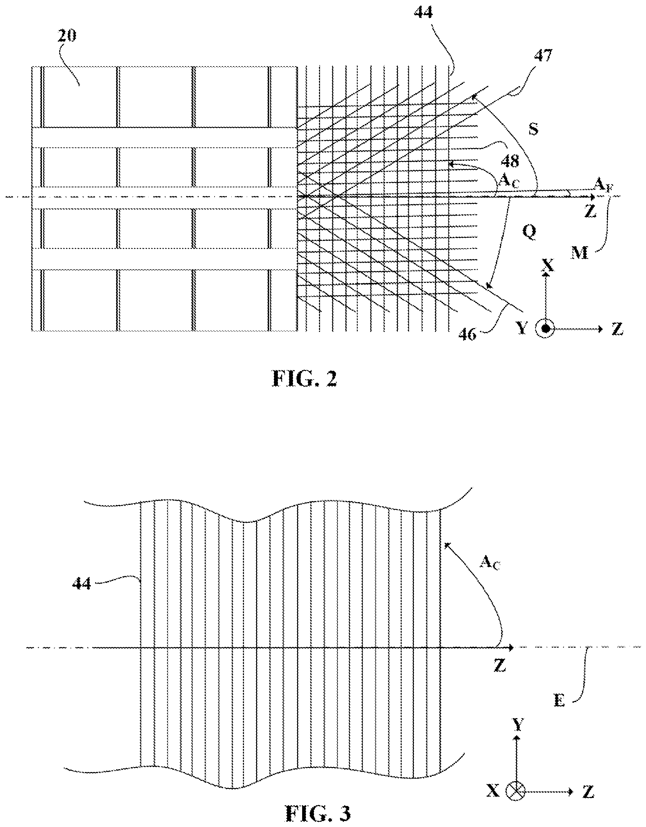

Sur les figures 1 et 2, on a représenté un repère X, Y, Z correspondant aux directions habituelles respectivement axiale (X), radiale (Y) et circonférentielle (Z) d'un pneumatique.

On a représenté schématiquement sur la figure 1, une vue en coupe radiale, d'un pneumatique selon l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

En référence, aux figures 1 et 2, le pneumatique 10 comporte un sommet 12 comprenant une armature de sommet 14 comprenant une armature de travail 15 comprenant deux nappes de travail 16, 18 comprenant respectivement des éléments filaires de renfort de travail 46, 47 et une armature de frettage 17 comprenant une unique nappe de frettage 19 comprenant au moins un élément filaire de renfort de frettage 48. L'armature de sommet 14 est ici constituée par l'armature de travail 15 et l'armature de frettage 17. L'armature de sommet 14 s'étend dans le sommet 12 selon la direction circonférentielle Z du pneumatique 10. Le sommet 12 comprend une bande de roulement 20 agencée radialement extérieure à l'armature de sommet 14.. Ici, le sommet 12 est constitué par la bande de roulement 20 et l'armature de sommet 14. Ici, l'armature de frettage 17, ici la nappe de frettage 19, est radialement intercalée entre l'armature de travail 15 et la bande de roulement 20. Ici, l'armature de travail 15 comprend uniquement deux nappes de travail 16, 18 et l'armature de frettage 17 comprenant une unique nappe de frettage 19. Ici, l'armature de travail 15 est constituée des deux nappes de travail 16, 18 et l'armature de frettage 17 est constituée de la nappe de frettage 19. L'armature de sommet 14 est constituée par l'armature de travail 15 et l'armature de frettage 17. Le sommet 12 est ici constitué par la bande de roulement 20 et l'armature de sommet 14.

Le pneumatique 10 comprend également deux flancs 22 prolongeant le sommet 12 radialement vers l'intérieur. Le pneumatique 10 comporte en outre deux bourrelets 24 radialement intérieur aux flancs 22 et comportant chacun une structure annulaire de renfort 26, en l'occurrence une tringle 28, surmontée d'une masse de gomme 30 de bourrage sur tringle, ainsi qu'une armature de carcasse radiale 32. Chaque flanc 22 relie chaque bourrelet 24 au sommet 12.

L'armature de carcasse 32 comporte une nappe de carcasse 34 comprenant plusieurs éléments filaires de renfort de carcasse 44, la nappe de carcasse 34 étant ancrée à chacun des bourrelets 24 par un retournement autour de la tringle 28, de manière à former dans chaque bourrelet 24 un brin aller 38 s'étendant depuis les bourrelets à travers les flancs vers le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 dans et à travers les flancs 22 jusque dans le sommet 12. L'armature de carcasse 32 est agencée radialement à l'intérieur de l'armature de sommet 14 et de l'armature de frettage 17. L'armature de sommet 14 est donc radialement intercalée entre l'armature de carcasse 32 et la bande de roulement 20. L'armature de carcasse 32 comprend une seule et unique nappe carcasse 34. Ici, l'armature de carcasse 32 est constituée de la nappe de carcasse 34. L'armature de carcasse 32 est agencée directement radialement au contact de l'armature de sommet 14 et l'armature de sommet 14 est agencée directement radialement au contact de la bande de roulement 20.

Le pneumatique 10 comprend également une couche interne d'étanchéité, de préférence en butyl, située axialement intérieure aux flancs 22 et radialement intérieure à l'armature de sommet 14 et s'étendant entre les deux bourrelets 24.

Chaque nappe de travail 16, 18, de frettage 19 et de carcasse 34 comprend une matrice élastomérique dans laquelle sont noyés des éléments de renfort de la nappe correspondante. Chaque matrice élastomérique des nappes de travail 16, 18, de frettage 19 et de carcasse 34 est à base d'une composition élastomérique conventionnelle pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou retardateur de vulcanisation et/ou divers additifs.

En référence aux figures 2 et 3, chaque élément filaire de renfort de carcasse 44 s'étend axialement d'un bourrelet 24 du pneumatique 10 à l'autre bourrelet 24 du pneumatique 10. Chaque élément filaire de renfort de carcasse 44 fait un angle $A_C$ supérieur ou égal à 80°, de préférence allant de 80° à 90°, avec la direction circonférentielle Z du pneumatique 10 dans les plans médian M et circonférentiel équatorial E du pneumatique 10, autrement dit dans le sommet 12 et dans chaque flanc 22.

En référence à la figure 2, les éléments filaires de renfort de travail 46, 47 de chaque nappe de travail 16, 18 sont agencés côte à côte sensiblement parallèlement les uns aux autres. Chaque élément filaire de renfort de travail 46, 47 s'étend axialement d'une extrémité axiale de l'armature de travail 15 du pneumatique 10 à l'autre extrémité axiale de l'armature de travail 15 du pneumatique 10. Chaque élément filaire de renfort de travail 46, 48 fait un angle allant de 10° et 40°, de préférence allant de 20° à 30° et ici égal à 26° avec la direction circonférentielle Z du pneumatique 10 dans le plan médian M. L'orientation de l'angle S fait par les éléments filaires de renfort de travail 46 avec la direction circonférentielle Z du pneumatique 10 dans la nappe de travail 16 est opposée à l'orientation de l'angle Q fait par les éléments filaires de renfort de travail 47 avec la direction circonférentielle Z du pneumatique 10 dans l'autre nappe de travail 18. En d'autres termes, les éléments filaires de renfort de travail 46 de la nappe de travail 16 sont croisés avec les éléments filaires de renfort de travail 47 de l'autre nappe de travail 18.

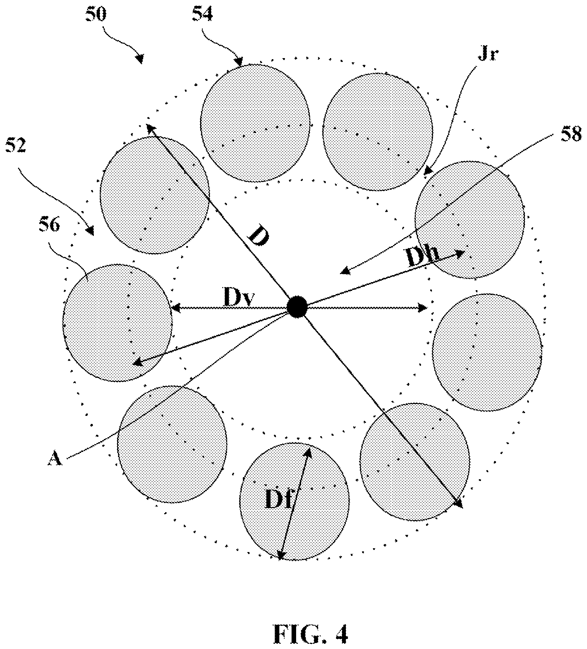

En référence à la figure 2, l'unique nappe de frettage 19 comprend au moins l'élément filaire de renfort de frettage 48 obtenu par noyage du câble 50 dans une matrice élastomérique à base de la composition élastomérique de la nappe de frettage 19 et tel qu'illustré à la figure 4 et décrits plus en détails ci-dessous. Etant noyé dans la matrice de la nappe de frettage 19, le câble 50, au sein du pneumatique 10, comprend un matériau de remplissage de la voûte interne 58 à base de la composition élastomérique de la nappe de frettage 19, ce matériau de remplissage 53 étant située dans la voûte interne 58 du câble 50. En l'espèce, la nappe de frettage 19 comprend un unique élément filaire de renfort de frettage 48 enroulé continûment sur une largeur axiale $L_F$ du sommet 12 du pneumatique 10. Avantageusement, la largeur axiale $L_F$ est inférieure à la largeur $L_T$ de la nappe de travail 18. L'élément filaire de renfort de frettage 48 fait un angle $A_F$ strictement inférieur à 10° avec la direction circonférentielle Z du pneumatique 10, de préférence inférieur ou égal à 7°, et plus préférentiellement inférieur ou égal à 5°. En l'espèce, l'angle est ici égal à 5°.

Les éléments filaires de renfort de carcasse 44 et de travail 46, 47 sont agencés, dans le sommet 12, de façon à définir, en projection sur le plan circonférentiel équatorial E selon la direction radiale du pneumatique, un maillage triangulaire.

Chaque élément filaire de renfort de carcasse 44 est un élément filaire textile et comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m$^{-1}$ dans un sens puis retordus ensemble à 240 tours.m$^{-1}$ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46, 47 est un élément filaire métallique et est ici un assemblage de deux monofilaments en acier présentant chacun un diamètre égal à 0,30 mm, les deux monofilaments en acier étant enroulés l'un avec l'autre au pas de 14 mm.

**CABLE SELON UN PREMIER MODE DE REALISATION DE L'INVENTION**

En référence à la figure 4, le câble 50 selon l'invention comprend une unique couche 52 d'éléments filaires métalliques 54 enroulés en hélice. En l'espèce, le câble 50 est constitué de l'unique couche 52, autrement dit le câble 50 ne comprend pas d'autre élément filaire métallique que ceux de la couche 52. La couche 52 est constituée de N éléments filaires métalliques enroulés en hélice, N allant de 3 à 18, de préférence de 5 à 12 et plus préférentiellement de 6 à 9 et ici N=9. Le câble 50 présente un axe principal A s'étendant sensiblement parallèlement à la direction selon laquelle le câble s'étend selon sa plus grande longueur. Chaque élément filaire métallique 54 de la couche 52 décrit, lorsque le câble 50, s'étend selon une direction sensiblement rectiligne, une trajectoire en forme d'hélice autour de l'axe principal A sensiblement parallèle à la direction sensiblement rectiligne, de sorte que, dans un plan de coupe sensiblement perpendiculaire à l'axe principal A, la distance entre le centre de chaque élément filaire métallique 54 de la couche 52 et l'axe principal A est sensiblement constante et égale pour tous les éléments filaires métalliques 54 de la couche 52. Cette distance constante entre le centre de chaque élément filaire métallique 54 de la couche 52 et l'axe principal A est égale à la moitié du diamètre d'hélice Dh.

Dans le mode de réalisation illustré, chaque élément filaire métallique 54 comprend un unique monofilament métallique 56. Chaque élément filaire métallique 54 comprend également une couche (non représentée) d'un revêtement métallique comprenant du cuivre, du zinc, de l'étain, du cobalt ou un alliage de ces métaux, ici du laiton. Chaque monofilament métallique 56 est en acier au carbone et présente une résistance mécanique ici égale à 3200 MPa.

Le diamètre Df de chaque élément filaire métallique 54 est tel que 0,10 mm ≤ Df ≤ 0,50 mm, de préférence 0,15 mm ≤ Df ≤ 0,50 mm et plus préférentiellement 0,15 mm ≤ Df ≤ 0,45 mm et, dans ce premier mode de réalisation tel que 0,15 mm ≤ Df ≤ 0,35 mm. En l'espèce, Df=0,20 mm pour tous les éléments filaires métalliques 54. Chaque élément filaire métallique 54 est dépourvu de marques de préformation.

Le câble 50 présente un diamètre D tel que D ≤ 2,10 mm, de préférence 0,90 mm ≤ D ≤ 2,10 mm et plus préférentiellement 0,95 mm ≤ D ≤ 2,05 mm et dans ce premier mode de réalisation tel que 0,95 mm ≤ D ≤ 1,20 mm. En l'espèce, D=1,04 mm.

Avantageusement, chaque élément filaire métallique 54 est enroulé à un pas P tel que 3 mm ≤ P ≤ 15 mm, de préférence 5 mm ≤ P ≤ 13 mm et plus préférentiellement 7 mm ≤ P ≤ 11 mm et dans ce premier mode de réalisation 7 mm ≤ P ≤ 8,5 mm. En l'espèce, P=7,8 mm.

Le rapport K du pas P sur le diamètre Df de chaque élément filaire métallique, P et Df étant exprimés en millimètres, est tel que 19 ≤ K ≤ 44, de préférence 20 ≤ K ≤ 40 et plus préférentiellement 23 ≤ K ≤ 39 et dans ce premier mode de réalisation tel que 23 ≤ K ≤ 40 et de préférence 25 ≤ K ≤ 39. En l'espèce, K=39.

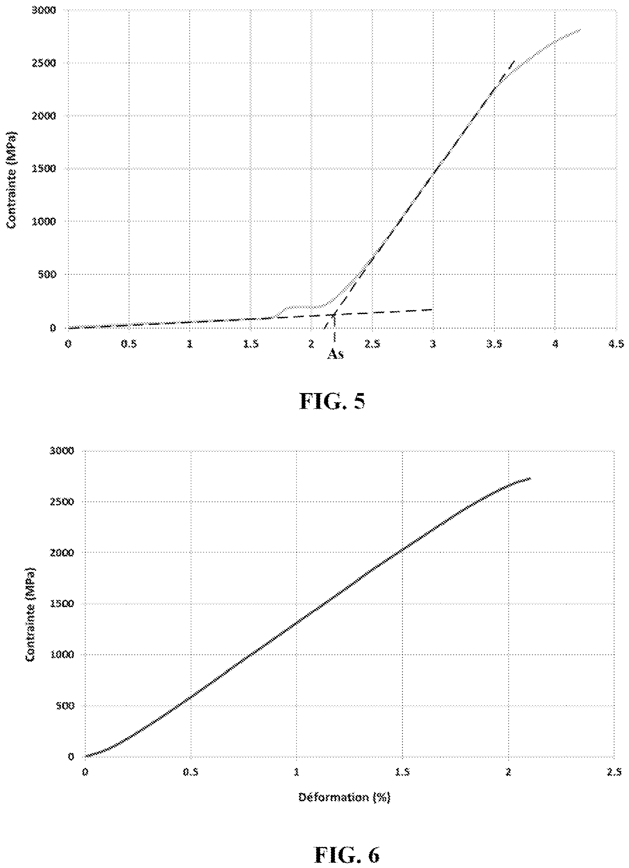

Le câble 50 selon le premier mode de réalisation présente un allongement structural As tel que As ≥ 1,5%, de préférence 1,5% ≤ As ≤ 5,0% et plus préférentiellement 1,9% ≤ As ≤ 4,5% et ici égal à 2,2%. Comme décrit précédemment, on détermine la valeur As en traçant une courbe force-allongement du câble 50 en appliquant la norme ASTM D2969-04 de 2014. On obtient la courbe illustrée sur la figure 5. L'allongement structural As est déterminé en déterminant la projection sur l'axe des allongement de l'intersection entre la tangente à la partie structurale de la courbe force-allongement et la tangente à la partie élastique de la courbe force-allongement.

L'angle d'hélice $\alpha$ de chaque élément filaire métallique est tel que 13° ≤ $\alpha$ ≤ 30°, de préférence 17° ≤ $\alpha$ ≤ 26° et dans ce premier mode de réalisation tel que 13° ≤ $\alpha$ ≤ 19,5° et de préférence 17° ≤ $\alpha$ ≤ 19,5°. En l'espèce, tel que décrit précédemment, avec les caractéristiques du câble 50, on a $\alpha(1)$=17,76°, $\alpha(2)$=18,23° et $\alpha(3)$=$\alpha$=18,26°.

Chaque élément filaire métallique 54 présente un rayon de courbure d'hélice Rf tel que 4,10 mm ≤ Rf ≤ 5,30 mm et dans ce premier mode de réalisation 4,10 mm ≤ Rf ≤ 4,25 mm. Le rayon de courbure Rf est calculé selon la relation Rf=P/($\pi$ x Sin($2\alpha$)). Comme ici P=7,8 mm et $\alpha$=18,26°, Rf=4,18 mm.

Le diamètre d'hélice Dh de chaque élément filaire métallique est tel que 0,70 mm ≤ Dh ≤ 1,60 mm, de préférence 0,75 mm ≤ Dh ≤ 1,60 mm et plus préférentiellement 0,80 mm ≤ Dh ≤ 1,60 mm et dans le premier mode de réalisation tel que 0,70 mm ≤ Dh ≤ 0,90 mm, de préférence 0,75 mm ≤ Dh ≤ 0,90 mm et plus préférentiellement 0,80 mm ≤ Dh ≤ 0,90 mm. Le diamètre d'hélice Dh est calculé selon la relation Dh=P x Tan($\alpha$) / $\pi$. Comme ici P=7,8 mm et $\alpha$=18,26°, Dh=0,82 mm.

Les éléments filaires métalliques 54 définissent une voûte interne 58 du câble 50 de diamètre Dv. Le diamètre de voûte Dv est calculé selon la relation Dv=Dh-Df dans laquelle Df est le diamètre de chaque élément filaire métallique et Dh le diamètre d'hélice. Avantageusement, Dv est tel que Dv ≥ 0,50 mm et de préférence 0,50 mm ≤ Dv ≤ 1,20 mm et dans le premier mode de réalisation 0,50 mm ≤ Dv ≤ 0,70 mm et de préférence 0,50 mm ≤ Dv ≤ 0,65 mm. Ici, comme Dh=0,82 mm et Df=0,20 mm, on a Dv=0,62 mm.

Conformément à l'invention, on a 9 ≤ Rf / Df ≤ 30, de préférence 9 ≤ Rf / Df ≤ 25 et plus préférentiellement 9 ≤ Rf / Df ≤ 22 et dans le premier mode de réalisation 12 ≤ Rf / Df ≤ 30, de préférence 12 ≤ Rf / Df ≤ 25 et plus préférentiellement 12 ≤ Rf / Df ≤ 22. Ici Rf / Df=20,7. Conformément à l'invention, on a également 1,60 ≤ Dv / Df ≤ 3,20, de préférence 1,70 ≤ Dv / Df ≤ 3,20 et ici Dv / Df=3,10.

On a également 0,10 ≤ Jr ≤ 0,25 avec Jr=N/($\pi$*(D-Df)) x (Dh x Sin($\pi$/N) - (Df / Cos($\alpha$ x $\pi$/180))), de préférence 0,14 ≤ Jr ≤ 0,25 et ici Jr=0,24.

Le câble 50 présente un module élastique en extension de la partie structurale inférieur ou égal à 15 GPa, de préférence allant de 2 GPa à 15 GPa et ici égal à 5 GPa. En outre, le câble 50 présente un module élastique en extension de la partie élastique supérieur ou égal à 50 GPa, de préférence allant de 50 à 180 GPa. Dans le premier mode de réalisation, le module élastique en extension de la partie élastique va de 130 à 180 GPa et est ici égal à 160 GPa.

En référence à la figure 6, le module du câble 50, noyé dans une matrice élastomérique standard réticulée telle que décrite précédemment et présentant un module en extension à 10% d'allongement compris allant de 5 MPa à 10 MPa, présente un module élastique en extension supérieur ou égal à 100 GPa, de préférence allant de 100 GPa à 180 GPa et plus préférentiellement allant de 110 à 180 GPa et ici égal à 145 GPa.

## PROCEDE DE FABRICATION DU PNEUMATIQUE SELON LE PREMIER MODE DE REALISATION

On fabrique le pneumatique 10 selon le procédé décrit ci-dessous.

Tout d'abord, on fabrique la nappe de travail 18 et la nappe de carcasse 34 en agençant parallèlement les uns aux autres les éléments filaires de renfort de chaque nappe et en les noyant, par exemple par calandrage, dans une composition non réticulée comprenant au moins un élastomère, la composition étant destinée à former une matrice élastomérique une fois réticulée. On obtient une nappe dite droite, dans laquelle les éléments filaires de renfort de la nappe sont parallèles les uns aux autres et sont parallèles à la direction principale de la nappe. Puis, si nécessaire, on découpe des portions de chaque nappe droite selon un angle de découpe et on aboute ces portions les unes aux autres de façon à obtenir une nappe dite à angle, dans laquelle les éléments filaires de renfort de la nappe sont parallèles les uns aux autres et forment un angle avec la direction principale de la nappe égal à l'angle de découpe.

Puis, on met en oeuvre un procédé d'assemblage, durant lequel on agence l'armature de frettage 17, ici la nappe de frettage 19, radialement à l'extérieur de l'armature de travail 15. En l'espèce, dans une première variante, on fabrique une bandelette de largeur B significativement inférieure à L_F, dans laquelle l'élément filaire de renfort de frettage 48 formé par un câble 50 est noyé dans la matrice élastomérique à base de la composition élastomérique non réticulée de la bandelette et on enroule hélicoïdalement la bandelette sur plusieurs tours de façon à obtenir la largeur axiale L_F. Dans une deuxième variante, on fabrique la nappe de frettage 19 présentant une largeur L_F d'une façon analogue aux nappes de carcasse et de travail et on enroule sur un tour la nappe de frettage 19 sur l'armature de travail 15. Dans une troisième variante, on enroule l'élément filaire de renfort de frettage 48 formé par le câble 50 radialement à l'extérieur de la nappe de travail 18, puis on dépose dessus une couche à base de la composition élastomérique non réticulée de la nappe de frettage 19 et dans laquelle sera noyé l'élément filaire de renfort de frettage 48 formé par le câble 50 lors de la cuisson du pneumatique. Dans les trois variantes, on noie l'élément filaire de renfort adhérisé 48 formé par le câble 50 dans une composition pour former, à l'issue du procédé de fabrication du pneumatique, la nappe de frettage 19 comprenant l'élément filaire de renfort de frettage 48 formé par le câble 50.

Puis, on agence l'armature de carcasse, l'armature de travail, l'armature de frettage et la bande de roulement de façon à former une ébauche de pneumatique dans laquelle les compositions des matrices élastomériques ne sont pas encore réticulées et sont dans un état cru.

Ensuite, on conforme l'ébauche de pneumatique de façon à agrandir au moins radialement l'ébauche de pneumatique. Enfin, on réticule les compositions de l'ébauche de pneumatique conformée, par exemple par cuisson ou vulcanisation, afin d'obtenir le pneumatique dans lequel chaque composition présente un état réticulé et forme une matrice élastomérique à base de la composition.

## INSTALLATION ET PROCEDE DE FABRICATION DU CABLE SELON LE PREMIER MODE DE REALISATION

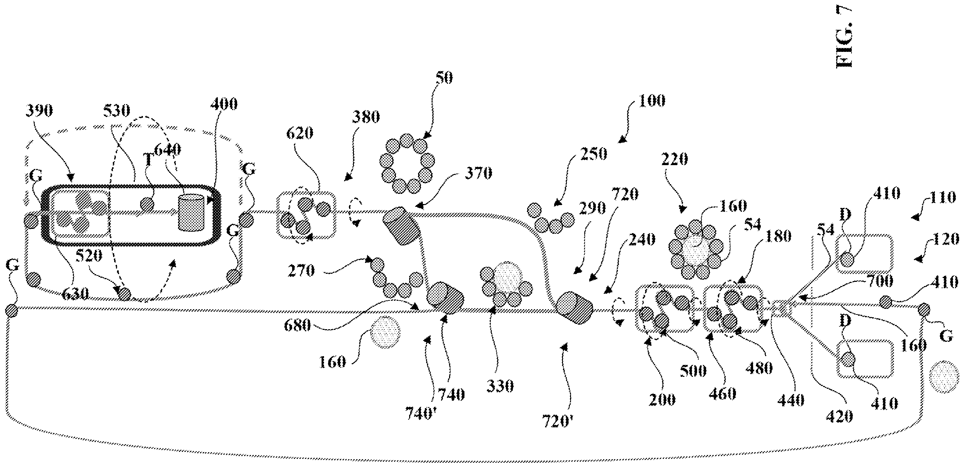

On a représenté sur la figure 7 une installation de fabrication du câble 50. L'installation est désignée par la référence générale 100.

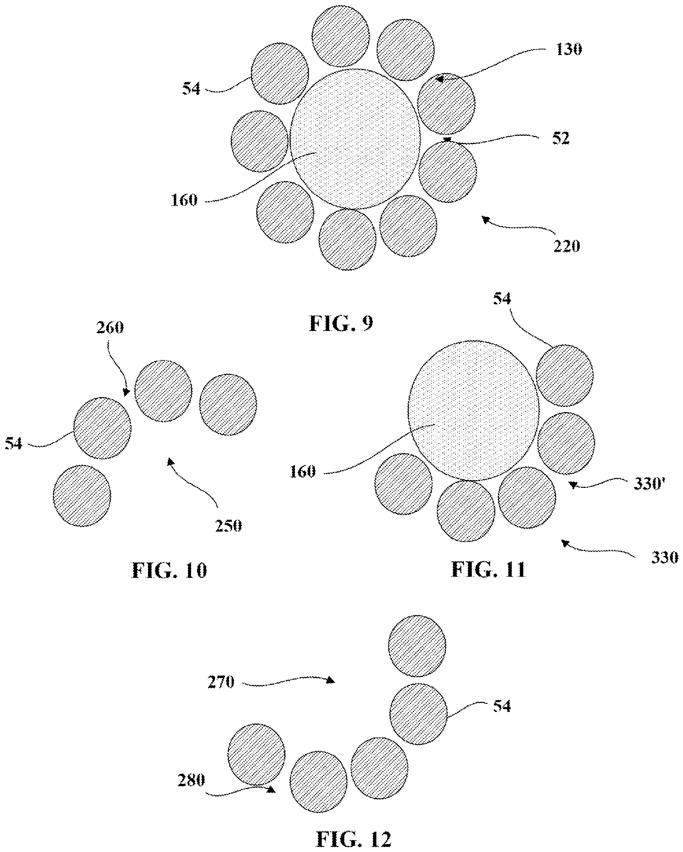

L'installation 100 comprend tout d'abord des moyens 110 de fourniture d'un assemblage transitoire 220 comprenant au moins une, et ici constitué d'une couche 130 constituée de M'>1 éléments filaires métalliques 54 enroulés en hélice autour d'un noyau transitoire 160. L'assemblage transitoire 220 illustré sur la figure 9 comprend la couche 130 constituée par les M' éléments filaires métalliques 54 et le noyau transitoire 160, les M' éléments filaires métalliques 54 étant enroulés en hélice autour du noyau transitoire 160. Ici, l'assemblage transitoire 220 est constitué de la couche 130 constituée par les M'=7 éléments filaires métalliques 54 et par le noyau transitoire 160, les M' éléments filaires métalliques 54 étant enroulés en hélice autour du noyau transitoire 160. Le noyau transitoire est ici un élément filaire textile, plus particulièrement ici est un brin textile multifilamentaire en polyester présentant un titre de 334 tex et de diamètre environ égal à 0,60 mm.

Les moyens 110 de fourniture comprennent des moyens 120 d'alimentation des M' éléments filaires métalliques 54 et du noyau transitoire 160. Les moyens de fourniture 110 comprennent également des moyens 180 d'assemblage par retordage des M' éléments filaires métalliques 54 ensemble en la couche 130 de M' éléments filaires métalliques 54 autour du noyau transitoire 160 pour former l'assemblage transitoire 220. En outre, les moyens de fourniture 110 comprennent des moyens 200 d'équilibrage de l'assemblage transitoire 220. En sortie des moyens 200, chaque élément filaire métallique 54 de l'assemblage transitoire 220 est ici assemblé à un pas transitoire égal à 5 mm. Le diamètre d'hélice transitoire de chaque élément filaire métallique 54 de l'assemblage transitoire 220 est ici sensiblement égal à 0,80 mm.

En aval des moyens de fourniture 110 en considérant le sens de défilement des éléments filaires métalliques, l'installation 100 comprend des moyens 240 de séparation de l'assemblage transitoire 220 entre un premier assemblage fractionné 250, un deuxième assemblage fractionné 270 et le noyau transitoire 160 ou un ou plusieurs ensembles comprenant le noyau transitoire 160, ici le noyau transitoire 160.

Le premier assemblage fractionné 250 représenté sur la figure 10 est constitué d'une couche 260 constituée de M1'≥1 élément(s) filaire(s) métallique(s) 54 enroulé(s) en hélice. Ici M1'=4. Les M1' éléments filaires métalliques sont issus de la couche 130 de l'assemblage transitoire 220.

Le deuxième assemblage fractionné 270 représenté sur la figure 12 est constitué d'une couche 330', constituée de M2'>1 éléments filaires métalliques 54 enroulés en hélice. Ici M2'=5. Les M2' éléments filaires métalliques sont issus de la couche 130 de l'assemblage transitoire 220.

En aval des moyens de fourniture 110, les moyens de séparation 240 de l'assemblage transitoire 220 entre le premier assemblage fractionné 250, le deuxième assemblage fractionné 270 et le noyau transitoire 160 comprennent des moyens de séparation 720 de l'assemblage transitoire 220 entre le premier assemblage fractionné 250 et un ensemble fractionné 330 comprenant au moins une couche 330' constituée de M4'=3 éléments filaires métalliques 54 enroulés en hélice autour du noyau transitoire 160, les M4' éléments filaires métalliques 54 étant issus de la couche 52 constituée des M'>1 éléments filaires métalliques 54 de l'assemblage transitoire 220. L'ensemble fractionné 330 comprend ainsi la couche 330' et le noyau transitoire 160, les M4' éléments filaires métalliques 540 étant enroulés en hélice autour du noyau transitoire 160. Ici, l'ensemble fractionné 330 est constituée par la couche 330' et par le noyau transitoire 160, les M4' éléments filaires métalliques 54 étant enroulés en hélice autour du noyau transitoire 160. Ici, les moyens de séparation 720 comprennent de moyens de fractionnement 720' de l'assemblage transitoire 220 en le premier assemblage fractionné 250 et l'ensemble fractionné 330.

Les moyens de séparation 240 de l'assemblage transitoire 220 entre le premier assemblage fractionné 250, le deuxième assemblage fractionné 270 et le noyau transitoire 160 comprennent des moyens 740 de séparation de l'ensemble fractionné 330 entre le deuxième assemblage fractionné 270 et le noyau transitoire 160. Ici, les moyens de séparation 740 comprennent des moyens 740' de fractionnement de l'ensemble fractionné 330 en le deuxième assemblage fractionné 270 et le noyau transitoire 160.

Dans ce mode de réalisation, les moyens de séparation 720 sont agencés en amont des moyens de séparation 740.

En aval des moyens de séparation 240, l'installation 100 comprend des moyens 370 de réassemblage du premier assemblage fractionné 250 avec le deuxième assemblage fractionné 270 pour former la couche 52 constituée de N éléments filaires métalliques 54 enroulés en hélice. Les moyens de séparation 240 et les moyens de réassemblage 370 sont agencés de sorte que M1'+M2'=M'. En l'espèce, en raison du retour élastique de chaque élément filaire métallique 54 en réponse à l'étape de retordage, le pas de chaque élément filaire métallique 54 de l'assemblage transitoire 220 passe du pas transitoire égal à 5 mm au pas P égal ici à 7,8 mm. L'homme du métier saura déterminer quel pas transitoire appliquer afin d'obtenir le pas P désiré.

Le diamètre d'hélice Dh de chaque élément filaire métallique 54 dans le câble 50 est ici sensiblement supérieur au diamètre d'hélice transitoire de chaque élément filaire 54 dans l'assemblage transitoire 220 et ce en raison du retour élastique. Le diamètre d'hélice Dh de chaque élément filaire métallique 54 dans le câble 50 est d'autant plus supérieur au diamètre d'hélice transitoire de chaque élément filaire 54 dans l'assemblage transitoire 220 que le taux de retordage est important. L'homme du métier saura déterminer quel diamètre d'hélice transitoire appliquer afin d'obtenir le diamètre d'hélice Dh désiré, et ce en fonction du taux de retordage et de la nature du noyau transitoire. Il en est de même pour le diamètre de voûte.

Les moyens de fourniture 110, les moyens de séparation 240 et les moyens de réassemblage 370 sont agencés de sorte que tous les N éléments filaires métalliques 54 présentent un même diamètre Df=0,20 mm, sont enroulés en hélice selon un même pas P=7,8 mm et présentent un même diamètre d'hélice Dh=0,82 mm.

En aval des moyens de réassemblage 370 en considérant le sens de défilement des éléments filaires métalliques 54, l'installation 100 comprend des moyens 380 d'entretien de la rotation du câble 50 autour de leur direction de défilement.

En aval des moyens d'entretien de la rotation 380 en considérant le sens de défilement des éléments filaires métalliques 54, l'installation 100 comprend des moyens d'équilibrage 390 du câble 50.

En aval des moyens d'équilibrage 390 en considérant le sens de défilement des éléments filaires métalliques 54, l'installation 100 comprend des moyens 400 de stockage du câble 50.

L'installation 100 comprend également des moyens de guidage G, de déroulage D et de traction T des éléments filaires et des assemblages classiquement utilisés par l'homme du métier, par exemple des poulies et des cabestans.

Les moyens d'alimentation 120 comprennent ici neuf bobines 410 de stockage de chaque élément filaire 54 ainsi qu'une bobine 410 de stockage du noyau transitoire 160. Sur la figure 7, seules deux des neuf bobines 410 sont représentées à des fins de clarté de la figure.

Les moyens d'assemblage 180 comprennent un répartiteur 420 et un grain d'assemblage 440. Les moyens d'assemblage 180 comprennent des moyens 460 de retordage des M' éléments filaires 54 et du noyau transitoire 160. Les moyens de retordage 460 comprennent un retordeur 480, également appelé communément « twister » par l'homme du métier, par exemple un twister à quatre poulies. En aval de ces moyens de retordage 460, les moyens d'équilibrage 200 comprennent un twister 500, par exemple un twister à quatre poulies. Enfin, en aval du retordeur 480, les moyens d'assemblage 180 comprennent une lyre 520 ainsi qu'une nacelle 530 portant les moyens d'équilibrage 390 final et les moyens 400 de stockage. La lyre 520 et la nacelle 530 sont montées mobiles en rotation de façon à conserver le pas d'assemblage du câble 50.

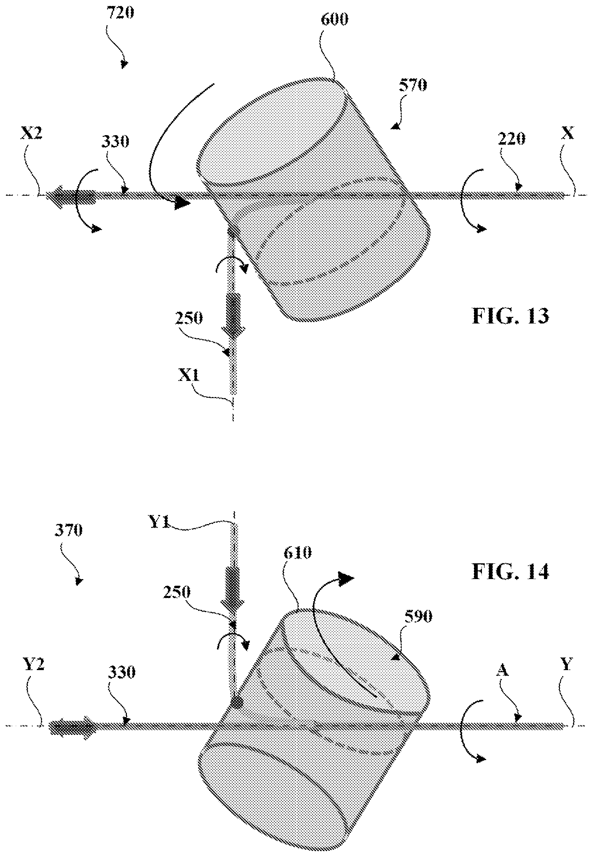

On a représenté sur la figure 13 les moyens de fractionnement 720. L'assemblage transitoire 220 défile selon une direction de défilement amont X. Après le passage dans les moyens de fractionnement 720, l'ensemble fractionné 330 défile selon une direction de défilement aval X2 et le premier assemblage fractionné 250 selon une direction aval X1. Les moyens de fractionnement 720 comprennent des moyens 570 de guidage permettant d'une part, la translation de l'ensemble fractionné 330 et du premier assemblage fractionné 250 respectivement selon les directions avals X2, X1 et d'autre part, la rotation de l'ensemble fractionné 330 et du premier assemblage fractionné 250 respectivement autour des directions avals X2, X1. En l'espèce, les moyens 570 comprennent un rouleau 600 rotatif incliné. Les moyens de fractionnement 740 sont analogues aux moyens de fractionnement 720 décrits ci-dessus. Lors du procédé, le premier assemblage transitoire 250 entre en contact avec le rouleau 600 en aval du point de fractionnement entre l'ensemble fractionné 330 et le premier assemblage fractionné 250.

On a représenté sur la figure 14 les moyens de réassemblage 370. Le premier assemblage fractionné 250 défile selon une direction de défilement amont Y1. Le deuxième assemblage fractionné 270 défile selon une direction de défilement amont Y2. Le câble 50 défile selon une direction de défilement aval Y. Les moyens de réassemblage 370 comprennent des moyens 590 de guidage permettant d'une part, la translation des premier et deuxième assemblages fractionnés 250, 270 respectivement selon les directions avals Y1, Y2 et d'autre part, la rotation des premier et deuxième assemblages fractionnés 250, 270 respectivement autour des directions avals Y1, Y2. En l'espèce, les moyens 590 comprennent un rouleau 610 rotatif incliné. Lors du procédé, le premier assemblage fractionné 250 entre en contact avec le rouleau 610 en amont du point de réassemblage des premier et deuxième assemblages fractionnés 250, 270 entre eux.

Les moyens 380 d'entretien de la rotation comprennent un twister 620, par exemple un twister à quatre poulies permettant d'entretenir la rotation du câble 50 respectivement autour de la direction aval Y. Les moyens d'équilibrage 390 final comprennent également un twister 630, par exemple un twister à quatre poulies. Les moyens de stockage 400 comprennent ici une bobine 640 de stockage du câble 50.

Afin de recycler le noyau transitoire 160, l'installation 100 comprend des moyens de guidage G du noyau transitoire 160 entre, d'une part, une sortie 680 des moyens de séparation 240, ici en aval des moyens de fractionnement 740, et d'autre part, une entrée 700 dans les moyens d'assemblage 180.

On notera que l'installation 100 est dépourvue de moyens de préformation, en particulier des moyens de préformation individuelle des éléments filaires 54 agencés en amont des moyens d'assemblage 180.

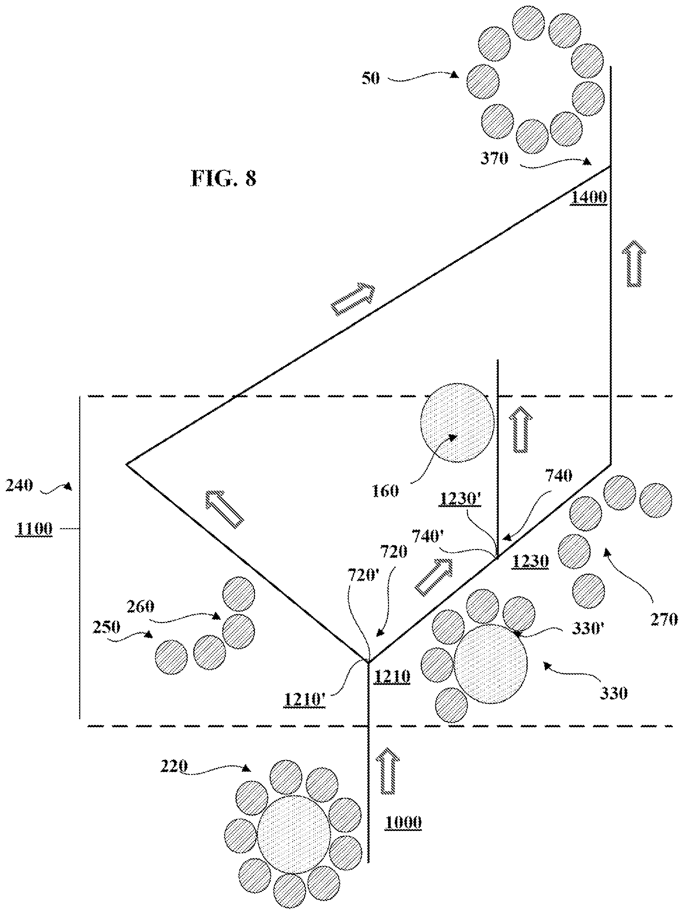

Les différents moyens 240, 720, 740, 370 ainsi que les différents assemblages et ensembles 220, 250, 270, 330 sont représentés de façon schématique sur la figure 8 sur laquelle les flèches indiquent le sens de défilement de ces assemblages et ensembles d'aval vers l'amont.

On va maintenant décrire le procédé permettant de mettre en oeuvre l'installation 100 décrite ci-dessus. Le procédé permet de fabriquer le câble 50 décrit ci-dessus.

Tout d'abord, on déroule les éléments filaires 54 et le noyau transitoire 160 depuis les moyens d'alimentation 120, ici les bobines 410.

Puis, le procédé comprend une étape 1000 de fourniture de l'assemblage transitoire 220 comprenant d'une part une étape d'assemblage par retordage des M' éléments filaires métalliques 54 en une unique couche de M' éléments filaires métalliques 54 autour du noyau transitoire 160 et d'autre part, une étape d'équilibrage de l'assemblage transitoire 220 réalisée grâce au twister 500.

Le procédé comprend une étape 1100 de séparation de l'assemblage transitoire 220 entre le premier assemblage fractionné 250, le deuxième assemblage fractionné 270 et le noyau transitoire 160 ou un ou plusieurs ensembles comprenant le noyau transitoire 160, ici le noyau transitoire 160.

En aval de l'étape de fourniture 1000, l'étape de séparation 1100 de l'assemblage transitoire 220 entre le premier assemblage fractionné 250, le deuxième assemblage fractionné 270 et le noyau transitoire 160 comprend une étape 1210 de séparation de l'assemblage transitoire 220 entre le premier assemblage fractionné 250 et l'ensemble fractionné 330. Ici, l'étape de séparation 1210 comprend une étape 1210' de fractionnement de l'assemblage transitoire 220 en le premier assemblage fractionné 250 et l'ensemble fractionné 330.

L'étape de séparation 1100 de l'assemblage transitoire 220 entre le premier assemblage fractionné 250, le deuxième assemblage fractionné 270 et le noyau transitoire 160 comprend une étape 1230 de séparation de l'ensemble fractionné 330 entre le deuxième assemblage fractionné 270 et le noyau transitoire 160. Ici, l'étape de séparation 1230 comprend une étape 1230' de fractionnement de l'ensemble fractionné 330 en le deuxième assemblage fractionné 270 et le noyau transitoire 160.

L'étape de séparation 1210 a lieu en amont de l'étape de séparation 1230.

En aval des étapes de séparation 1100 et de fractionnement 1210 et 1230, le procédé comprend une étape 1400 de réassemblage du premier assemblage fractionné 250 avec le deuxième assemblage fractionné 270 pour former la couche 52. L'étape de séparation 1100 et l'étape réassemblage 1400 sont réalisées de sorte que M1'+M2'=M'

On notera également que M'=6, M'=M4'+M1', M4'=M2', N=6, M1'=3, M2'=3.

En outre, le procédé comprend des étapes d'entretien de la rotation du câble 50 et autour de sa direction de défilement. On réalise ces étapes d'entretien en aval de l'étape de séparation de l'assemblage transitoire 220 grâce aux moyens 380. On réalise une étape d'équilibrage final grâce aux moyens 390. Enfin, on stocke le câble 50 dans les bobines de stockage 640.

Concernant le noyau transitoire 160, le procédé comprend une étape de recyclage du noyau transitoire 160. Durant cette étape de recyclage, on récupère le noyau transitoire 160 en aval de l'étape de séparation 1100, ici en aval de l'étape de fractionnement 1230, et on introduit le noyau transitoire 160 récupéré précédemment en amont de l'étape d'assemblage 180. Cette étape de recyclage est continue.

On notera que le procédé ainsi décrit est dépourvu d'étapes de préformation individuelle de chacun des éléments filaires métalliques 54.

## CABLE SELON UN DEUXIEME MODE DE REALISATION DE L'INVENTION

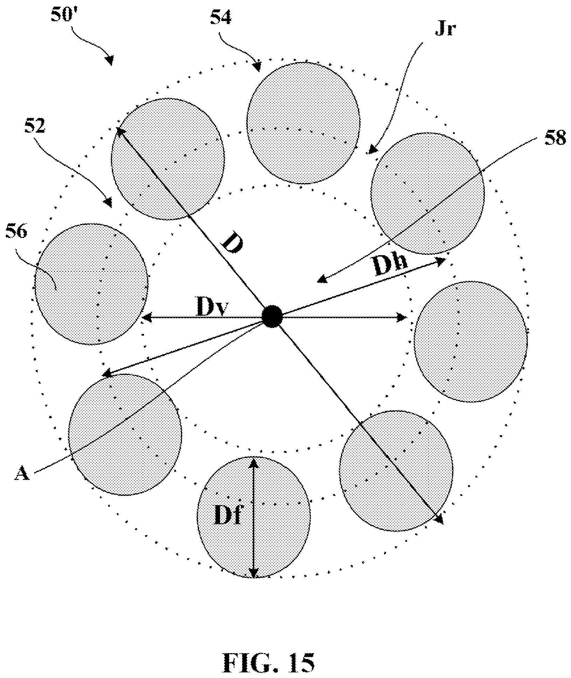

On va maintenant décrire un deuxième mode de réalisation d'un câble du pneumatique selon l'invention. Ce câble, désigné par la référence 50', est illustré sur la figure 15. Les éléments analogues à ceux du premier mode de réalisation représentés sur les figures précédentes sont désignés par des références identiques.

Le câble 50' comprend une unique couche 52 d'éléments filaires métalliques 54 enroulés en hélice. La couche 52 est constituée de $N=8$ éléments filaire métalliques enroulés en hélice. Le câble 50' est destiné au renforcement d'un pneumatique pour véhicules industriels choisis parmi camionnettes, "Poids-lourd", par exemple métro, bus, engins de transport routier (camions, tracteurs, remorques).

Dans le mode de réalisation illustré, chaque élément filaire métallique 54 comprend un unique monofilament métallique 56. Chaque élément filaire métallique 54 comprend également une couche (non représentée) d'un revêtement métallique comprenant du cuivre, du zinc, de l'étain, du cobalt ou un alliage de ces métaux, ici du laiton.

Le diamètre Df de chaque élément filaire métallique 54 est tel que $0{,}10 \text{ mm} \leq Df \leq 0{,}50 \text{ mm}$, de préférence $0{,}15 \text{ mm} \leq Df \leq 0{,}50 \text{ mm}$ et plus préférentiellement $0{,}15 \text{ mm} \leq Df \leq 0{,}45 \text{ mm}$ et, dans ce deuxième mode de réalisation tel que $0{,}22 \text{ mm} \leq Df \leq 0{,}50 \text{ mm}$, de préférence $0{,}22 \text{ mm} \leq Df \leq 0{,}45 \text{ mm}$ et plus préférentiellement $0{,}30 \text{ mm} \leq Df \leq 0{,}45$ mm. En l'espèce, $Df=0{,}35$ mm pour tous les éléments filaires métalliques 54. Chaque élément filaire métallique 54 est dépourvu de marques de préformation.

Le câble 50' présente un diamètre D tel que $D \leq 2{,}10 \text{ mm}$, de préférence $0{,}90 \text{ mm} \leq D \leq 2{,}10 \text{ mm}$ et plus préférentiellement $0{,}95 \text{ mm} \leq D \leq 2{,}05 \text{ mm}$ et dans ce deuxième mode de réalisation tel que $1{,}15 \text{ mm} \leq D \leq 2{,}10 \text{ mm}$ et de préférence $1{,}15 \text{ mm} \leq D \leq 2{,}05 \text{ mm}$. En l'espèce, $D=1{,}55$ mm.

Avantageusement, chaque élément filaire métallique 54 est enroulé à un pas P tel que $3 \text{ mm} \leq P \leq 15 \text{ mm}$, de préférence $5 \text{ mm} \leq P \leq 13 \text{ mm}$ et plus préférentiellement $7 \text{ mm} \leq P \leq 11 \text{ mm}$ et dans ce deuxième mode de réalisation $7{,}5 \text{ mm} \leq P \leq 11 \text{ mm}$. En l'espèce, $P=10{,}5$ mm.

Le rapport K du pas P sur le diamètre Df est tel que $19 \leq K \leq 44$, de préférence $20 \leq K \leq 40$ et plus préférentiellement $23 \leq K \leq 39$ et dans ce deuxième mode de réalisation tel que $19 \leq K \leq 35$ et de préférence $23 \leq K \leq 30$. En l'espèce, $K=30$.

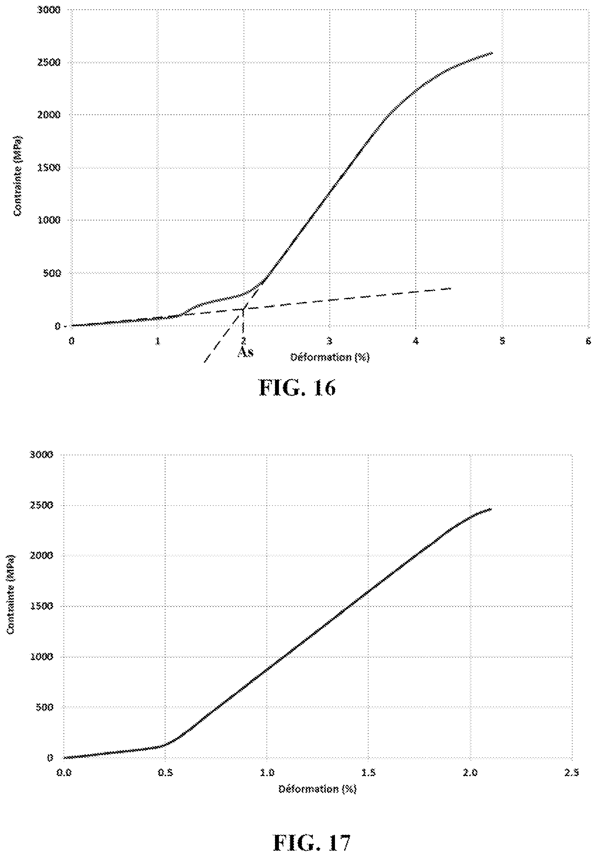

Le câble 50' selon le deuxième mode de réalisation présente un allongement structural As tel que $As \geq 1{,}5\%$, de préférence $1{,}5\% \leq As \leq 5{,}0\%$ et plus préférentiellement $1{,}9\% \leq As \leq 4{,}5\%$ et ici égal à 2,0 %. Comme décrit précédemment, on détermine la valeur As en traçant une courbe force-allongement du câble 50' en appliquant la norme ASTM D2969-04 de 2014. On obtient la courbe illustrée sur la figure 16.

L'angle d'hélice $\alpha$ de chaque élément filaire métallique est tel que $13° \leq \alpha \leq 30°$, de préférence $17° \leq \alpha \leq 26°$ et dans ce deuxième mode de réalisation tel que $18{,}5° \leq \alpha \leq 30°$ et de préférence $18{,}5° \leq \alpha \leq 26°$. En l'espèce, tel que décrit précédemment, avec les caractéristiques du câble 50', on a $\alpha(1)=18{,}99°$, $\alpha(2)=19{,}66°$ et $\alpha(3)=\alpha=19{,}71°$.

Chaque élément filaire métallique 54 présente un rayon de courbure d'hélice Rf tel que $4{,}10 \text{ mm} \leq Rf \leq 5{,}30$

mm. Comme ici P=10,5 mm et $\alpha$=19,71°, Rf=5,27 mm.

Le diamètre d'hélice Dh de chaque élément filaire métallique est tel que 0,70 mm $\leq$ Dh $\leq$ 1,60 mm, de préférence 0,75 mm $\leq$ Dh $\leq$ 1,60 mm et plus préférentiellement 0,80 mm $\leq$ Dh $\leq$ 1,60 mm et dans le deuxième mode de réalisation tel que 0,85 mm $\leq$ Dh $\leq$ 1,60 mm, de préférence 1,15 mm $\leq$ Dh $\leq$ 1,60 mm et plus préférentiellement 1,20 mm $\leq$ Dh $\leq$ 1,60 mm. Comme ici P=10,5 mm et $\alpha$=19,71°, Dh=1,20 mm.

Avantageusement, Dv est tel que Dv $\geq$ 0,50 mm et de préférence 0,50 mm $\leq$ Dv $\leq$ 1,20 mm et dans le deuxième mode de réalisation 0,50 mm $\leq$ Dv $\leq$ 1,20 mm, de préférence 0,65 mm $\leq$ Dv $\leq$ 1,20 mm. Ici, comme Dh=1,20 mm et Df=0,35 mm, on a Dv=0,85 mm.

Conformément à l'invention, on a 9 $\leq$ Rf / Df $\leq$ 30, de préférence 9 $\leq$ Rf / Df $\leq$ 25 et plus préférentiellement 9 $\leq$ Rf / Df $\leq$ 22 et dans le deuxième mode de réalisation 9 $\leq$ Rf / Df $\leq$ 15. Ici Rf / Df=15. Conformément à l'invention, on a également 1,60 $\leq$ Dv / Df $\leq$ 3,20, de préférence 1,70 $\leq$ Dv / Df $\leq$ 3,20 et plus préférentiellement 1,70 $\leq$ Dv / Df $\leq$ 3,05 et ici Dv / Df=2,42.

On a également 0,10 $\leq$ Jr $\leq$ 0,25, de préférence 0,14 $\leq$ Jr $\leq$ 0,25 et ici Jr=0,18.

Le câble 50' présente un module élastique en extension de la partie structurale inférieur ou égal à 15 GPa, de préférence allant de 2 GPa à 15 GPa et ici égal à 7 GPa. En outre, le câble 50' présente un module élastique en extension de la partie élastique supérieur ou égal à 50 GPa, de préférence allant de 50 à 180 GPa. Dans le deuxième mode de réalisation, le module élastique en extension de la partie élastique va de 80 à 130 GPa et est ici égal à 109 GPa.

En référence à la figure 17, le câble 50', noyé dans une matrice élastomérique standard réticulée telle que décrite précédemment et présentant un module en extension à 10% d'allongement compris allant de 5 MPa à 10 MPa, présente un module élastique en extension supérieur ou égal à 100 GPa, de préférence allant de 100 GPa à 180 GPa, plus préférentiellement 110 GPa à 180 GPa et encore plus préférentiellement 120 GPa à 180 GPa. Dans ce mode de réalisation dans lequel le câble 50' présente un module élastique en extension égal à 140 GPa.

Le câble 50' est fabriqué en mettant en oeuvre, mutatis mutandis, une installation et un procédé analogues à ceux mis en oeuvre pour la fabrication du câble 50.

## PNEUMATIQUE SELON UN DEUXIEME MODE DE REALISATION DE L'INVENTION

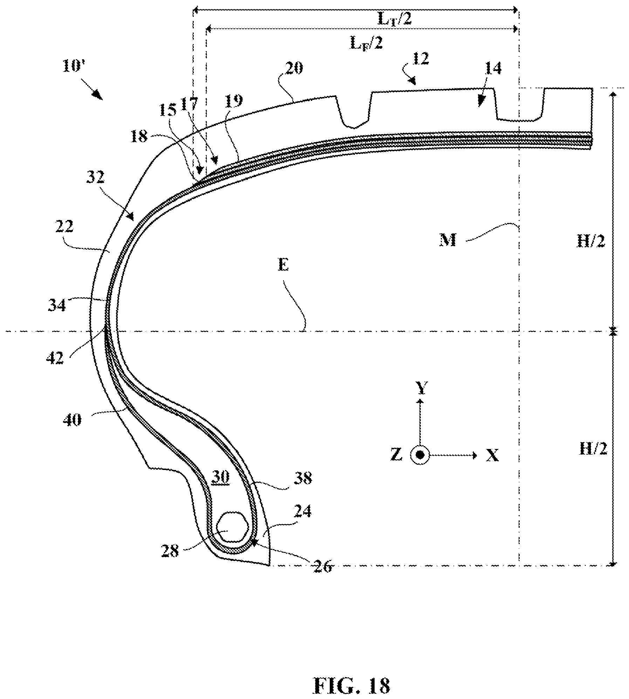

On a représenté sur les figures 18 à 20 un pneumatique 10' selon un deuxième mode de réalisation de l'invention. Sur ces figures, les éléments analogues à ceux du pneumatique 10 selon le premier mode de réalisation sont désignés par des références identiques.

Le pneumatique 10' est sensiblement de révolution autour d'un axe sensiblement parallèle à la direction axiale X. Le pneumatique 10' est ici destiné à un véhicule de tourisme.

Le pneumatique 10' comporte un sommet 12 comprenant une bande de roulement 20 et une armature de sommet 14 s'étendant dans le sommet 12 selon la direction circonférentielle Z.

L'armature de sommet 14 comprend une armature de travail 15 comprenant une unique nappe de travail 18 et une armature de frettage 17 comprenant une unique nappe de frettage 19. Ici, l'armature de travail 15 est constituée de la nappe de travail 18 et l'armature de frettage 17 est constituée de la nappe de frettage 19. L'armature de sommet 14 est constituée par l'armature de travail 15 et l'armature de frettage 17.

L'armature de sommet 14 est surmontée de la bande de roulement 20. Ici, l'armature de frettage 17, ici la nappe de frettage 19, est radialement intercalée entre l'armature de travail 15 et la bande de roulement 20. Le sommet 12 est ici constitué par la bande de roulement 20 et l'armature de sommet 14.

Le pneumatique 10' comprend deux flancs 22 prolongeant le sommet 12 radialement vers l'intérieur. Le pneumatique 10' comporte en outre deux bourrelets 24 radialement intérieurs aux flancs 22 et comportant chacun une structure annulaire de renfort 26, en l'occurrence une tringle 28, surmontée d'un masse de gomme 30 de bourrage, ainsi qu'une armature de carcasse radiale 32. L'armature de sommet 14 est située radialement entre l'armature de carcasse 32 et la bande de roulement 20. Chaque flanc 22 relie chaque bourrelet 24 au sommet 12.

L'armature de carcasse 32 comporte une unique nappe de carcasse 34. Ici, l'armature de carcasse 32 est constituée de la nappe de carcasse 34. L'armature de carcasse 32 est ancrée dans chacun des bourrelets 24 par un retournement autour de la tringle 28 de manière à former dans chaque bourrelet 24 un brin aller 38 s'étendant depuis les bourrelets 24 dans les flancs 22 et dans le sommet 12, et un brin retour 40, l'extrémité radialement extérieure 42 du brin retour 40 étant radialement à l'extérieur de la structure annulaire de renfort 26. L'armature de carcasse 32 s'étend ainsi depuis les bourrelets 24 à travers les flancs 22 jusque dans le sommet 12. Dans ce mode de réalisation, l'armature de carcasse 32 s'étend également axialement au travers du sommet 12. L'armature de sommet 14 est radialement intercalée entre l'armature de carcasse 32 et la bande de roulement 20. L'armature de carcasse 32 est agencée directement radialement au contact de l'armature de sommet 14 et l'armature de sommet 14 est agencée directement radialement au contact de la bande de roulement 20. Plus particulièrement, l'unique nappe de frettage 19 et l'unique nappe de travail 18 sont avantageusement agencées directement radialement au contact l'une de l'autre.

Chaque nappe de travail 18, de frettage 19 et de carcasse 34 comprend une matrice élastomérique dans laquelle sont noyés un ou des éléments de renfort de la nappe correspondante.

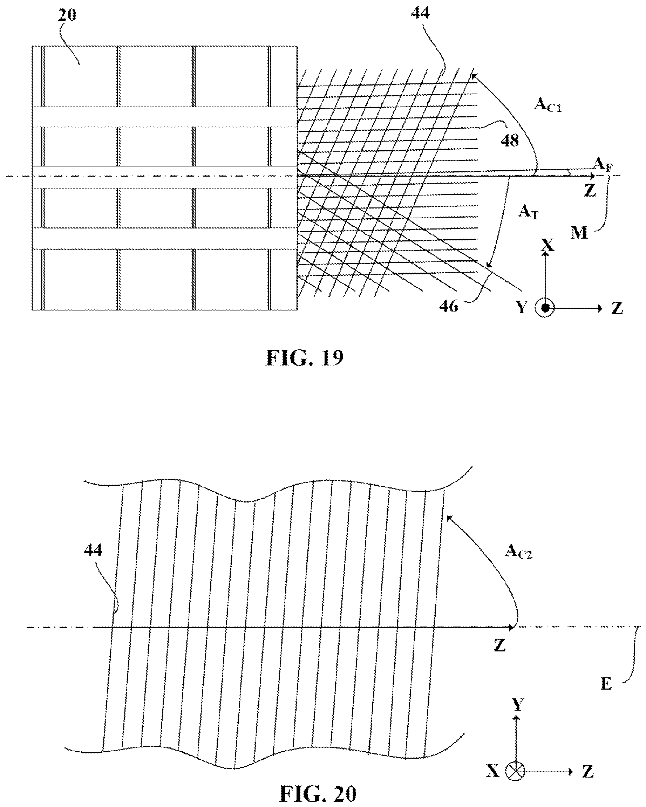

En référence à la figure 19, l'unique nappe de carcasse 34 comprend des éléments filaires de renfort de carcasse 44. Chaque élément filaire de renfort de carcasse 44 s'étend axialement d'un bourrelet 24 du pneumatique 10 à l'autre bourrelet 24 du pneumatique 10. Chaque élément filaire de renfort de carcasse 44 fait un angle $A_{C1}$ supérieur ou égal à 55°, de préférence allant de 55° à 80° et plus préférentiellement de 60° à 70°, avec la direction circonférentielle Z du pneumatique 10 dans le plan médian M du pneumatique 10', autrement dit dans le sommet 12. En référence à la figure 20 qui est une vue simplifiée où, compte tenu de l'échelle, tous les éléments filaires de renfort de carcasse 44 sont représentés parallèles les uns aux autres, chaque élément filaire de renfort de carcasse 44 fait un angle $A_{C2}$ supérieur ou égal à 85° avec la direction circonférentielle Z du pneumatique 10' dans le plan circonférentiel équatorial E du pneumatique 10', autrement dit dans chaque flanc 22.

Dans cet exemple, on prend comme convention qu'un angle orienté dans le sens anti-horaire à partir de la droite de référence, ici la direction circonférentielle Z, est de signe positif et qu'un angle orienté dans le sens horaire à partir de la droite de référence, ici la direction circonférentielle Z, est de signe négatif. En l'espèce, $A_{C1}$=+67° et $A_{C2}$=+90°.

En référence à la figure 19, l'unique nappe de travail 18 comprend plusieurs éléments filaires de renfort de travail 46. Les éléments filaires de renfort de travail 46 sont agencés côte à côte sensiblement parallèlement les uns aux autres. Chaque élément filaire de renfort de travail 46 s'étend axialement d'une extrémité axiale de l'armature de travail 15 du pneumatique 10 à l'autre extrémité axiale de l'armature de travail 15 du pneumatique 10. Chaque élément filaire de renfort de travail 46 fait un angle $A_T$ supérieur ou égal à 10°, de préférence allant de 30° à 50° et plus préférentiellement de 35° à 45° avec la direction circonférentielle Z du pneumatique 10' dans le plan médian M. Compte tenu de l'orientation définie précédemment, $A_T$=-40

L'unique nappe de frettage 19 comprend au moins un élément filaire de renfort de frettage 48. En l'espèce, la nappe de frettage 19 comprend un unique élément filaire de renfort de frettage 48 enroulé continûment sur une largeur axiale $L_F$ du sommet 12 du pneumatique 10' de sorte que la distance axiale entre deux enroulements adjacents soit égale à 1,3 mm. Avantageusement, la largeur axiale $L_F$ est inférieure à la largeur $L_T$ de la nappe de travail 18. L'élément filaire de renfort de frettage 48 fait un angle $A_F$ strictement inférieur à 10° avec la direction circonférentielle Z du pneumatique 10', de préférence inférieur ou égal à 7°, et plus préférentiellement inférieur ou égal à 5°. En l'espèce, $A_F$=+5°.

On notera que les éléments filaires de renfort de carcasse 44, de travail 46 et de frettage 48 sont agencés, dans le sommet 12, de façon à définir, en projection sur le plan circonférentiel équatorial E selon la direction radiale du pneumatique, un maillage triangulaire. Ici, l'angle $A_F$ et le fait que l'orientation de l'angle $A_T$ et l'orientation de l'angle $A_{C1}$ soient opposées par rapport à la direction circonférentielle Z du pneumatique 10', permettent d'obtenir ce maillage triangulaire.

Chaque élément filaire de renfort de carcasse 44 est un élément filaire textile et comprend classiquement deux brins multifilamentaires, chaque brin multifilamentaire étant constitué d'un filé de monofilaments de polyesters, ici de PET, ces deux brins multifilamentaires étant surtordus individuellement à 240 tours.m$^{-1}$ dans un sens puis retordus ensemble à 240 tours.m$^{-1}$ dans le sens opposé. Ces deux brins multifilamentaires sont enroulés en hélice l'un autour de l'autre. Chacun de ces brins multifilamentaires présente un titre égal à 220 tex.

Chaque élément filaire de renfort de travail 46 est un élément filaire métallique et est ici un assemblage de deux monofilaments en acier présentant chacun un diamètre égal à 0,30 mm, les deux monofilaments en acier étant enroulés l'un avec l'autre au pas de 14 mm.

L'élément filaire de renfort de frettage 48 est obtenu par noyage du câble 50 dans une matrice élastomérique à base de la composition élastomérique de la nappe de frettage 19.

On fabrique le pneumatique 10' en mettant en oeuvre un procédé similaire au procédé de fabrication du pneumatique 10. Afin de former le maillage triangulaire du pneumatique 10', on met en oeuvre un procédé d'assemblage spécifique tel que décrit dans EP1623819 ou bien dans FR1413102.

## ESSAIS COMPARATIFS

On a testé différents câbles A à W destinés au renforcement d'un pneumatique pour véhicules de tourisme parmi lesquels les câbles A à L sont préférentiellement destinés au renforcement de pneumatiques pour véhicules de tourisme, mais également pour des véhicules deux-roues et les câbles K à W sont préférentiellement destinés au renforcement de pneumatique pour véhicules industriels.

Parmi les câbles A à W, on distingue :

- le câble A non conformes à l'invention et obtenu en mettant en oeuvre un procédé classique d'assemblage par câblage de l'état de la technique,
- les câbles D à I et M non conformes à l'invention et obtenus en mettant en oeuvre le procédé de l'état de la technique décrit dans WO2016083265 et WO2016083267,
- les câbles J, K, N, T, U et V non conformes à l'invention et obtenus en mettant en oeuvre le procédé comprenant une étape de réassemblage décrit dans ci-dessus,

- les câbles B, C, L, O, P, Q, R, S et W conformes à l'invention et obtenus en mettant en oeuvre le procédé comprenant une étape de réassemblage décrit dans ci-dessus. Chaque câble C et W forme respectivement le câble 50, 50' décrit ci-dessus.

Pour chaque câble métallique, on a mesuré le diamètre Df de chaque élément filaire métallique exprimé en millimètres, le nombre N d'éléments filaires métalliques, le facteur de pas K égal au rapport du pas P sur Df, l'angle d'hélice $\alpha$ exprimé en degrés, le pas P de chaque élément filaire métallique exprimé en millimètres, le diamètre d'hélice Dh exprimé en millimètres, le diamètre de voûte Dv exprimé en millimètres, le rayon de courbure d'hélice Rf exprimé en millimètres, le rapport Rf/Df, le rapport Dv/Df, l'allongement structural As exprimé en %, le diamètre D du câble exprimé en millimètres, la masse linéique exprimée en gramme par mètre, le jeu radial relatif Jr et un indicateur de compressibilité $\varepsilon_c$ déterminé comme suit.

L'indicateur de compressibilité $\varepsilon_c$ est mesuré sur une éprouvette à section rectangulaire de section 12 mm x 8 mm et de hauteur égale à 20 mm. L'éprouvette comprend une matrice élastomérique présentant, à cuit, un module égale à 10 MPa (ici un module représentatif du module des compositions utilisés en pneumatique - dans d'autres domaines, d'autres modules pourraient être envisagés) et dans laquelle est noyée le câble métallique à tester de façon à ce que l'axe du câble soit confondu avec l'axe de symétrie de l'éprouvette. Deux plaques d'appui de section 20 mm x 20 mm sont collées sur chaque face de la section rectangulaire de l'éprouvette, chaque face ayant été soigneusement préalablement meulée. On relie alors chaque plaque d'appui à une machine de test à traverse mobile utilisable en traction ou en compression (machine de Zwick ou Instron par exemple). L'éprouvette (en appui sur l'une des plaques de 20 mm x 20 mm) est posée sur un support de diamètre de 30 mm présentant une face d'appui horizontale, support lui-même fixé sur une traverse inférieure de la machine de test. Sous la traverse mobile de la machine est placé un capteur d'effort portant un second support de diamètre égal à 30 mm dont la face d'appui, elle aussi horizontale, est positionnée en vis-à-vis de la première. La distance qui sépare les deux supports horizontaux est donc variable au gré du déplacement de la traverse mobile. Cette distance, prend pour première valeur, une valeur telle que l'éprouvette peut prendre place sans effort entre les deux supports de diamètre 30 mm, puis prend une seconde valeur pour exercer une pré-charge de 0,1N, puis va diminuer à une vitesse de 3 mm / mn jusqu'à la fin du test, stoppé après un écrasement de l'éprouvette de 10% de sa hauteur initiale. La courbe force-compression est obtenue à 20°C. A la valeur de l'effort de l'éprouvette est retranchée la contribution de l'effort de la matrice aux déformations correspondantes (à partir d'une courbe force-compression d'un même bloc en matrice seule). A la valeur de l'effort maximale, de cette nouvelle courbe, correspond la valeur de déformation maximale où le flambage a lieu, déformation critique au-delà de laquelle l'effort décroit quand l'éprouvette fléchie. L'indicateur de compressibilité $\varepsilon_c$ est égal à la valeur de cette déformation critique relevée.

Les résultats de toutes ces mesures sont rassemblés dans le tableau 1 ci-dessous. Concernant l'indicateur de compressibilité $\varepsilon_c$, on estime qu'une compressibilité longitudinale satisfaisante est obtenue pour des valeurs de $\varepsilon_c \geq 3,5$. La compressibilité longitudinale est d'autant plus favorisée que la valeur $\varepsilon_c$ est grande. La mention NT indique que le câble n'a pas été testé.

En comparant les câbles A, B et C, on note que le câble A présente un jeu radial relatif trop élevé en raison d'une masse linéique trop faible relativement à son diamètre. Le jeu radial relatif du câble C est supérieur à celui du câble B ce qui entraine un diamètre supérieur à celui du câble B pour des masses linéiques identiques. Les câbles B et C présentent une excellente compressibilité longitudinale.

En comparant les câbles D à L, on note que le câble L est celui qui présente le meilleur compromis entre masse linéique, diamètre externe et compressibilité longitudinale. En effet, même si les câbles D, E et F présente une compressibilité longitudinale supérieure à celle du câble L, les câbles D, E et F présentent des masses linéiques bien inférieures pour des diamètres externes du même ordre de grandeur à celui du câble L. Les câbles G, H, J et K présentent une compressibilité longitudinale inférieure à celle du câble L en raison d'un diamètre de voûte bien trop petit entrainant un rapprochement des éléments filaires de l'axe du câble et les rendant ainsi plus sensibles au flambage. Les câbles G et H bien que présentant une compressibilité longitudinale satisfaisante et un diamètre inférieur à celui du câble L, présente une masse linéique largement insuffisante pour procurer un renforcement suffisant. Les câbles J et K présentent des diamètres du même ordre de grandeur que celui du câble L mais des masses linéiques significativement inférieure à celle du câble L et donc un renforcement insuffisant. Quant au câble I, celui-ci présente une masse linéique inférieure à celle du câble L et un diamètre significativement supérieur.

En comparant les câbles M à W, on note que les câbles O à S et W sont ceux qui présentent le meilleur compromis entre masse linéique, diamètre externe et compressibilité longitudinale. Les câbles M, N, T et U présentent une masse linéique trop faible pour leur diamètre par rapport aux câbles O à S et W. Quant au câble V, celui-ci présente une compressibilité longitudinale insuffisante en raison d'un rayon de courbure d'hélice et d'un jeu radial relatif trop petits rendant le câble V trop sensible au flambage.

On notera que, en comparant les câbles P et Q et S, les câbles P et S présentent une compressibilité longitudinale supérieure à celle du câble Q en raison d'une part d'un diamètre de voûte supérieur et donc d'un jeu radial relatif également supérieur.

On notera que, en comparant les câbles R et S, le câble R présente une masse linéique significativement supérieure à celle du câble S, un diamètre identique et une compressibilité longitudinale à peine moindre.

**Tableau 1**

| | Df | N | K | $\alpha$ | P | Dh | Dv | Rf | Rf/Df | Dv/Df | As | D | Ml | Jr | $\varepsilon_c$ |
|---|---|---|---|---|---|---|---|---|---|---|---|---|---|---|---|
| **A** | 0,2 | 5 | 25 | 20,1 | 5 | 0,58 | 0,38 | 2,47 | 12,4 | 1,91 | 3,8 | 0,78 | 1,3 | 0,35 | <5 |
| **B** | 0,2 | 9 | 39 | 17,9 | 7,8 | 0,80 | 0,60 | 4,25 | 21,2 | 3,01 | 2 | 1 | 2,3 | 0,23 | 4,5 |
| **C** | 0,2 | 9 | 39 | 18,3 | 7,8 | 0,82 | 0,62 | 4,18 | 20,9 | 3,10 | 2,2 | 1,04 | 2,3 | 0,24 | 5 |
| **D** | 0,3 | 3 | 27 | 18,5 | 8,1 | 0,86 | 0,56 | 4,29 | 14,3 | 1,88 | 4,4 | 1,15 | 1,74 | 0,48 | >10 |
| **E** | 0,32 | 3 | 25 | 17,9 | 8 | 0,82 | 0,50 | 4,35 | 13,6 | 1,58 | 3,9 | 1,15 | 2 | 0,43 | 9 |
| **F** | 0,32 | 4 | 25 | 19,3 | 8 | 0,89 | 0,57 | 4,09 | 12,8 | 1,78 | 4,1 | 1,15 | 2,66 | 0,45 | 7 |
| **G** | 0,32 | 4 | 25 | 16,4 | 8 | 0,75 | 0,43 | 4,70 | 14,7 | 1,34 | 2,5 | 1,07 | 2,61 | 0,33 | 5,5 |
| **H** | 0,32 | 4 | 25 | 15,2 | 8 | 0,69 | 0,37 | 5,04 | 15,8 | 1,16 | 1,9 | 1,01 | 2,6 | 0,29 | 3,5 |
| **I** | 0,32 | 4 | 25 | 21,0 | 8 | 0,98 | 0,66 | 3,81 | 11,9 | 2,05 | 5,2 | 1,29 | 2,69 | 0,46 | NT |
| **J** | 0,32 | 5 | 25 | 18,0 | 8 | 0,83 | 0,51 | 4,33 | 13,5 | 1,59 | 2,6 | 1,15 | 3,34 | 0,29 | 6 |
| **K** | 0,32 | 6 | 25 | 17,9 | 8 | 0,82 | 0,50 | 4,36 | 13,6 | 1,57 | 1,6 | 1,15 | 4,01 | 0,17 | 5,2 |
| **L** | 0,32 | 6 | 25 | 19,0 | 8 | 0,88 | 0,56 | 4,14 | 12,9 | 1,74 | 2,2 | 1,2 | 4,04 | 0,22 | 7 |
| **M** | 0,38 | 5 | 25 | 19,9 | 9,5 | 1,09 | 0,71 | 4,73 | 12,4 | 1,88 | 3,7 | 1,47 | 4,71 | 0,35 | NT |
| **N** | 0,45 | 5 | 25 | 20,1 | 11,25 | 1,31 | 0,86 | 5,56 | 12,4 | 1,91 | 3,8 | 1,78 | 6,75 | 0,35 | 5 |
| **O** | 0,45 | 6 | 23 | 21,3 | 10,35 | 1,29 | 0,84 | 4,87 | 10,8 | 1,86 | 3 | 1,75 | 8,17 | 0,23 | 4,5 |
| **P** | 0,45 | 7 | 23 | 23,3 | 10,35 | 1,42 | 0,97 | 4,54 | 10,1 | 2,15 | 3 | 1,88 | 9,67 | 0,20 | 4,2 |
| **Q** | 0,45 | 7 | 23 | 21,7 | 10,35 | 1,31 | 0,86 | 4,81 | 10,7 | 1,91 | 1,9 | 1,77 | 9,55 | 0,14 | 3,5 |
| **R** | 0,45 | 8 | 23 | 25,5 | 10,35 | 1,57 | 1,12 | 4,25 | 9,4 | 2,49 | 3 | 2,03 | 11,23 | 0,16 | 4,7 |
| **S** | 0,45 | 7 | 23 | 25,4 | 10,35 | 1,56 | 1,11 | 4,26 | 9,5 | 2,47 | 4,5 | 2,03 | 9,83 | 0,25 | 5 |
| **T** | 0,45 | 6 | 23 | 25,5 | 10,35 | 1,57 | 1,12 | 4,25 | 9,4 | 2,49 | 6 | 2,03 | 8,42 | 0,35 | 5,3 |
| **U** | 0,45 | 5 | 23 | 25,8 | 10,35 | 1,59 | 1,14 | 4,21 | 9,4 | 2,53 | 7,5 | 2,03 | 7,02 | 0,44 | 5,7 |
| **V** | 0,45 | 8 | 18 | 29,7 | 8,1 | 1,47 | 1,02 | 3,00 | 6,7 | 2,26 | 1,9 | 1,88 | 11,7 | 0,08 | 3 |
| **W** | 0,35 | 8 | 30 | 19,7 | 10,5 | 1,20 | 0,85 | 5,27 | 15,0 | 2,42 | 2 | 1,55 | 6,37 | 0,18 | >4 |

**Revendications**

1. Câble (50, 50') comprenant une unique couche (52) constituée de N éléments filaires métalliques (54) enroulés en hélice et présentant un diamètre externe D, chaque élément filaire métallique (54) de la couche (52) décrivant, lorsque le câble (50, 50') s'étend selon une direction sensiblement rectiligne, une trajectoire en forme d'hélice autour d'un axe principal (A) sensiblement parallèle à la direction sensiblement rectiligne, de sorte que, dans un plan de coupe sensiblement perpendiculaire à l'axe principal (A), la distance entre le centre de chaque élément filaire métallique (54) de la couche (52) et l'axe principal (A) est égale à la moitié du diamètre d'hélice Dh et est sensiblement constante et égale pour tous les éléments filaires métalliques (54) de la couche (52), les éléments filaires métalliques (54) définissant une voûte interne (58) du câble de diamètre Dv, chaque élément filaire métallique (54) présentant un diamètre Df et un rayon de courbure d'hélice Rf défini par Rf=P/($\pi$ x Sin(2$\alpha$)) avec P le pas de chaque élément filaire métallique exprimé en millimètres et $\alpha$ l'angle d'hélice de chaque élément filaire métallique (54), **caractérisé en ce que**, Dh, D, Dv, Df et Rf étant exprimés en millimètres :

$$0{,}10 \leq Jr \leq 0{,}25$$

$$9 \leq Rf / Df \leq 30,$$

et

$$1{,}60 \leq Dv / Df \leq 3{,}20$$

avec $Jr = N/(\pi*(D-Df)) \times (Dh \times Sin(\pi/N) - (Df / Cos(\alpha \times \pi/180)))$, $\alpha$ étant l'angle d'hélice, exprimé en degrés, de chaque élément filaire métallique (54) et $Dv = Dh - Df$.

2. Câble (50, 50') selon la revendication précédente, dans lequel $0{,}14 \leq Jr \leq 0{,}25$.

3. Câble (50, 50') selon l'une quelconque des revendications précédentes, dans lequel $9 \leq Rf / Df \leq 25$, de préférence $9 \leq Rf / Df \leq 22$.

4. Câble (50, 50') selon l'une quelconque des revendications précédentes, dans lequel $1{,}70 \leq Dv / Df \leq 3{,}20$, de préférence $1{,}70 \leq Dv / Df \leq 3{,}05$.

5. Câble (50, 50') selon l'une quelconque des revendications précédentes, dans lequel le rayon de courbure d'hélice Rf est tel que $4{,}10 \, mm \leq Rf \leq 5{,}30 \, mm$.

6. Câble (50, 50') selon l'une quelconque des revendications précédentes, dans lequel le diamètre d'hélice Dh de chaque élément filaire métallique (54) est tel que $0{,}70 \, mm \leq Dh \leq 1{,}60 \, mm$, de préférence $0{,}75 \, mm \leq Dh \leq 1{,}60 \, mm$ et plus préférentiellement $0{,}80 \, mm \leq Dh \leq 1{,}60 \, mm$.

7. Câble (50, 50') selon l'une quelconque des revendications précédentes, dans lequel Df est tel que $0{,}10 \, mm \leq Df \leq 0{,}50 \, mm$, de préférence $0{,}15 \, mm \leq Df \leq 0{,}50 \, mm$ et plus préférentiellement $0{,}15 \, mm \leq Df \leq 0{,}45 \, mm$.

8. Câble (50, 50') selon l'une quelconque des revendications précédentes, dans lequel Dv est tel que $Dv \geq 0{,}50 \, mm$, de préférence $0{,}50 \, mm \leq Dv \leq 1{,}20 \, mm$.

9. Câble (50, 50') selon l'une quelconque des revendications précédentes, dans lequel chaque élément filaire métallique (54) est enroulé à un pas P tel que $3 \, mm \leq P \leq 15 \, mm$, de préférence $5 \, mm \leq P \leq 13 \, mm$ et plus préférentiellement $7 \, mm \leq P \leq 11 \, mm$.

10. Câble (50, 50') selon l'une quelconque des revendications précédentes, dans lequel $D \leq 2{,}10 \, mm$, de préférence $0{,}90 \, mm \leq D \leq 2{,}10 \, mm$ et plus préférentiellement $0{,}95 \, mm \leq D \leq 2{,}05 \, mm$.

11. Câble (50, 50') selon l'une quelconque des revendications précédentes, dans lequel le rapport K du pas P sur le diamètre Df de chaque élément filaire métallique (54), P et Df étant exprimés en millimètres, est tel que $19 \leq K \leq 44$, de préférence $20 \leq K \leq 40$ et plus préférentiellement $23 \leq K \leq 39$.

12. Câble (50, 50') selon l'une quelconque des revendications précédentes, dans lequel l'angle d'hélice $\alpha$ est tel que $13° \leq \alpha \leq 30°$, de préférence $17° \leq \alpha \leq 26°$.

13. Câble (50, 50') selon l'une quelconque des revendications précédentes, présentant un allongement structural As tel que $As \geq 1{,}5\%$, de préférence tel que $1{,}5\% \leq As \leq 5{,}0\%$ et plus préférentiellement tel que $1{,}9\% \leq As \leq 4{,}5\%$, l'allongement structural As étant déterminé en appliquant la norme ASTM D2969-04 de 2014 au câble (50, 50') de façon à obtenir une courbe force-allongement, l'allongement structural As étant égal à l'allongement, en %, correspondant à la projection sur l'axe des allongement de l'intersection entre la tangente à la partie structurale de la courbe force-allongement et la tangente à la partie élastique de la courbe force-allongement.

14. Câble (50, 50') selon l'une quelconque des revendications précédentes, présentant, une fois noyé dans une matrice élastomérique standard réticulée présentant un module en extension à 10% d'allongement compris allant de 5 MPa à 10 MPa, un module élastique en extension supérieur ou égal à 100 GPa, de préférence allant de 100 GPa à 180 GPa, plus préférentiellement de 110 GPa à 180 GPa et encore plus préférentiellement de 120 GPa à 180 GPa, le module élastique en extension à 10 % d'allongement étant déterminé selon la norme ASTM D2969-04 de 2014.

15. Pneumatique (10, 10') comprenant un câble (50, 50') selon l'une quelconque des revendications précédentes noyé dans une matrice élastomérique.

**Patentansprüche**

1. Seil (50, 50'), umfassend eine einzelne Schicht (52), die aus N schraubenförmig gewickelten Metalldrahtelementen (54) gebildet ist und einen Außendurchmesser D aufweist, wobei, wenn sich das Seil (50, 50') in einer im Wesentlichen geradlinigen Richtung erstreckt, jedes Metalldrahtelement (54) der Schicht (52) eine schraubenförmige Bahn um eine Hauptachse (A), die zu der im Wesentlichen geradlinigen Richtung im Wesentlichen parallel ist, beschreibt, so dass in einer zur Hauptachse (A) im Wesentlichen senkrechten Schnittebene der Abstand zwischen der Mitte jedes Metalldrahtelements (54) der Schicht (52) und der Hauptachse (A) gleich der Hälfte des Schraubendurchmessers Dh ist und im Wesentlichen konstant und für alle Metalldrahtelemente (54) der Schicht (52) gleich ist, wobei die Metalldrahtelemente (54) ein inneres Gewölbe (58) des Seils mit einem Durchmesser Dv definieren, wobei jedes Metalldrahtelement (54) einen Durchmesser Df und einen Schraubenkrümmungsradius Rf aufweist, der durch Rf = P / ($\pi$ x Sin(2$\alpha$)) definiert ist, wobei P die in Millimetern ausgedrückte Steigung jedes Metalldrahtelements ist und $\alpha$ der Steigungswinkel jedes Metalldrahtelements (54) ist, **dadurch gekennzeichnet, dass**:

$$0,10 \leq Jr \leq 0,25$$

$$9 \leq Rf / Df \leq 30$$

und

$$1,60 \leq Dv / Df \leq 3,20,$$

wobei Jr = N / ($\pi$ * (D - Df)) x (Dh x Sin($\pi$ / N) - (Df / Cos($\alpha$ x $\pi$ / 180))), wobei $\alpha$ der in Grad ausgedrückte Steigungswinkel jedes Metalldrahtelements (54) ist und Dv = Dh - Df, wobei Dh, D, Dv, Df und Rf in Millimetern ausgedrückt sind.

2. Seil (50, 50') nach dem vorangehenden Anspruch, wobei 0,14 $\leq$ Jr $\leq$ 0,25.

3. Seil (50, 50') nach einem der vorangehenden Ansprüche, wobei 9 $\leq$ Rf / Df $\leq$ 25, vorzugsweise 9 $\leq$ Rf / Df $\leq$ 22.

4. Seil (50, 50') nach einem der vorangehenden Ansprüche, wobei 1,70 $\leq$ Dv / Df $\leq$ 3,20, vorzugsweise 1,70 $\leq$ Dv / Df $\leq$ 3, 05.

5. Seil (50, 50') nach einem der vorangehenden Ansprüche, wobei der Schraubenkrümmungsradius Rf so ist, dass 4,10 mm $\leq$ Rf $\leq$ 5,30 mm.

6. Seil (50, 50') nach einem der vorangehenden Ansprüche, wobei der Schraubendurchmesser Dh jedes Metalldrahtelements (54) so ist, dass 0,70 mm $\leq$ Dh $\leq$ 1,60 mm, vorzugsweise 0,75 mm $\leq$ Dh $\leq$ 1,60 mm und besonders vorzugsweise 0,80 mm $\leq$ Dh $\leq$ 1,60 mm.

7. Seil (50, 50') nach einem der vorangehenden Ansprüche, wobei Df so ist, dass 0,10 mm $\leq$ Df $\leq$ 0,50 mm, vorzugsweise 0,15 mm $\leq$ Df $\leq$ 0,50 mm und besonders vorzugsweise 0,15 mm $\leq$ Df $\leq$ 0,45 mm.

8. Seil (50, 50') nach einem der vorangehenden Ansprüche, wobei Dv so ist, dass Dv $\geq$ 0,50 mm, vorzugsweise 0,50 mm $\leq$ Dv $\leq$ 1,20 mm.

9. Seil (50, 50') nach einem der vorangehenden Ansprüche, wobei jedes Metalldrahtelement (54) mit einer Steigung P gewickelt ist, die so ist, dass 3 mm ≤ P ≤ 15 mm, vorzugsweise 5 mm ≤ P ≤ 13 mm und besonders vorzugsweise 7 mm ≤ P ≤ 11 mm.

10. Seil (50, 50') nach einem der vorangehenden Ansprüche, wobei D ≤ 2,10 mm, vorzugsweise 0,90 mm ≤ D ≤ 2,10 mm und besonders vorzugsweise 0,95 mm ≤ D ≤ 2,05 mm.

11. Seil (50, 50') nach einem der vorangehenden Ansprüche, wobei das Verhältnis K der Steigung P zum Durchmesser Df jedes Metalldrahtelements (54) so ist, dass 19 ≤ K ≤ 44, vorzugsweise 20 ≤ K ≤ 40 und besonders vorzugsweise 23 ≤ K ≤ 39, wobei P und Df in Millimetern ausgedrückt sind.

12. Seil (50, 50') nach einem der vorangehenden Ansprüche, wobei der Steigungswinkel $\alpha$ so ist, dass 13° ≤ $\alpha$ ≤ 30°, vorzugsweise 17° ≤ $\alpha$ ≤ 26°.

13. Seil (50, 50') nach einem der vorangehenden Ansprüche, mit einer strukturellen Dehnung As, die so ist, dass As ≥ 1,5 %, vorzugsweise so, dass 1,5 % ≤ As ≤ 5,0%, und besonders vorzugsweise so, dass 1,9 % ≤ As ≤ 4,5 %, wobei die strukturelle Dehnung As durch Anwendung der Norm ASTM D2969-04 von 2014 auf das Seil (50, 50') bestimmt wird, um eine Kraft-Dehnungs-Kurve zu erhalten, wobei die strukturelle Dehnung As gleich der Dehnung in % ist, die der Projektion des Schnittpunkts zwischen der Tangente an den strukturellen Teil des Kraft-Dehnungs-Kurve und der Tangente an den elastischen Teil der Kraft-Dehnungs-Kurve auf die Dehnungsachse entspricht.

14. Seil (50, 50') nach einem der vorangehenden Ansprüche, das nach dem Einbetten in eine vernetzte Standardelastomermatrix mit einem Dehnungsmodul bei 10 % Dehnung im Bereich von 5 MPa bis 10 Mpa einen Dehnungselastizitätsmodul von 100 Gpa oder mehr, vorzugsweise von 100 GPa bis 180 GPa, besonders vorzugsweise von 110 GPa bis 180 Gpa und ganz besonders vorzugsweise von 120 GPa bis 180 GPa aufweist, wobei der Dehnungselastizitätsmodul bei 10 % Dehnung nach der Norm ASTM D2969-04 von 2014 bestimmt wird.

15. Reifen (10, 10'), umfassend ein Seil (50, 50') nach einem der vorangehenden Ansprüche, das in eine Elastomermatrix eingebettet ist.

**Claims**

1. Cord (50, 50') comprising a single layer (52) made up of N helically wound metal filamentary elements (54) having an outer diameter D, each metal filamentary element (54) of the layer (52) describing, when the cord (50, 50') extends in a substantially rectilinear direction, a helical path about a main axis (A) substantially parallel to the substantially rectilinear direction, such that, in a section plane substantially perpendicular to the main axis (A), the distance between the centre of each metal filamentary element (54) of the layer (52) and the main axis (A) is equal to half the helix diameter Dh and is substantially constant and identical for all the metal filamentary elements (54) of the layer (52), the metal filamentary elements (54) defining an internal enclosure (58) of the cord of diameter Dv, each metal filamentary element (54) having a diameter Df and a helix radius of curvature Rf defined by Rf=P/($\pi$ x Sin(2a)), where P is the pitch of each metal filamentary element expressed in millimetres and $\alpha$ is the helix angle of each metal filamentary element (54), **characterized in that**, with Dh, D, Dv, Df and Rf being expressed in millimetres:

$$0.10 \leq Jr \leq 0.25$$

$$9 \leq Rf / Df \leq 30,$$

and

$$1.60 \leq Dv / Df \leq 3,20.$$

where Jr=N/($\pi$*(D-Df)) x (Dh x Sin($\pi$/N) - (Df / Cos($\alpha$ x $\pi$/180))), a is the helix angle, expressed in degrees, of each metal filamentary element (54) and Dv=Dh-Df.

2. Cord (50, 50') according to the preceding claim, wherein 0.14 ≤ Jr ≤ 0.25.

3. Cord (50, 50') according to either one of the preceding claims, wherein $9 \leq Rf / Df \leq 25$, preferably $9 \leq Rf/ Df \leq 22$.

4. Cord (50, 50') according to any one of the preceding claims, wherein $1.70 \leq Dv / Df \leq 3.20$, preferably $1.70 \leq Dv / Df \leq 3.05$.

5. Cord (50, 50') according to any one of the preceding claims, wherein the helix radius of curvature Rf is such that $4.10 \text{ mm} \leq Rf \leq 5.30 \text{ mm}$.

6. Cord (50, 50') according to any one of the preceding claims, wherein the helix diameter Dh of each metal filamentary element (54) is such that $0.70 \text{ mm} \leq Dh \leq 1.60 \text{ mm}$, preferably $0.75 \text{ mm} \leq Dh \leq 1.60 \text{ mm}$ and more preferably $0.80 \text{ mm} \leq Dh \leq 1.60 \text{ mm}$.

7. Cord (50, 50') according to any one of the preceding claims, wherein Df is such that $0.10 \text{ mm} \leq Df \leq 0.50 \text{ mm}$, preferably $0.15 \text{ mm} \leq Df \leq 0.50 \text{ mm}$ and more preferably $0.15 \text{ mm} \leq Df \leq 0.45 \text{ mm}$.

8. Cord (50, 50') according to any one of the preceding claims, wherein Dv is such that $Dv \geq 0.50 \text{ mm}$, preferably $0.50 \text{ mm} \leq Dv \leq 1.20 \text{ mm}$.

9. Cord (50, 50') according to any one of the preceding claims, wherein each metal filamentary element (54) is wound at a pitch P such that $3 \text{ mm} \leq P \leq 15 \text{ mm}$, preferably $5 \text{ mm} \leq P \leq 13 \text{ mm}$, more preferably $7 \text{ mm} \leq P \leq 11 \text{ mm}$.

10. Cord (50, 50') according to any one of the preceding claims, in which $D \leq 2.10 \text{ mm}$, preferably $0.90 \text{ mm} \leq D \leq 2.10 \text{ mm}$ and more preferably $0.95 \text{ mm} \leq D \leq 2.05 \text{ mm}$.

11. Cord (50, 50') according to any one of the preceding claims, wherein the ratio K of the pitch P to the diameter Df of each metal filamentary element (54), P and Df being expressed in millimetres, is such that $19 \leq K \leq 44$, preferably $20 \leq K \leq 40$ and more preferably $23 \leq K \leq 39$.

12. Cord (50, 50') according to any one of the preceding claims, wherein the helix angle $\alpha$ is such that $13° \leq \alpha \leq 30°$, preferably $17° \leq \alpha \leq 26°$.

13. Cord (50, 50') according to any one of the preceding claims, having a structural elongation As such that $As \geq 1.5\%$, preferably $1.5\% \leq As \leq 5.0\%$, more preferably $1.9\% \leq As \leq 4.5\%$, the structural elongation As being determined by applying the standard ASTM D2969-04 of 2014 to the cord (50, 50') so as to obtain a force-elongation curve, the structural elongation As being equal to the elongation, in %, corresponding to the projection onto the elongation axis of the intersection between the tangent to the structural portion of the force-elongation curve and the tangent to the elastic portion of the force-elongation curve.

14. Cord (50, 50') according to any one of the preceding claims, having, once embedded in a crosslinked standard elastomeric matrix having a modulus in extension at 10% elongation ranging from 5 MPa to 10 MPa, a modulus of elasticity in extension greater than or equal to 100 GPa, preferably ranging from 100 GPa to 180 GPa, more preferably from 110 GPa to 180 GPa and even more preferably from 120 GPa to 180 GPa, the modulus of elasticity in extension at 10% elongation being determined according to the standard ASTM D2969-04 of 2014.

15. Tyre (10, 10') comprising a cord (50, 50') according to any one of the preceding claims, embedded in an elastomeric matrix.

FIG. 1

FIG. 2

FIG. 3

FIG. 4

**FIG. 5**

**FIG. 6**

FIG. 7

FIG. 8

54

130

52

160

220

**FIG. 9**

260

54

250

**FIG. 10**

54

160

330'

330

**FIG. 11**

270

54

280

**FIG. 12**

FIG. 13

FIG. 14

FIG. 15

**FIG. 16**

**FIG. 17**

**FIG. 18**

**FIG. 19**

**FIG. 20**

**RÉFÉRENCES CITÉES DANS LA DESCRIPTION**

**Documents brevets cités dans la description**

- WO 2016166056 A
- US 2007006957 A
- EP 1623819 A
- FR 1413102
- WO 2016083265 A
- WO 2016083267 A